# EUROPEAN PATENT SPECIFICATION

(11) **EP 4 502 640 B1**
(45) Date of publication and mention of the grant of the patent: **19.08.2026**
(21) Application number: 24218537.9
(22) Date of filing: 06.02.2023
(51) Int. Cl.: H04W 64/00, G01S 1/04, G01S 5/00, H04W 72/02, G01S 5/02

(54) **METHODS, ARCHITECTURES, APPARATUSES AND SYSTEMS FOR NEW RADIO (NR) UU PHASE-BASED POSITIONING**
VERFAHREN, ARCHITEKTUREN, VORRICHTUNGEN UND SYSTEME ZUR UU-PHASENBASIERTEN POSITIONIERUNG IN NEW RADIO (NR)
PROCÉDÉS, ARCHITECTURES, APPAREILS ET SYSTÈMES DE POSITIONNEMENT BASÉ SUR LA PHASE UU DE NOUVELLE RADIO (NR)

(30) Priority: 09.02.2022 US 202263308331 P; 27.04.2022 US 202263335639 P; 05.08.2022 US 202263395462 P; 28.09.2022 US 202263410875 P; 02.11.2022 US 202263421678 P
(43) Date of publication of application: 05.02.2025
(62) Document number(s) of the earlier application(s) in accordance with Art. 76 EPC: 23709514.6 / 4 461 043
(73) Proprietor: InterDigital Patent Holdings, Inc., Wilmington, DE 19809 (US)
(72) Inventor: HOANG, Tuong, MONTREAL, H2K 3C3 (CA); HASEGAWA, Fumihiro, WESTMOUNT, H3Z 2K5 (CA); LEE, Moon IL, MELVILLE, 11747 (US); MARINIER, Paul, BROSSARD, J4X 2J7 (CA); RAO, Jaya, MONTREAL, H3A 0H4 (CA); SHAH, Kunjan, LONDON, NW9 0AZ (GB); EL HAMSS, Aata, LAVAL, H7G2L9 (CA)
(74) Representative: Interdigital

(56) References cited:
- WO-A1-2020/222614
- WO-A1-2021/040501
- WO-A1-2021/227741
- CN-A- 111 279 208

## Description

### CROSS-REFERENCE TO RELATED APPLICATIONS

This application claims the benefit of U.S. Patent Application Nos. 63/308,331, filed February 09, 2022, 63/335,639, filed April 27, 2022, 63/395,462, filed August 05, 2022, 63/410, 875, filed September 28, 2022, and 63/421,678, filed November 02, 2022.

### TECHNICAL FIELD

This disclosure pertains to procedures, methods, architectures, apparatus, systems, devices, and computer program products for, and/or directed to NR Uu phase-based positioning.

### BACKGROUND

In a carrier phase-based positioning method, a wireless transmit/receive unit (WTRU) may measure the phase of arrival (PoA) of one reference signal, or a difference phase of arrival (DPoA) from two signals (e.g., a target signal and a reference signal). Embodiments described herein have been designed with the foregoing in mind. Prior art technology is known from documents WO2021/227741, CN111279208, WO2020/222614, and WO2021/040501.

### BRIEF SUMMARY

Methods, architectures, apparatuses, and systems directed to NR Uu phase-based positioning are described herein. In an embodiment, a method may be implemented in a WTRU. The method may include receiving configuration information indicating (i) a set of resources for phase measurements and (ii) a line-of-sight (LOS) condition for reporting the phase measurements. The method may further include obtaining LOS values associated with the set of resources for phase measurements, determining, based on the LOS values, one or more resources from the set of resources for which the LOS condition may be satisfied, and transmitting reporting information indicating one or more phase measurements associated with the one or more resources for which the LOS condition is satisfied. In an embodiment, a WTRU including any of a transmitter, a receiver, a processor, and a memory, may be configured to carry out the method described herein.

### BRIEF DESCRIPTION OF THE DRAWINGS

A more detailed understanding may be had from the detailed description below, given by way of example in conjunction with the drawings appended hereto. Figures in such drawings, like the detailed description, are exemplary. As such, the Figures and the detailed description are not to be considered limiting, and other equally effective examples are possible and likely. Furthermore, like reference numerals ("ref.") in the Figures ("FIGs.") indicate like elements, and wherein:
FIG. 1A is a system diagram illustrating an example communications system;
FIG. 1B is a system diagram illustrating an example wireless transmit/receive unit (WTRU) that may be used within the communications system illustrated in FIG. 1A;
FIG. 1C is a system diagram illustrating an example radio access network (RAN) and an example core network (CN) that may be used within the communications system illustrated in FIG. 1A;
FIG. 1D is a system diagram illustrating a further example RAN and a further example CN that may be used within the communications system illustrated in FIG. 1A;
FIG. 2 is a block diagram illustrating an example of a WTRU performing DPoA or PoA measurement;
FIG. 3 is a diagram illustrating an example of a Kth subcarrier for carrier phase measurement;
FIG. 4 is a diagram illustrating an example of a range of resources for phase measurement;
FIG. 5 is a diagram illustrating an example of a downlink positioning reference signal (DL-PRS) configuration for measurement reporting including pairs of phase measurement;
FIG. 6 is a diagram illustrating an example of PRS configuration for pairs of ranges of phase-resources for carrier phase measurement;
FIG. 7 is a diagram illustrating examples of comb offset;
FIG. 8 is a diagram illustrating an example of a PRS configuration with PRS and PRS for phase measurements;
FIG. 9 is a diagram illustrating an example of another PRS configuration with PRS and PRS for phase measurements;
FIG. 10 is a diagram illustrating an example of PRS for phase measurements in different subcarriers in one PRS resource;
FIG. 11 is a diagram illustrating an example of PRS for phase measurements on different subcarriers in a different slot;
FIG. 12 is a system diagram depicting an example of two PRSs from two Tx antennas;
FIG. 13 is a block diagram illustrating an example hierarchical relationship of PRS parameters;
FIG. 14 is a diagram illustrating an example of measurement gap configurations;
FIG. 15 is a diagram illustrating an example of determination of phase measurement resources in multiple DL-PRS resources;
FIG. 16 is a system diagram illustrating an example of phase measurement reporting procedure;
FIG. 17 is a flow diagram illustrating an example of phase measurement reporting procedure;
FIG. 18 is a system diagram illustrating an example of two-sided phase difference measurements, one transmission, and two reception antennas;
FIG. 19 is a system diagram illustrating an example of two transmission antennas and one receive antenna;
FIG. 20 is a system diagram depicting an example of two-sided phase difference measurements, two transmission, and one reception antennas with PTRSp transmitted from the WTRU;
FIG. 21 is a system diagram depicting an example of two-sided phase difference measurements, one transmission, and two reception antennas with PTRSp transmitted from the WTRU;
FIG. 22 is a flow diagram depicting an example of two-sided phase difference measurements;
FIG. 23 is a flow diagram depicting an example of a signal flow for two-sided phase based positioning;
FIG. 24 is a flow diagram depicting another example of a signal flow for two-sided phase based positioning;
FIG. 25 is a diagram illustrating an example of method for phase measurement and reporting;
FIG. 26 is a diagram illustrating another example of method for phase measurement and reporting; and
FIG. 27 is a diagram illustrating an example of method for phase error group reporting.

### DETAILED DESCRIPTION

The present invention defines a WTRU according to claim 1 and a corresponding method implemented in a WTRU according to claim 2. Preferred embodiments are defined in the dependent claims. In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components, and circuits have not been described in detail, so as not to obscure the following description. Further, embodiments and examples not specifically described herein may be practiced in lieu of, or in combination with, the embodiments and other examples described, disclosed, or otherwise provided explicitly, implicitly and/or inherently (collectively "provided") herein.

### EXAMPLE COMMUNICATION SYSTEMS

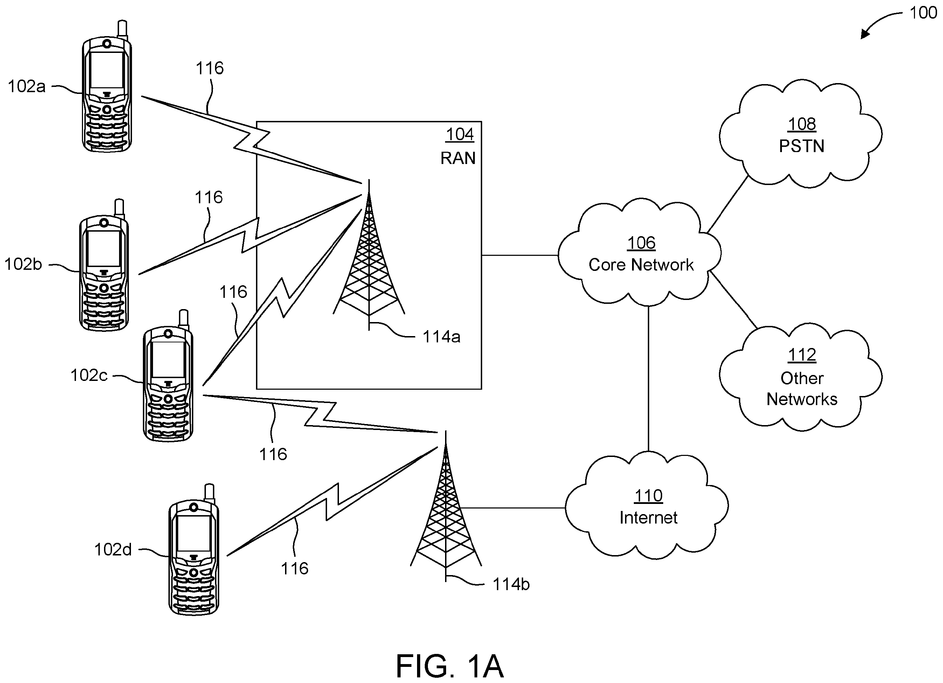

FIG. 1A is a diagram illustrating an example communications system 100. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

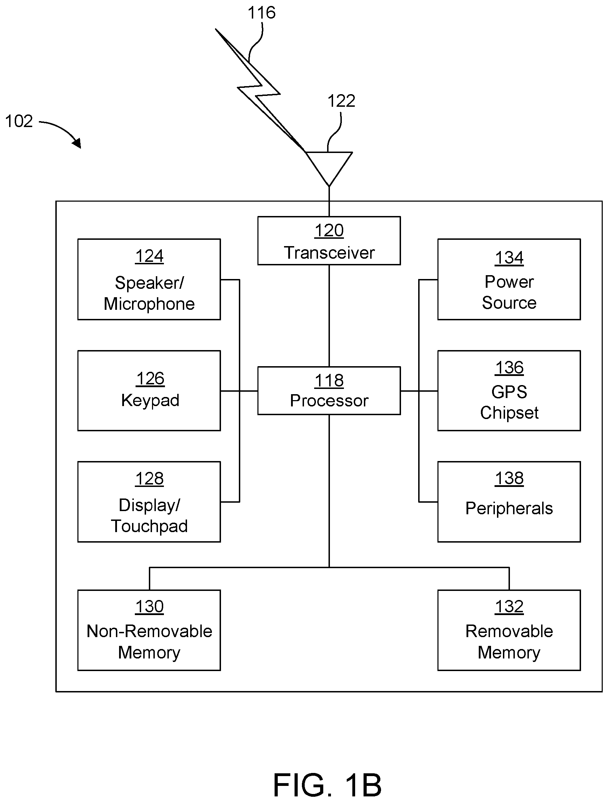

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134 and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the uplink (e.g., for transmission) and downlink (e.g., for reception) may be concurrent and/or simultaneous. The full duplex radio may include an interference management unit 139 to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the uplink (e.g., for transmission) or the downlink (e.g., for reception)).

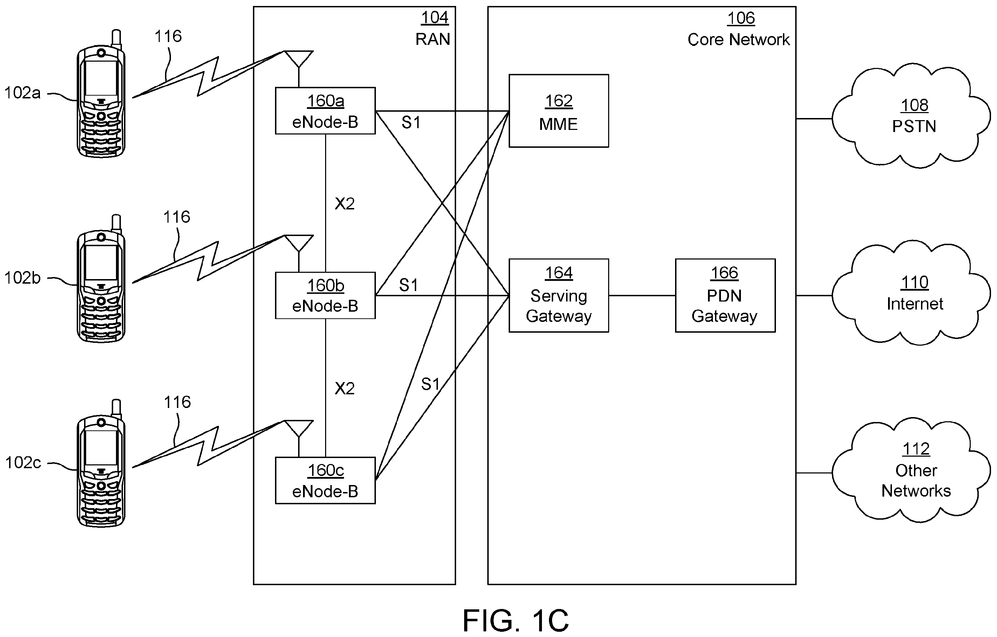

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the uplink (UL) and/or downlink (DL), and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 160a, 160b, 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example, in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

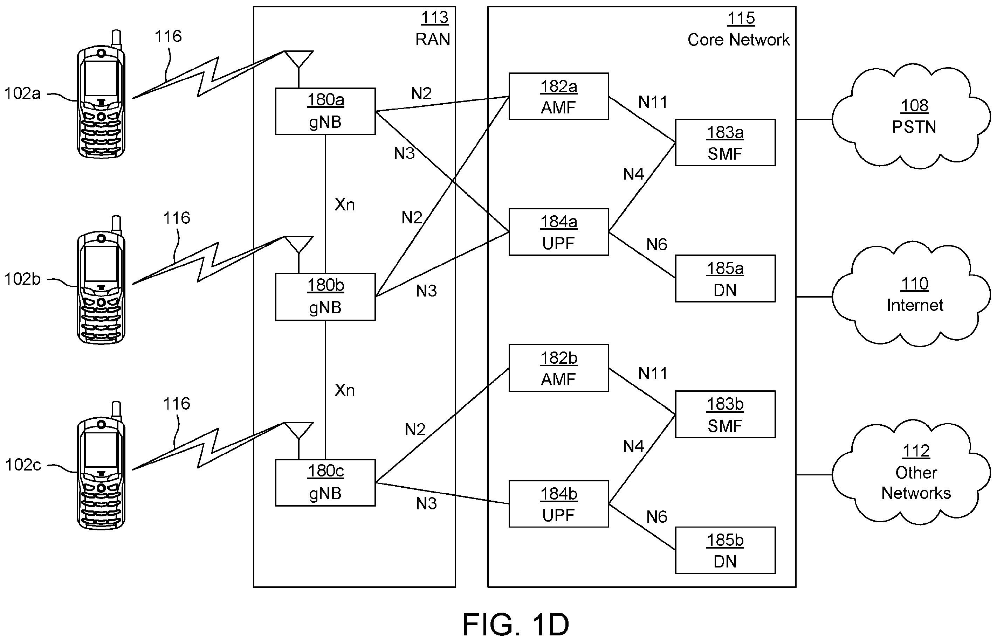

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 180b may utilize beamforming to transmit signals to and/or receive signals from the WTRUs 102a, 102b, 102c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the uplink (UL) and/or downlink (DL), support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized by WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 182a, 182b may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethemet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184a, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figs. 1A-1D, and the corresponding description of Figs. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

Throughout embodiments described herein the terms "serving base station", "base station", "gNB", collectively "the network" may be used interchangeably to designate any network element such as e.g., a network element acting as a serving base station. Embodiments described herein are not limited to gNBs and are applicable to any other type of base stations.

For the sake of clarity, satisfying, failing to satisfy a condition and configuring condition parameter(s) are described throughout embodiments described herein as relative to a threshold (e.g., greater or lower than) a (e.g., threshold) value, configuring the (e.g., threshold) value, etc.). For example, satisfying a condition may be described as being above a (e.g., threshold) value, and failing to satisfy a condition (e.g., performance criteria) may be described as being below a (e.g., threshold) value. Embodiments described herein are not limited to threshold-based conditions. Any kind of other condition and parameter(s) (such as e.g., belonging or not belonging to a range of values) may be applicable to embodiments described herein.

Throughout embodiments described herein, (e.g., configuration) information may be described as received by a WTRU from the network, for example, through system information or via any kind of protocol message. Although not explicitly mentioned throughout embodiments described herein, the same (e.g., configuration) information may be preconfigured in the WTRU (e.g., via any kind of pre-configuration methods such as e.g., via factory settings), such that this (e.g., configuration) information may be used by the WTRU without being received from the network.

### EXAMPLES OF METHODS AND APPARATUS FOR NR Uu PHASE-BASED POSITIONING

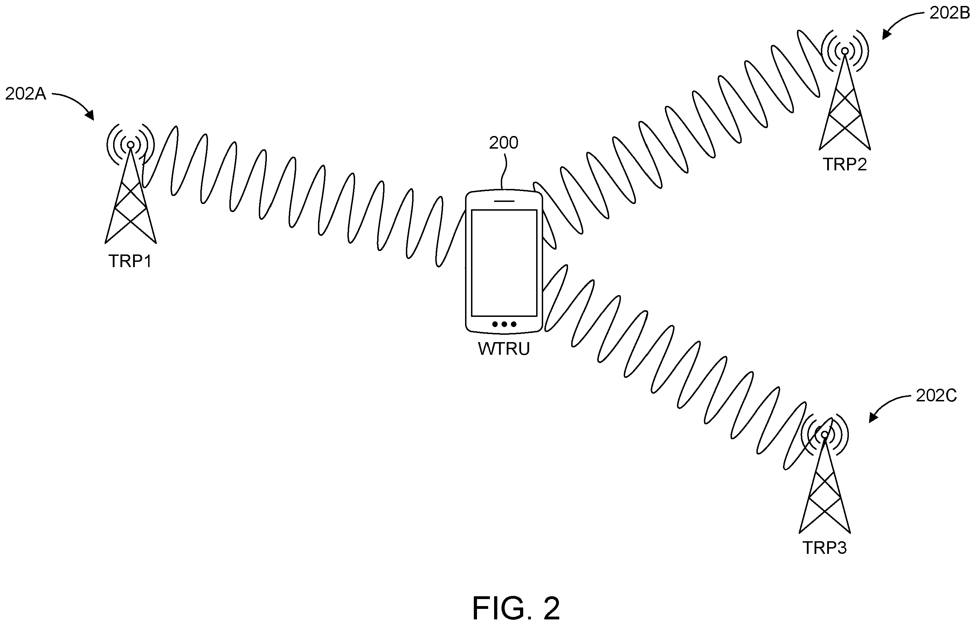

FIG. 2 is a block diagram illustrating an example of a WTRU performing DPoA or PoA measurement. In a carrier phase-based positioning method, the WTRU 200 may measure the phase of arrival (PoA) of one reference signal, or a difference phase of arrival (DPoA) from two signals (e.g., a target signal and a reference signal). A carrier phase method may allow to improve the accuracy of the positioning method. For example, a minor (e.g., small) change in the position of the WTRU 200 may be observed in the change in the reception phase of the WTRU 200 in a case where the WTRU 200 receives the same phase reference signal from a static network element 202A, 202B, 202C. For example, such a change may be useful if the number of cycles may be (e.g., accurately) calculated.

Phase information may be useful in a case where phase measurements are satisfying one or more (e.g., measurement) conditions (such as e.g., any of a line of sight (LOS), high reference signal receive power (RSRP)) and, for example, the ambiguity in the number of cycles may be (e.g., accurately) determined. Including unreliable phase measurements may be a waste of any of reporting, reference transmission, and measurement resources. Transmitting a phase reference signal in an unreliable environment may result in wastage of resources and may not allow to improve the positioning of the WTRU. Embodiments described herein may allow a WTRU to improve performing carrier phase-based positioning, performing phase measurement, and reporting phase measurement.

### OVERVIEW

In example embodiments described herein, positioning reference signal (PRS) is used as an example. Throughout embodiments described herein, the term "PRS" may be interchangeably used with "uplink reference signal for positioning (UL-PRS)" and "downlink reference signal for positioning (DL-PRS)" and may designate any type of reference signal that may be used for positioning.

In example embodiments described herein, for phase measurement, the terms "phase-resource" "resource", "resource element (RE)", "tone", "PRS resource", "RS (e.g., CSI-RS) resource", and "subcarrier" may be used interchangeably to designate any resource that may be used for phase measurement.

For example, a phase-resource may be used as a resource for phase-related measurement (such as e.g., any of phase of arrival (PoA), difference phase of arrival (DPoA), phase of departure (PoD), difference phase of departure (DPoD).

In example embodiments described herein, the expression "the WTRU may be configured with something" may be equivalent or may be used interchangeably with "the WTRU may receive configuration information from another network element (e.g., gNB) indicating something".

In example embodiments described herein, the expressions "the WTRU may report something", "the WTRU may determine to report something", and "the WTRU may be configured to report something", may be equivalent or may be used interchangeably with "the WTRU may transmit reporting information indicating something".

In example embodiments described herein, the terms "phase measurement" may be used interchangeably with "carrier phase measurement". The terms "ID", "ID number", "index" or "index number" may be used interchangeably to designate any means of identifying an element among other elements.

The terminology sounding reference signal (SRS) and sounding reference signal for positioning (SRSp) may be used interchangeably in example embodiments described herein.

### EXAMPLE OF PRS CONFIGURATION FOR CARRIER PHASE MEASUREMENT AND REPORTING

### Example of General PRS Configuration

The WTRU may receive PRS (e.g., UL-PRS and/or DL-PRS) configuration information from the network (e.g., any of location management function (LMF) and/or gNB) for carrier phase measurements. The WTRU may receive first information indicating the configuration of the PRS, which may be similar to the other positioning measurements (e.g., any of DL-TDOA, reference signal time difference (RSTD), AoA, AoD, etc.). For example, the PRS configuration may include one or any combination of the following parameters: a number of symbols, a transmission power, a number of PRS resources included in a PRS resource set, a muting pattern for PRS (for example, the muting pattern may be expressed in a bitmap form), a periodicity, a type of PRS (e.g., any of periodic, semi-persistent, or aperiodic), a slot offset for periodic transmission for PRS, a vertical shift of PRS pattern in the frequency domain, a time gap during repetition, a repetition factor, a resource element (RE) offset, a comb pattern, a comb size, a spatial relation or quasi co location (QCL) information (e.g., QCL target, QCL source) for PRS, a number of physical uplink shared channel (PUSCH) resource units (PRUs), a number of transmission reception points (TRPs), an absolute radio-frequency channel number (ARFCN), subcarrier spacing, an expected RSTD, an uncertainty in expected RSTD, a start physical resource block (PRB), a bandwidth (BW), a bandwidth part (BWP) ID, a number of frequency layers, any of a start and end time for PRS transmission, an on/off indicator for PRS, a TRP ID, a PRS ID, a cell ID, a global cell ID, and/or a PRU ID.

### Example of PRS Configuration for Phase Measurements

In an embodiment, the WTRU may (e.g., additionally) receive second information indicating PRS configuration(s) for phase measurement, which may be used by the WTRU to determine which resource element, and/or subcarrier, and/or tone (which may be denoted as resource for phase measurement, e.g., phase-resource(s)) to perform phase measurement.

In an example, the WTRU may be configured with one or more phase-resources (e.g., any of resource elements, tones, and subcarriers) which may extend over a (e.g., configured) duration of time. The WTRU may be configured with a (e.g., specific) resource element, and/or subcarrier, and/or tone number(s)/ID # (identification number) to perform phase measurement.

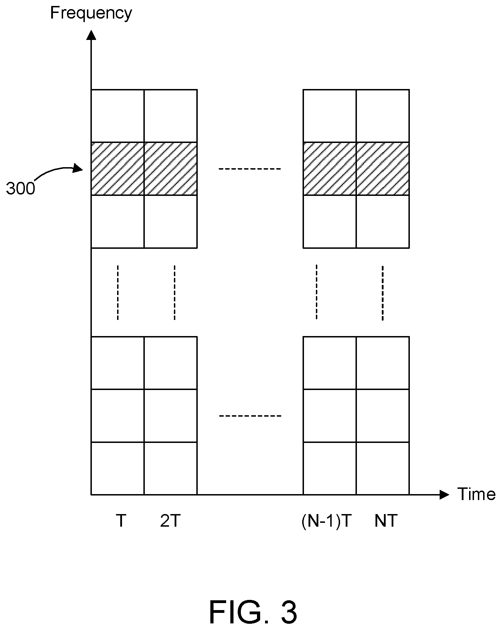

FIG. 3 is a diagram illustrating an example of a kth subcarrier for carrier phase measurement. For example, the kth subcarrier 300 (k being an integer) may be configured for the WTRU to measure the carrier phase. In the example, the duration of the kth subcarrier 300 may be NT where N may be an integer and T may be a unit used to express the duration of one OFDM symbol, which may be expressed, for example, in terms of any of symbols and seconds. The WTRU may be configured with a hopping pattern of subcarriers. For example, the WTRU may be configured to perform measurements of subcarriers for 2K symbols (K being an integer) where during the first K symbols, the WTRU may be configured to measure kth subcarrier 300 and for next, subsequent K symbols the WTRU may be configured to measure mth subcarrier (k and m being two integers). The WTRU may be configured to measure phase of the configured subcarrier(s) repeatedly (e.g., periodically).

In another example, the WTRU may be configured with a range of subcarriers (e.g., any of start/end of subcarrier range, and/or subcarrier index indicating start/end of the range) to perform phase measurement.

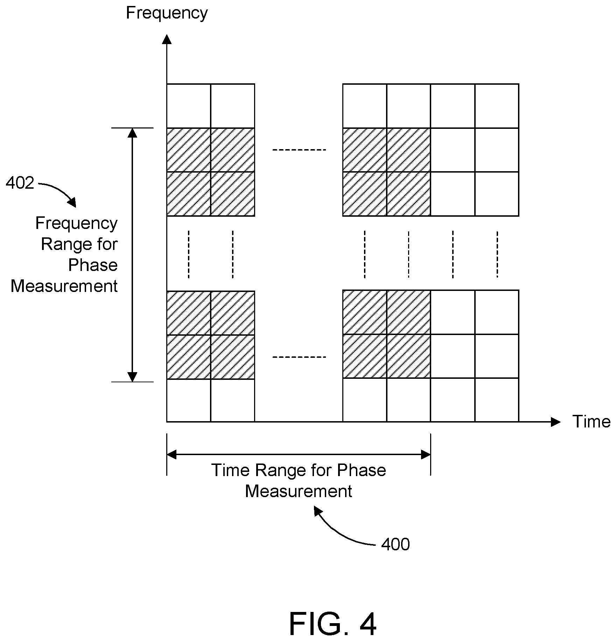

FIG. 4 is a diagram illustrating an example of a range of resources for phase measurement. For example, the WTRU may be configured with a time range 400 and/or a frequency range 402 to perform phase measurement. The time range 400 and/or the frequency range 402 may be associated with a BWP. The subcarrier may belong to a bandwidth configured for PRS. The WTRU may be configured with PRS by the network and the WTRU may receive (e.g., additional) configuration information indicating among the BW, which subcarrier(s) to use for carrier phase measurements. The aforementioned information about subcarriers may be associated with any of a frequency layer, a PRS resource set and/or a PRS resource.

In another example, the WTRU may be configured with one or more phase measurement phase-resources, and/or ranges of phase-resource, and/or pairs of phase-resources, and/or pairs of ranges of phase-resources (e.g., REs, and/or tones, and/or subcarriers) for phase measurement. The configuration (e.g., information) may include any of configuration information for PRS transmission and/or configuration information for phase measurement reporting as described herein in more detail.

For example, configuration information for PRS transmission may include (e.g., indicate) one or any combination of the following:
- The phase-resources, and/or ranges of phase-resource, and/or pairs of phase-resources, and/or pairs of ranges of phase-resources per PRS resource.
- The phase-resources, and/or ranges of phase-resource, and/or pairs of phase-resources, and/or pairs of ranges of phase-resources per antenna port.
- The phase-resources, and/or ranges of phase-resource, and/or pairs of phase-resources, and/or pairs of ranges of phase-resources per PRS resource set.
- The phase-resources, and/or ranges of phase-resources, and/or pairs of phase-resources, and/or pairs of ranges of phase-resources per TRP.
- The phase-resources, and/or ranges of phase-resources, and/or pairs of phase-resources, and/or pairs of ranges of phase-resources per frequency layer.
- The phase-resources, and/or ranges of phase-resources, and/or pairs of phase-resources, and/or pairs of ranges of phase-resources in the same or different antenna port, PRS resource set, TRPs, and/or frequency layer.

For example, configuration information for phase measurement reporting may include (e.g., indicate) one or any combination of the following:
- The parameters to measure. For example, the configuration information may indicate whether the WTRU may measure PoA, and/or DPoA.
- The maximum and/or minimum number of phase-resources to measure in one period, for any of one PRS resource, a PRS resource set, a TRP, and a frequency.
- The maximum and/or minimum number of phase-resources to measure in one period, for any of one PRS resource, a PRS resource set, a TRP, and one frequency layer.
- The maximum and/or minimum number of pairs of phase-resources to measure in one period, for one pair of any of PRS resources, PRS resource sets, TRPs, and frequency layers.
- The minimum and/or maximum number of phase-resources and/or pairs of phase-resources per any of PRS resource, antenna port, PRS resource set, TRP, and frequency layer to report phase measurement.
- The minimum and/or maximum number of phase-resources, and/or pairs of phase-resources in the same or different PRS resource, and/or antenna port, and/or PRS resource set, and/or TRPs, and/or frequency layer to report phase measurement.
- Whether DpoA may be enabled or disabled for phase-resource in different frequency layers, and/or TRPs, and/or PRS resource sets, and/or PRS resources.
- A time condition such as e.g., the maximum and/or minimum time gap between two phase-resources in the same frequency layer, and/or TRP, and/or PRS resource set, and/or PRS resource.
- A time gap condition such as e.g., the maximum and/or minimum time gap between two phase-resources in different frequency layers, and/or TRPs, and/or PRS resource sets, and/or PRS resources.
- A frequency gap condition such as e.g., the maximum and/or minimum frequency gap between two phase-resources in a pair of phase resources.

For example, the WTRU may determine on which PRS resource(s) to perform phase measurement (e.g., POA, DPOA) based on the (pre-)configuration. For example, the WTRU may select two phase-resources on which to perform phase measurement satisfying a frequency gap condition (e.g., maximum and/or minimum frequency gap between the two phase resources). For example, the frequency gap condition may be satisfied in a case where the frequency gap separating the two phase resources is lower than a first frequency gap value and/or higher than a second frequency gap value. For example, the WTRU may (e.g., also) select two phase resources to satisfy a time gap condition (e.g., maximum and/or minimum time-gap between two phase resources). For example, the time gap condition may be satisfied in a case where the time gap separating the two phase resources is lower than a first time gap value and/or higher than a second time gap value.

For example, the WTRU may be (pre-)configured with a maximum, and/or a minimum, and/or an exact number of phase-resources to report to the network. For example, the WTRU may select the number of phase-resources to report the phase measurement to the network satisfying the configured conditions and/or parameters (e.g., the configuration requirements).

For example, the WTRU may be (pre-)configured with a maximum, and/or a minimum, and/or an exact number of phase-resources per set of phase-resources (e.g., per any of DL-PRS resource, DL-PRS resource set, frequency layer), and/or per beam, and/or per TRP. For example, the WTRU may select the number of phase-resources to report the phase measurement to the network satisfying the configured conditions and/or parameters (e.g., the configuration requirements).

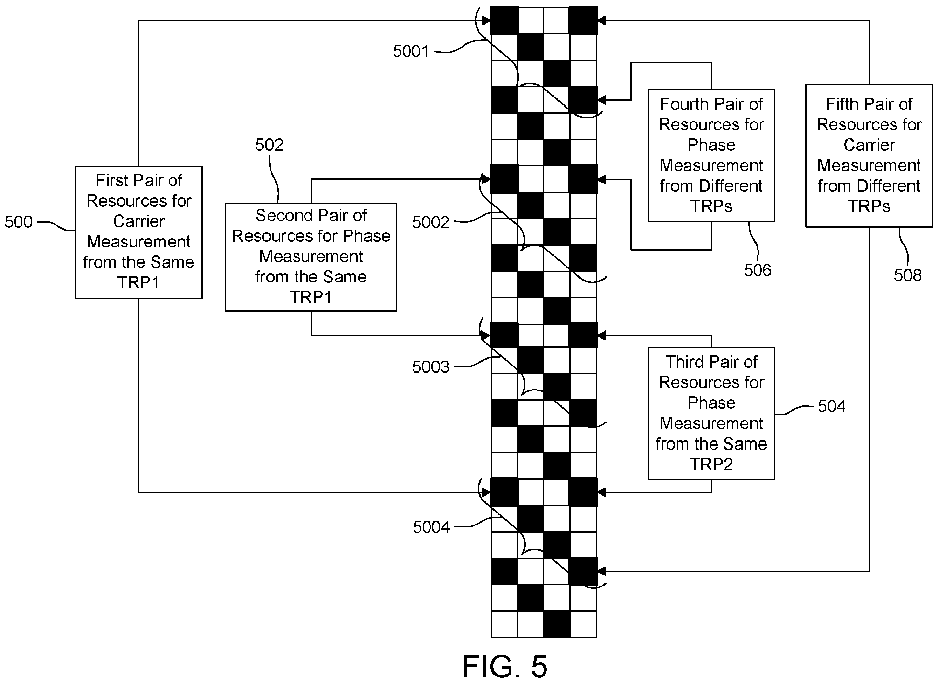

FIG. 5 is a diagram illustrating an example of a DL-PRS configuration for measurement reporting including pairs of phase measurement. For example, the WTRU may receive configuration information for PRS reception of two PRS patterns, which are illustrated with shading. For example, a (e.g., each) PRS pattem may belong to (e.g., be transmitted by) one TRP. The WTRU may be configured to perform phase measurements of two phase-resources and/or pairs of phase-resources for one TRP (e.g., referred to herein as TRP1) illustrated as the darkest shaded PRS pattern 5001, 5002, 5003, 5004. The first pair 500 of phase-resources from PRS pattern of TRP1 for phase measurement may have a first frequency gap. The second pair 502 of phase-resources from PRS pattern of TRP1 for phase measurement may have a second frequency gap, that may be smaller than the first frequency gap. The third pair 504 of phase-resources may be from PRS pattern of another TRP (e.g., referred to herein as TRP2). For example, the first three pairs 500-504 of phase-resources (e.g., the first, second, and third pairs) may be used to measure the phase difference between two different frequency phase-resources from the same TRP. For example, a fourth pair 506 and a fifth pair 508 of phase-resources for phase measurements may be used to measure the phase difference between two phase-resources from two (e.g., different) TRPs, in which the fourth pair 506 of phase-resources may have a smaller frequency gap than the frequency gap of the fifth pair 508 of phase-resources.

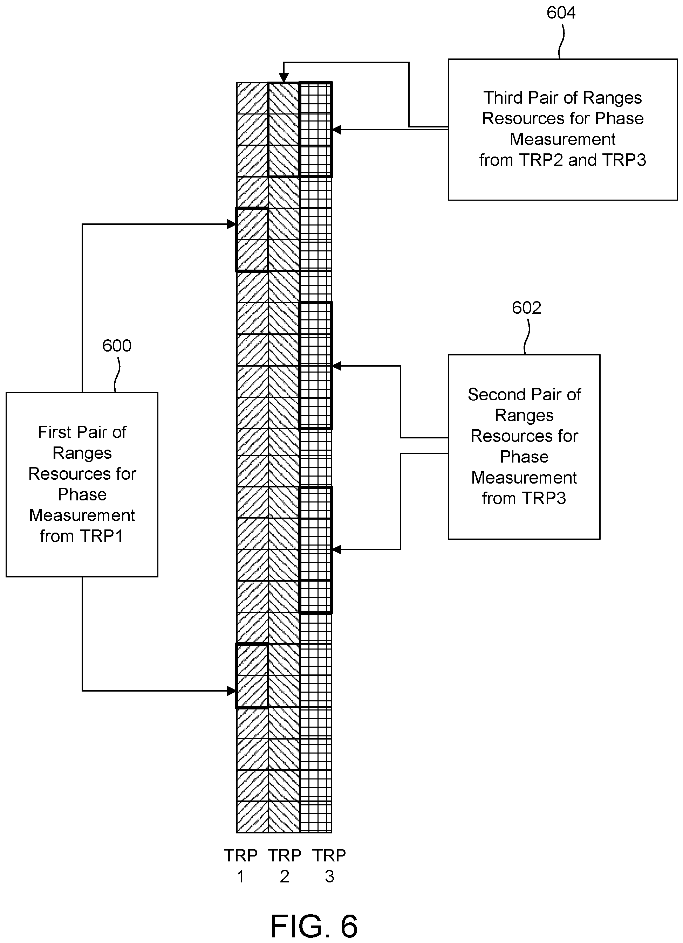

FIG. 6 is a diagram illustrating an example of PRS configuration for pairs of ranges of phase-resources for carrier phase measurement. For example, the WTRU may receive information indicating a configuration for PRS reception of three PRS patterns, which are illustrated by fill pattern. For example, a (e.g., each) PRS pattern may belong to (e.g., be transmitted by) one TRP (e.g., the three different fill patterns are associated with TRP1, TRP2, and TRP3, respectively). The WTRU may be configured to perform phase measurements for two pairs of ranges of phase-resources for the same TRP (e.g., for TRP1 and TRP3), such as a first pair of ranges 600 of phase-resources for TRP1 and a second pair of ranges 602 of phase-resources for TRP3. For example, the WTRU may be configured to perform phase measurements of a third pair of ranges 604 of phase-resources for different TRPs (TRP2 and TRP3), where a first set of resources of the third pair 604 may be associated with TRP2 and a second set of resources of the third pair 604 may be associated with TRP3.

In another example, the WTRU may be configured by the network (e.g., any of LMF, and/or gNB) with comb offset values for a (e.g., each) OFDM, a (e.g., each) symbol, and a frequency resource ID (e.g., any of resource element ID, subcarrier ID, RB ID, carrier ID, component carrier ID (CC ID)) for the PRS the network may transmit to the WTRU.

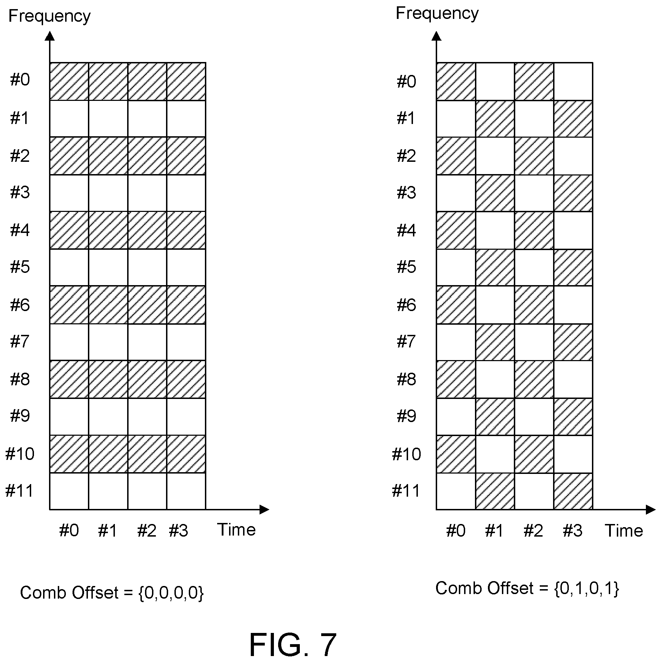

FIG. 7 is a diagram illustrating examples of comb offset. Comb offset values may depend on the number of OFDM symbols over which PRS may be transmitted. Different comb patterns are illustrated in FIG. 7 where, in the left subfigure, no comb offsets may be applied to PRS in OFDM symbols #0 through #3. In the right subfigure, the comb offset pattern of {0,1,0,1} may be applied to PRS in OFDM symbols #0 through #3.

For example, the WTRU may be configured by the network (e.g., any of LMF, and/or gNB) with any of the resource element ID, band, component carrier (CC), carrier, and RB ID the WTRU may be expected (e.g., requested) to perform phase measurements on. For example, in the example illustrated in FIG. 7, the WTRU may be configured to perform measurements on resource element ID #8/subcarrier ID #8 with the comb offset pattern {0,0,0,0} where the network may transmit PRS on resource element ID #8/subcarrier ID #8. For example, the WTRU may be configured with any of band, CC, carrier and RB ID, along with the resource element ID/ subcarrier ID.

In one example, the WTRU may measure phase for a (e.g., each) PRS on different subcarriers and may compute difference in phase between two subcarriers. For example, in the example illustrated in the left subfigure in FIG. 7, the WTRU may be configured to measure phase of PRSs on the subcarrier #0 and subcarrier #6 and compute difference in phase between the two PRSs. The WTRU may include the phase difference in a measurement report. The WTRU may be configured to measure the phase difference between PRSs on subcarriers which may be separated by a (e.g., preconfigured) value, M (e.g., M=6 in the example illustrated in the left subfigure in FIG. 7. The WTRU may be configured to report phase difference between subcarrier #0 and subcarrier #6, subcarrier #2 and subcarrier #8, and subcarrier #3 and subcarrier #10).

In another example, the WTRU may be configured with a comb offset pattern and carrier ID for any of sounding reference signal (SRS), SRS for positioning (SRSp), phase tracking reference signal (PTRS), and PTRS for phase measurements. For example, the WTRU may apply the comb offset to any of SRSp, SRS, and PTRS and may transmit the RS on the configured carrier ID.

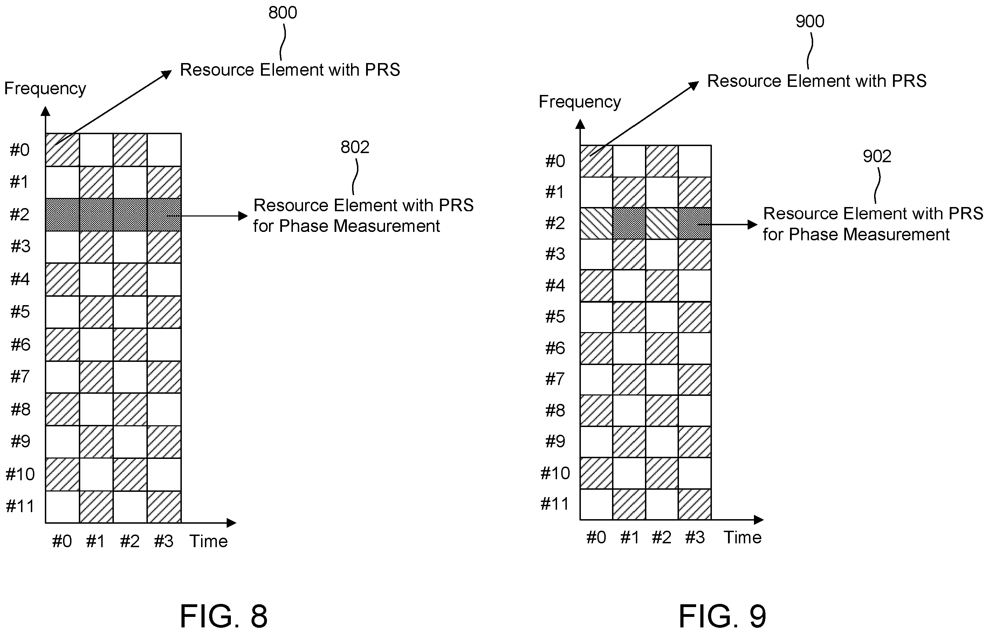

FIG. 8 is a diagram illustrating an example of a PRS configuration with PRS and PRS for phase measurements. For example, the WTRU may be configured to receive any of PRS and PRS for phase measurements in the same symbols. For example; PRS for timing and/or RSRP measurements may be scheduled in resource elements 800 illustrated in stripes. The resource elements 802 illustrated in shades may contain PRS for phase measurements. There may be some resource elements with PRS which may be used for timing and/or RSRP, and phase measurements (e.g., resource element #2 in symbol #0 and #2 in FIG. 8). In this case, the WTRU may be configured by the network with any of time and frequency domain mapping (e.g., association) of PRS for phase, RSRP, and/or timing measurements. The WTRU may be requested by the network to report for phase, and/or RSRP, and/or timing measurements using the configured PRS.

In another example, the WTRU may determine that if PRS for timing and/or RSRP measurements and PRS for phase measurements are configured on overlapping resources, the PRS for phase measurements may replace PRS for timing and/or RSRP measurements. For example, in FIG. 8, PRS(s) in resource element #2 in symbol #0 and #2 may be replaced by the PRS(s) for phase measurements.

FIG. 9 is a diagram illustrating another example of PRS configuration with PRS and PRS for phase measurements. For example, PRS for phase measurements may be configured in resource elements which may not overlap with PRS for timing and/or RSRP measurements. For example, resource element 900 (e.g., #2 in symbol #0 and #2 in the figure) may contain (e.g., only) PRS for timing and/or RSRP measurements, and resource element 902 (e.g., #2 in symbol #1 and #3) may contain PRS for phase measurements.

The WTRU may determine any of a density and time/frequency locations of PRS for phase measurements, based on the configuration for PRS for RSRP/time measurements. The WTRU may receive information indicating a table associating a location of PRS for phase measurements in time and/or frequency and a PRS configuration (e.g., number of symbols, comb pattern, etc.). The examples of the configuration for PRS for RSRP/time measurements may be any of the PRS parameters described herein. For example, the location of PRS for phase measurement in the frequency domain may be associated with a comb value of the PRS for RSRP/time measurements.

For example, a PRS resource configuration may include any of a PRS resource ID, a PRS sequence ID (e.g., or any other IDs used to generate a PRS sequence), a PRS resource element offset, a PRS resource slot offset, a PRS symbol offset, PRS QCL information, a PRS resource set ID, a list of PRS resources in the resource set, a number of PRS symbols, a muting pattern for PRS, muting parameters (e.g., such as any of a repetition factor, muting options), a PRS resource power, a periodicity of a PRS transmission, spatial direction information of a PRS transmission (e.g., any of beam information, angles of transmission), spatial direction information of uplink RS reception (e.g., any of beam ID used to receive UL RS, angle of arrival), a frequency layer ID, a TRP ID, and/or a PRS ID.

In another example, the WTRU may be configured to transmit any of SRS, SRSp, PTRS and PTRS for positioning (PTRSp) such that a RS which may be used for measurement of RSRP and/or timing may be multiplexed in time and frequency domains with a RS which may be used for phase measurements as described herein. For example, the measurement time for positioning may be reduced in a case where different types of PRS are multiplexed in frequency and/or time.

For example, a SRSp resources configuration may include any of (1) a resource ID, (2) comb offset values, (3) cyclic shift values, (4) a start position in the frequency domain, (5) a number of SRSp symbols, (6) a shift in the frequency domain for SRSp, (7) a frequency hopping pattern, (8) a type of SRSp (e.g., any of aperiodic, semi-persistent, and periodic), (9) a sequence ID used to generate a SRSp (e.g., or any other IDs used to generate a SRSp sequence, (10) spatial relation information indicating which reference signal (e.g., any of DL RS, UL RS, channel state information RS (CSI-RS), SRS, DM-RS) and synchronization signal block (SSB) (e.g., SSB ID, cell ID of the SSB) the SRSp may be spatially related to, (11) QCL information (e.g., a QCL relationship between SRSp and other reference signals or SSB), (12) a QCL type (e.g., QCL type A, QCL type B, QCL type D), (13) a resource set ID, (14) a list of SRSp resources in the resource set, (15) transmission power related information, (16) pathloss reference information which may contain index for SSB, CSI-RS or PRS, (17) a periodicity of SRSp transmission, (18) spatial direction information of SRSp transmission (e.g., any of beam information, angles of transmission), and/or (19) spatial direction information of DL RS reception (e.g., any of beam ID used to receive DL RS, angle of arrival).

### Example of PRS Resource in more than one Subcarrier in Non-Overlapping Time Domain

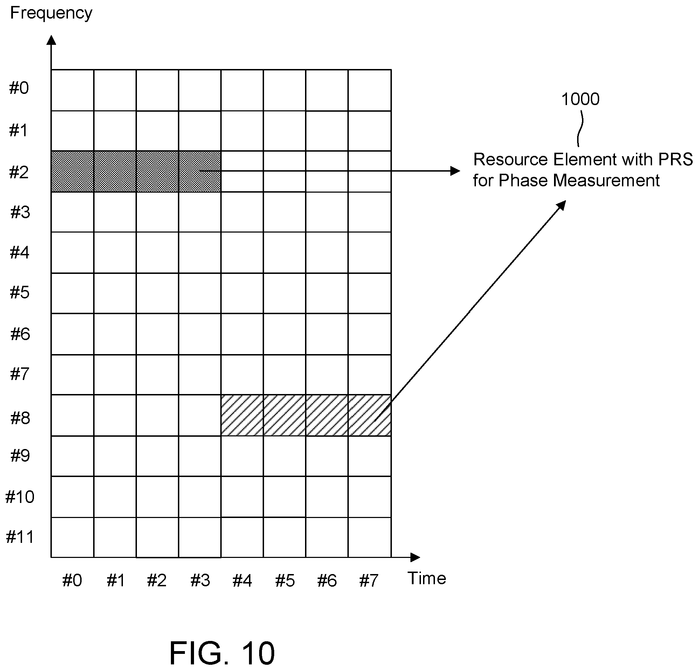

FIG. 10 is a diagram illustrating an example of PRS for phase measurements in different subcarriers in one PRS resource 1000. For example, a PRS resource 1000 may comprise more than one subcarrier spanning over more than one OFDM symbol as shown, for example, in FIG. 10. The WTRU may perform measurements on phase on a (e.g., each) subcarrier and may calculate phase difference between a (e.g., each) subcarrier. In the example illustrated in FIG. 10, the WTRU may perform measurements on phase of subcarrier #2 and #8 and may calculate phase difference between the two subcarriers.

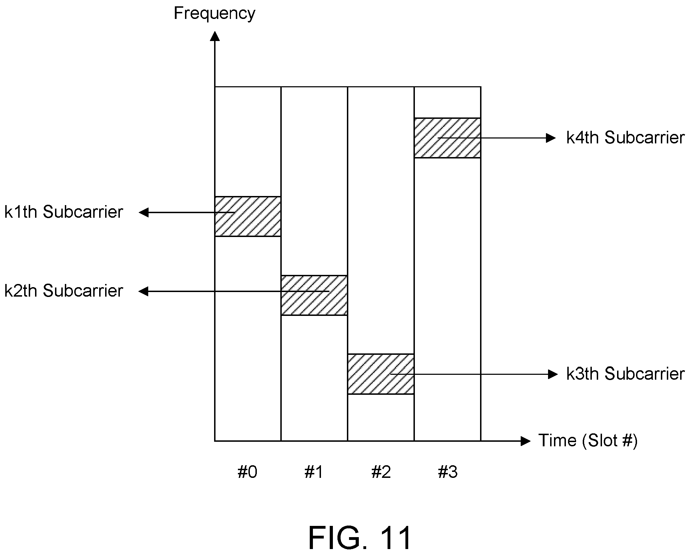

FIG. 11 is a diagram illustrating another example of PRS for phase measurements on different subcarriers in different slots. For example, the WTRU may be configured to measure PRS resources in separate (e.g., different) slots. As shown, for example, in FIG. 11, the WTRU may measure phase of PRS on a first (e.g., the k1th) subcarrier in a first slot (e.g., #0). For example, the WTRU may measure phase of PRS on a second (e.g., the k2th) subcarrier in a second slot (e.g., #1). The WTRU may compute phase difference between the PRS on the first (e.g., k1th) subcarrier and the second (e.g., k2th) subcarrier. For example, the WTRU may measure phase of PRS on a third (e.g., the k3th) subcarrier in a third slot (e.g., #2). For example, the WTRU may measure phase of PRS on a fourth (e.g., the k4th) subcarrier in a fourth slot (e.g., #3). The WTRU may compute phase difference between the PRS on the third (e.g., k3th) subcarrier and the fourth (e.g., k4th) subcarrier. In another example, the PRSs in different slots may be configured as one PRS resource. For example, PRS(s) on subcarrier(s) may span over more than one slot.

### Example of M Tx at one TRP

In another example, a PRS pattern may correspond to PRS placed in the kth subcarrier (k being an integer) as shown, for example, in FIG. 3. The WTRU may be configured with more than one PRS pattern. The WTRU may be configured by the network (e.g., LMF, gNB) to receive one or more PRS patterns from the same TRP, where a (e.g., each) antenna at the TRP may send a same (or a different) TRP pattern (e.g., same or different subcarrier). The WTRU may be configured to perform measurements on the PRS and to report information indicating the performed measurements such as e.g., a phase difference between PRSs transmitted (e.g., received) from two antennas at the TRP. The WTRU may be configured with a reference PRS with which the WTRU may be expected (e.g., requested) to calculate phase difference between the reference PRS and target PRS.

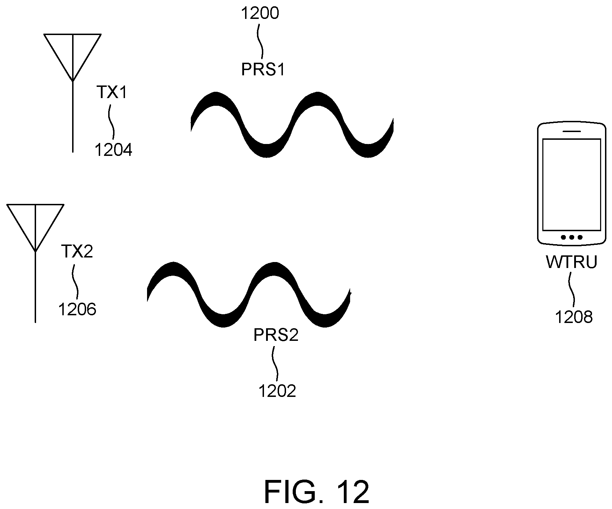

FIG. 12 is a system diagram depicting an example of two PRSs from two Tx antennas. For example, two PRSs, PRS1 1200, and PRS2 1202, (e.g., any of two different resource elements/carriers, two different patterns, two PRSs with the same carrier, two PRSs with the same pattern) may be transmitted from two transmit antennas TX1 1204 and TX2 1206 (e.g., of a same TRP) and received by the WTRU 1208. The WTRU 1208 may receive configuration information indicating that PRS1 1200 may be a reference PRS and PRS2 1202 may be the target PRS. The WTRU 1208 may be configured to compute phase difference between PRS 1 1200 and PRS2 1202 e.g., in a case where the WTRU 1208 receives PRS.

For WTRU-based positioning, the WTRU may receive timing error group (TEG) and/or phase error group (PEG) information related to PRS from the network. The WTRU may (e.g., determine to) compute double differential measurements between two phase difference measurements in a case where the PRS resources associated with phase difference measurements belong to the same TEG and/or PEG. For example, in a case where the WTRU is configured with PRS resource #1, PRS resource #2, and PRS resource #3, and in a case where PRS resource #1 is the reference resource, the WTRU may obtain two phase difference measurements (e.g., Pd#1 = phase (PRS resource #1) - phase (PRS resource #2) and Pd#2 = phase (PRS resource #1) - phase (PRS resource #3), where phase (.) may indicate a function which may compute the phase of the received PRS). In a case where PRS resource #1, PRS resource #2, and PRS resource #3 belong to the same TEG and/or PEG, the WTRU may (e.g., determine to) compute a double phase difference (e.g., dpd#1=Pd#1 - Pd#2). For example, the WTRU may receive configuration information from the network indicating which phase difference measurement the WTRU may use as a reference for double differential calculation of phase differences.

In another example, the WTRU may receive configuration information from the network for one or more PRS resource(s). The WTRU may receive configuration information for a PRS resource indicating that the PRS resource may be used as a reference PRS, where the phase difference may be calculated with respect to the reference PRS.

In another example, the WTRU may receive configuration information related to PRS resource(s) which may be used by the WTRU to differentiate the PRS resources. For example, the WTRU may receive configuration information related to any of a polarization applied to a PRS resource, a code applied to a PRS resource for code-based multiple access, and frequency and/or time allocation. In a case where a polarization or a code is applied to PRS resource(s), the WTRU may be configured with more than one PRS resource which may be allocated in the same time and/or frequency resources. The same configuration may be applicable to UL RS for positioning (e.g., any of SRSp, PTRSp, SRS). The WTRU may receive configuration information indicating more than one configuration for UL RS such that the WTRU may apply different polarization or codes to UL RS resources.

In another example, the WTRU may be preconfigured with configurations that may differentiate PRS resources (e.g., any of code(s), polarization). In a case where one or more conditions are met, the WTRU may determine to apply pre-configurations to the PRS resources such that the network may differentiate PRS resources. For example, in a case where Rx antenna separation at the TRP satisfies a condition (e.g., is less than a (e.g., preconfigured) threshold), the WTRU may determine to apply a preconfigured combination of polarizations or codes to any of the SRSp and PTRS resources. Based on any of the estimated WTRU location via a DL-based positioning method, a Tx configuration (e.g., Tx antenna separation), and a Rx configuration (Rx antenna separation), the WTRU may determine to apply pre-configuration to the UL RS.

### Example of One Tx at one TRP

In another example, the WTRU may be configured by the network to receive one PRS pattern from the TRP. The WTRU may receive configuration information indicating that one PRS pattern may be received from the TRP. In a case where the WTRU has more than one Rx antenna, the WTRU may be configured to report phase difference of the signal received at a (e.g., each) Rx antenna. The WTRU (e.g., reporting information) may indicate which Rx antenna may be used as the reference. The WTRU (e.g., reporting information) may indicate that any of an orientation of the WTRU and a spatial filtering of Rx antenna may have changed compared to the last occasion the WTRU may have performed measurements on the phase difference between the received PRS. For example, the WTRU may determine to perform measurements on the phase difference in a case where two Rx antennas belong to the same timing error group (TEG) and/or phase error group (PEG). For example, the WTRU may further report the PoD from a (e.g., each) antenna, which may assist the network to determine the propagation time to a (e.g., each) antenna of the WTRU.

### Example of UL Transmission

The WTRU may be configured by the network (e.g., gNB, LMF) to use PTRS for positioning. The WTRU may be configured with PTRS sequences (e.g., that may be designed) for positioning. For example, the PTRS for positioning (PTRSp) may be configured per subcarrier and/or may occupy different patterns in the time domain. For example, the WTRU may be configured to transmit PTRSp.

In a case where the WTRU is transmitting PTRSp or PRS for positioning for phase measurements, the WTRU may indicate to the network (e.g., transmit information indicating) whether PRS resources or PTRSp resources may belong to the same TEG and/or PEG. The WTRU may indicate to the network (e.g., transmit information indicating) an ID of TEG and/or PEG with which PTRSp or PRS for positioning may be associated. In a case where RSs are configured by gNB or LMF, the WTRU may report the association of RS resources with TEG and/or PEG to gNB or LMF, respectively. For example, in a case where PTRS is configured by the gNB, the WTRU may report the association of PTRS with TEG and/or PEG to the gNB. For example, in a case PTRSp is configured by the LMF, the WTRU may report the association of PTRSp with TEG and/or PEG to the LMF.

PRS for phase measurements and/or PTRSp may be configured for (e.g., all) resource blocks with which the WTRU may be scheduled. PRS for phase measurements and/or PTRSp may be configured in (e.g., every) symbol and/or slot with which the WTRU may be scheduled.

### Example of Dedicated PRS Configuration for Carrier Phase Measurement

In an embodiment, the WTRU may receive information indicating a dedicated PRS configuration for phase measurement. In an example, the configuration may include one or more phase-resources (e.g., any of subcarriers, REs, and tones) for phase measurement (e.g., only). In another example, the configuration may include one or more phase-resources and/or pairs of phase-resources for phase measurement.

In an embodiment, the WTRU may receive information indicating a dedicated PRS configuration for phase measurement. In an example, the configuration may include one or more ranges of phase-resources for phase measurement. In another example, the configuration may include one or more pairs of range of phase-resources for phase measurement.

### Example of a WTRU Receiving PRS Configuration for Carrier Phase Measurement

The WTRU may receive PRS any of periodically, semi-persistently, and in an aperiodic manner. A semi-persistent PRS configuration may be any of activated and deactivated by receiving, for example, a media access control-control element (MAC-CE) from the network. Aperiodic PRS may be triggered (e.g., initiated) by, for example, a downlink control element (DCI), received from the network.

### Example of Hierarchical PRS Resource Configuration

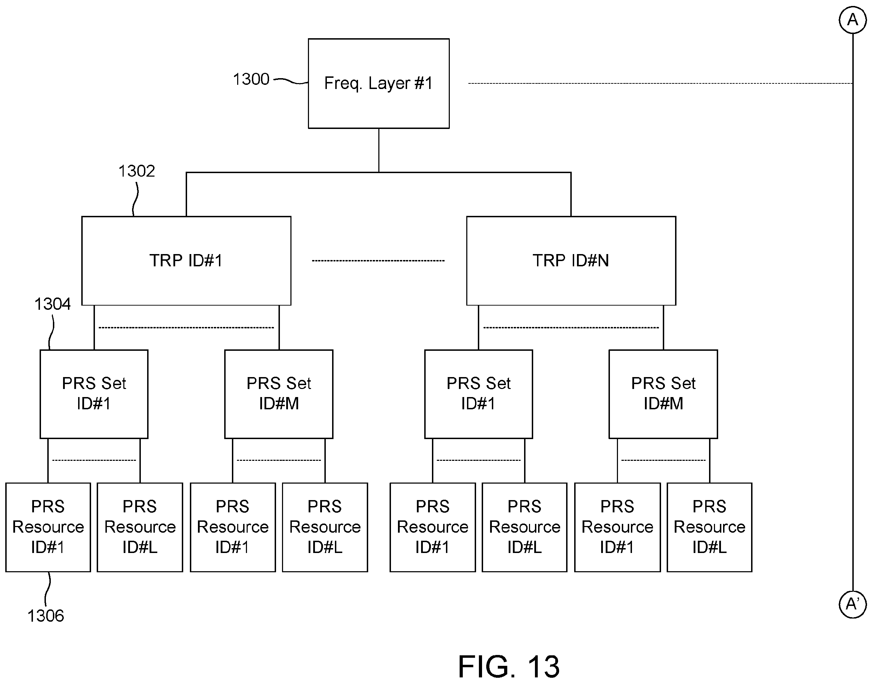

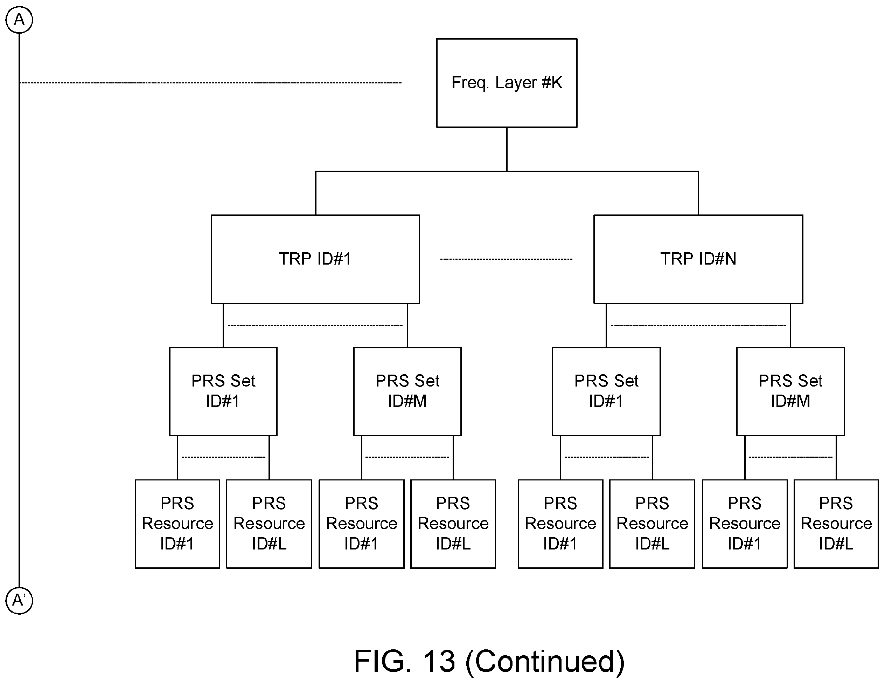

FIG. 13 is a block diagram illustrating an example of hierarchical relationship between PRS parameters. In the hierarchy, one frequency layer 1300 of PRS resources may comprise one or more TRP PRS resources, in which a (e.g., each) TRP PRS resource may be represented by a TRP ID 1302. One TRP ID PRS resource may include one or more PRS resource sets, in which a (e.g., each) PRS resource set may be represented by a PRS set ID 1304. One PRS resource set may contain one or more PRS resources, in which a (e.g., each) PRS resource may be denoted as (e.g., represented by) PRS resource ID 1306.

### Example of WTRU Using Phase Measurement of one Phase-Resource and/or one Pair of Phase-Resources to Determine the Phase Measurement of a Group of Phase-Resources

In an embodiment, the WTRU may use phase measurement of one phase-resource (e.g., any of resource element (RE), tone, and subcarrier) and/or one pair of phase-resources to determine and/or represent and/or indicate the phase measurement of a group of resources.

For example, the WTRU may use the carrier measurement of one phase-resource or one pair of phase-resources to determine and/or represent and/or indicate the phase measurement of a PRS resource. In one example, the WTRU may use phase measurement of one carrier in the PRS resource to represent and/or determine and/or indicate the phase measurement of the PRS resource. In another example, the WTRU may use phase measurement of one pair of carriers, in which at least one carrier may belong to the PRS, to represent and/or determine and/or indicate the phase measurement of the PRS resource.

For example, the WTRU may use the carrier measurement of one phase-resource or one pair of phase-resources to determine and/or represent and/or indicate the phase measurement of a PRS resource set. In one example, the WTRU may use phase measurement of one carrier in one PRS resource of the PRS resource set to represent and/or determine and/or indicate the phase measurement of the PRS resource set. In another example, the WTRU may use phase measurement of one pair of carriers, in which at least one carrier may belong to one PRS resource of the PRS resource set, to represent and/or determine and/or indicate the phase measurement of the PRS resource set.

For example, the WTRU may use the carrier measurement of one phase-resource or one pair of phase-resources to determine and/or represent and/or indicate the phase measurement of a TRP. In one example, the WTRU may use phase measurement of one carrier in one PRS resource of one PRS resource set of the TRP to represent and/or determine and/or indicate the phase measurement of the TRP. In another example, the WTRU may use phase measurement of one pair of carriers, in which at least one carrier may belong to one PRS resource of one PRS resource set of the TRP to represent and/or determine and/or indicate the phase measurement of the TRP.

For example, the WTRU may use the carrier measurement of one phase-resource or one pair of phase-resources to determine and/or represent and/or indicate the phase measurement of a frequency layer. In one example, the WTRU may use phase measurement of one carrier in one PRS resource of one PRS resource set of one TRP in the frequency layer to represent and/or determine and/or indicate the phase measurement of the frequency layer. In another example, the WTRU may use phase measurement of one pair of carriers, in which at least one carrier may belong to one PRS resource of one PRS resource set of one TRP in the frequency layer to represent and/or determine and/or indicate the phase measurement of the frequency layer.

### Example of a WTRU Receiving Assistant Information for Carrier Phase Measurement

The WTRU may receive assistance information from the network to enhance its measurements. The assistance information may include any of the following information elements.

In an example, the assistance information may include correction information (such as e.g., any of initial phase offset, phase drift rate, Doppler shift, Doppler spread) per any of PRS resource, PRS resource set, TRP, and frequency layer.

In another example, the assistance information may include QCL information (e.g., whether PRS resources share similar/same Doppler shift/spread characteristics). For example, in the QCL types defined in 3GPP, "Physical layer procedures for data," TS 38.214, ver. 16.5.0, March. 2021, QCL type A and type B may contain Doppler shift and Doppler spread. QCL type C may contain Doppler shift.

In yet another example, the assistance information may include spatial information (e.g., indicating any of which direction PRS may be transmitted from, an association with other DL or UL reference signals which may be transmitted toward the similar/same direction as the PRS, a boresight angle).

In yet another example, the assistance information may include antenna information (e.g., indicating a power difference between main lobe and side lobe).

In yet another example, the assistance information may indicate whether the transmission spatial filter (e.g., beamforming) may be maintained or not compared to the last transmission.

In yet another example, the assistance information may indicate whether the transmission phase may be locked (e.g., via phase locked loop) or not, or whether the transmission phase may be maintained or not compared to the last transmission.

For example, the WTRU may determine to perform phase difference measurements in a case where the PRS(s) belong to the same TEG (timing error group), and/or PEG (phase error group), and/or have the same QCL relationship (e.g., Type A, Type B, Type C, Type D) and/or spatial information. In another example, the WTRU may determine to return (e.g., transmit information indicating) QCL type associated with measurements for PRS or UL RS (e.g., any of SRS, SRSp, PTRS, PTRSp).

### Example of a WTRU Receiving Configuration of Phase Maintenance Time Window

For example, the WTRU may receive configuration information indicating a phase maintenance time window during which the network or WTRU may maintain phase continuity (e.g., consistency) e.g., phase may be drifted at constant rate, the same phase or phase offset may be maintained. In a case where the phase of the PRS drifts at a constant rate, the WTRU may receive information indicating a drift rate from the network. The WTRU may determine to apply the time window to any of (e.g., configured) PRS resource(s), PRS resource set(s), TRP(s), and frequency layer(s) based on e.g., the configuration. For example, the time window may be associated with any of PRS resource(s), PRS resource set(s), TRP(s), and frequency layer(s). The parameters for the time window may include any of (i) a start/end time (e.g., expressed in terms of relative time or symbol number, or slot number, or subframe number or frame number), (ii) a periodicity of occurrence of the time window, and/or (iii) events (e.g., conditions) that may deactivate the time window (such as e.g., any of a WTRU movement, a RSRP threshold).

For example, the time window may be expressed (e.g., represented) by any of a start time an end time and a duration. The WTRU may receive configuration information indicating a time window configuration by any of a DL-MAC-CE, a radio resource control (RRC) message and a LTE Positioning Protocol (LPP) message. The WTRU may send information indicating a request for the time window via any of a UL-MAC-CE, uplink control information (UCI), a RRC message, and a LPP message. The requested time window may be applicable to DL PRS or UL PRS (e.g., sounding reference signal (SRS), SRS for positioning (SRSp)).

The WTRU may receive information indicating an activation or deactivation of the time window from the network via any of DL-MAC-CE and DCI. The WTRU may send information indicating a request for activation or deactivation of the time window via any of UL-MAC-CE and UCI. The WTRU may determine to perform phase measurements of PRS based on the configuration.

In one example, the WTRU may send a request to the network to configure a time window by the network or for the network. For example, in the request the WTRU may include parameters related to a time window (e.g., any of duration, start/end time, periodicity). For example, the request may be granted by the network. For example, the WTRU may receive configuration information related to the time window. The time window may be related to any of PRS, SRS, and/or SRS for positioning (SRSp). A time window associated with PRS may indicate that the constant phase characteristics related to associated PRS resource(s) may be expected during the time window. After the time window may be configured, the WTRU may determine to perform phase measurements and return (e.g., transmit reporting information indicating) the measurements to the network. In a case where the time window is configured for the WTRU, it may indicate that the WTRU may be expected to maintain the constant phase characteristics during the time window for uplink transmission (e.g., transmission of SRS or SRSp). The parameters of the time window may depend on the WTRU capability (e.g., how long the WTRU may maintain phase continuity or constant phase characteristics).

In another example, the WTRU may send an indication to the network that phase locked loop (PLL) may be active. For example, the activated PLL may be a high-precision PLL which may maintain phase continuity (e.g., consistency) at the configured (e.g., expected) QoS level that may enable the phase measurements. The indication may allow the network to know whether constant phase characteristics may be maintained at the signals, such as SRS or SRSp, transmitted from the WTRU. In another example, the WTRU may receive an indication from the network that the PLLs at the TRPs may be active, indicating that the WTRU may expect phase continuity or constant characteristics to be maintained in PRS (e.g., PRS for phase measurements) transmitted from the TRPs. The indication for active PLL from the network or WTRU may be associated with a parameter of PRS (such as e.g., any of TRP IDs, PRS IDs, PRS resource set ID, and frequency layer IDs). The indication may be associated with a quality of phase maintenance. For example, the indication may contain (e.g., indicated) a granularity of phase accuracy to indicate a level of phase maintenance achievable by PLL at the network or WTRU.

In another example, the WTRU or the network may use an indication to activate or deactivate a measurement period. For example, the WTRU may receive an indication from the network that a high-precision PLL may be activated, indicating that the WTRU may expect constant phase characteristics in the received PRS. The WTRU may determine to initiate phase measurements after receiving the activation command and may report phase measurements to the network. For example, the WTRU may receive an indication that the high-precision PLL may be deactivated and the WTRU may stop measurements of phase of the received PRS.

In another example, the WTRU may send a request to the network to deactivate any of a PLL (e.g., high precision PLL), a time window, and/or PRS for phase measurements. The request may be sent in any of UCI, a UL-MAC-CE, a RRC message, and a LPP message. The WTRU may determine to send the request in a case where at least one of the following conditions is satisfied. In an example, the condition may be satisfied in a case where the WTRU detects a movement. In another example, the condition may be satisfied in a case where standard variation (e.g., changes) in the WTRU position during WTRU-based positioning is below a (e.g., preconfigured) threshold. In yet another example, the condition may be satisfied in a case where RSRP of PRS is above a (e.g., preconfigured) threshold. In yet another example, the condition may be satisfied in a case where the WTRU determines that consistency (e.g., phase and/or power continuity, direction) for the spatial filter(s) for Rx panels cannot be maintained.

In another example, the WTRU may send an indication to the network to indicate that a high-precision PLL may be activated. The WTRU may transmit SRS or SRSp configured for phase measurements (e.g., configured subcarriers in SRS or SRSp may be activated) after the WTRU may have sent the indication to the network. The WTRU may stop the transmission of SRS or SRSp for carrier phase measurements after the WTRU may have sent a deactivation indication to the network, indicating that the high-precision PLL may be deactivated. In another example, the WTRU may be configured by the network to initiate a time window during which phase continuity (e.g., consistency) of SRS or SRSp may be maintained. The WTRU may transmit SRS or SRSp so that carrier phase measurements may be performed at the network. The WTRU may stop the transmission of SRS or SRSp for carrier phase measurements in a case where the time window expires or on reaching the end of the configured duration of the time window.

The indicator described herein may be associated with any of PRS, SRS, and SRSp parameters (such as e.g., any of PRS resource ID, PRS resource set ID, PRS ID, TRP ID, and frequency layer ID). For example, in a case where the activation indicator is associated with a TRP ID, it may indicate that phase continuity may be maintained for the PRSs transmitted from the TRP identified with the TRP ID.

The time window or activation/deactivation of a PLL described herein may apply to maintenance of power and/or phase consistency in PRS (e.g., PRS for carrier phase measurements), SRS, or SRSp. For example, the WTRU may receive configuration information from the network for a time window indicating the duration during which phase and/or phase continuity and/or consistency in PRS, SRS, or SRSp may be maintained.

In an embodiment, a method may be implemented in a WTRU.

In step 1, the WTRU may send a request to the network to perform WTRU-based positioning.

In step 2, the WTRU may receive PRS configuration information from the network.

In step 3, the WTRU may perform measurements (e.g., timing or power related measurements such as RSTD or RSRP) on the received PRS.

In step 4, based on measurements satisfying a condition (e.g., RSRP of PRS above a threshold), the WTRU may send a request to transmit PRS configured for phase measurements.

In step 5, the WTRU may receive PRS configuration information for phase measurements (e.g., indication of which subcarriers to measure for phase).

In step 6, in a case where the WTRU receives an activation indication of high-precision PLL from the network, the WTRU may initiate the phase measurements.

In step 7, the WTRU may receive a deactivation indication, indicating that the high-precision PLL may be deactivated. The WTRU may stop phase measurements and may determine that the initial PRS configuration may be configured by the network.

In step 8, the WTRU may go to step 3.

### EXAMPLES OF METHODS FOR ON-DEMAND PRS FOR CARRIER PHASE MEASUREMENT AND REPORTING

Methods for requesting on demand (e.g., additional) phase resources for performing additional phase measurements are described herein.

### Example of a WTRU Receiving Conditions to Request PRS Configuration for Carrier Phase Measurement and Reporting

In an embodiment, the WTRU may receive information indicating a set of (e.g., preconfigured) PRS configuration for phase measurement. For example, the WTRU may transmit a request message indicating a request for a PRS configuration for phase measurement to the network. The request message may indicate a requested (e.g., preferred) PRS configuration (e.g., among the set of PRS configurations). In another example, the WTRU may transmit request information indicating a (e.g., specific) set of parameters for a (e.g., new) PRS configuration. The WTRU may receive configuration information from the network, which may configure (e.g., indicate) one or more conditions in which the WTRU may request a PRS configuration (e.g., with additional resources) for phase measurement. The indicated one or more conditions may be any of a positioning accuracy condition, a QoS expectation condition, a line-of-sight condition and/or a signal strength (e.g., RSRP) condition, which may be based on one or any combination of the following examples.

In an example, the one or more conditions may be based on the positioning accuracy of the WTRU. For example, the WTRU may report its positioning and/or the error bound of the position. The WTRU may (e.g., be allowed to) request a PRS configuration for (e.g., additional) phase measurements in a case where the error bound and/or the maximum deviation of its position satisfy an accuracy condition (e.g., is smaller than a threshold). The WTRU may further report its error bound to the network.

In another example, the one or more conditions may be based on the QoS expectations (e.g., requirement) of the positioning service (e.g., any of priority, accuracy, latency, and integrity requirement). For example, the WTRU may request the PRS configuration for (e.g., additional) phase measurement in a case where the accuracy expectation (e.g., requirement) of the positioning service satisfies a condition (e.g., is greater than a threshold).

In yet another example, the one or more conditions may be based on any of a line-of-sight (LOS) and a RSRP measurement, according to any embodiment described herein. For example, the WTRU may request the PRS configuration for (e.g., additional) phase measurement in a case where a LOS condition and/or a signal strength (e.g., RSRP) condition is satisfied. A LOS condition may be satisfied in a case where a (e.g., measured) LOS value is above a first value. A signal strength (e.g., RSRP) condition may be satisfied is a case where a (e.g., measured) RSRP is above a second value.

### Example of a WTRU Requesting one or more Parameters for Configuration for Carrier Phase Measurement

In an example, the WTRU may indicate its requested (e.g., preferred) PRS configuration to the network. In another example, the WTRU may indicate one or any combination of the following parameters for PRS configuration for phase measurement. For example, the WTRU may indicate the phase measurement parameters. For example, the WTRU may send a request to the network to configure the PoA measurement. The WTRU may determine the measurement parameters based on its capability.

### Example of a WTRU Determining which Message to Request PRS Configuration for Carrier Phase Measurement

In an embodiment, the WTRU may use one or more types of messages (e.g., any of a MAC CE, a RRC message, and non-access stratum (NAS) messages such as e.g., LPP messages). The WTRU may determine which type of messages to use for requesting the PRS configuration for (e.g., additional) phase measurement and reporting based on which configuration the WTRU may request and/or the positioning method to use (e.g., DL-based, UL-based, or DL+UL-based). For example, the WTRU may use a NAS message in a case where the WTRU requests a PRS configuration associated with more than one TRPs to perform PRS transmission and/or reception. The WTRU may use an RRC message in a case where (e.g., only) the serving gNB/cell may perform PRS transmission/reception. For example, the WTRU may use one or more RRC messages to request a PRS configuration for phase measurement and reporting in a case where the WTRU requests a UL+DL-based and/or DL-based positioning method. For example, the WTRU may use one or more RRC messages to request a PRS configuration for phase measurement and reporting in a case where the WTRU requests a PRS configuration for UL-based positioning method.

### Example of a WTRU Performing Multiple Stage Positioning

In an embodiment, the WTRU may perform multiple stage positioning. For example, the WTRU may perform a first positioning method (e.g., timing-based positioning method) in a first interval. For example, the WTRU may perform a second positioning method (e.g., phase-based positioning method) in a second interval. For example, the WTRU may change from the first positioning method (e.g., timing-based method) to the second positioning method (e.g., phase-based method) based on one or any combination of the following examples.

In an example, the WTRU may change from the first to the second positioning method in a case where a WTRU positioning accuracy condition is satisfied (e.g., the positioning accuracy of the WTRU is greater than a threshold). The WTRU positioning accuracy condition may be configured by the network. For example, for WTRU-B-positioning method, the WTRU may report its positioning and/or the error bound of the position. The WTRU may, for example, any of implicitly and explicitly request the PRS configuration for the second positioning method (e.g., PRS configuration for phase-based measurement).

In another example, the WTRU may change from the first to the second positioning method based on the period of time in which the WTRU may perform the first positioning method. For example, the WTRU may be configured with a (e.g., minimum) period to be allowed to request the PRS configuration (e.g., for another positioning method). For example, the WTRU may request a PRS configuration for the other (e.g., phase-based) positioning method after the configured period may have elapsed.

### Example of a WTRU Performing Multiple Positioning Method Simultaneously

In an embodiment, the WTRU may perform more than one positioning method during the same period of time (e.g., simultaneously). The WTRU may receive information indicating one or more PRS configurations for a (e.g., each) positioning method. For example, the WTRU may determine the offset and/or periodicity of measurement reporting based on the offset and/or the periodicity of PRS (e.g., and measurement reporting) configurations of (e.g., two) positioning methods. For example, the offset and periodicity may be the (e.g., minimum) offset of the two configurations. The WTRU may perform measurement reporting for two positioning methods. For a (e.g., each) measurement reporting, the WTRU may include the measurement results of the two positioning methods.

### Example of Measurement Reporting for More than One Method

In an embodiment, the WTRU may be configured by the network to return (e.g., transmit information indicating) measurements for more than one positioning method. For example, the WTRU may report any of timing-based measurements (e.g., RSTD), phase measurements (e.g., phase difference between two PRS resources), and/or RSRP corresponding to PRS resources. The WTRU may be configured with a reference TRP or PRS which the WTRU may use to compute any of RSTD and phase difference. The WTRU may report to the network any of the reference TRP and/or a PRS resource the WTRU may have used as a reference to compute any of RSTD and/or phase difference.

For example, the WTRU may associate the measurements with the PRS resource(s). For example, the WTRU may be configured with N PRS resources (e.g., PRS resource #1 to PRS resource #N). The WTRU may determine to use, for example, PRS resource #1 as the reference. For example, the WTRU may report RSTD and phase difference between PRS resource #1 (reference) and PRS resource #2. The WTRU may report RSTD and phase difference between PRS resource #1 (reference) and PRS resource #3. In another example, the WTRU may report phase difference between PRS resource #1 (reference) and PRS resource #2 and RSRP for PRS resource #1 and #2.

The WTRU may be configured by the network to transmit different SRSp, SRS, or PTRSp resources depending on the positioning methods. For example, the WTRU may be configured to transmit UL RS for UL-TDOA and UL phase-based measurements. The WTRU may be configured, for example, with two periods, a first period for UL-TDOA and a second period for phase-based measurements. The WTRU may transmit SRSp during the first period (e.g., for UL-TDOA), and PTRSp during the second period (e.g., for phase-based measurements). The WTRU may be configured with durations of the periods or start/end times of the periods. The WTRU may be configured to alternate transmissions of UL RS for different methods. For example, during a (e.g., configured) period, the WTRU may transmit more than one slot of SRSp for UL-TDOA followed by transmission of PTRSp for phase measurements.

### EXAMPLES OF METHODS FOR PHASE MEASUREMENT AND REPORTING

Methods for performing phase measurements and reporting are described herein.

### Example of MG configuration

For example, the WTRU may request a measurement gap for performing phase measurements on PRS. The WTRU may send information for requesting a measurement gap pattern (e.g., indicating any of a periodicity, and a duration of the measurement gap) by any of a RRC message and a UL-MAC-CE.

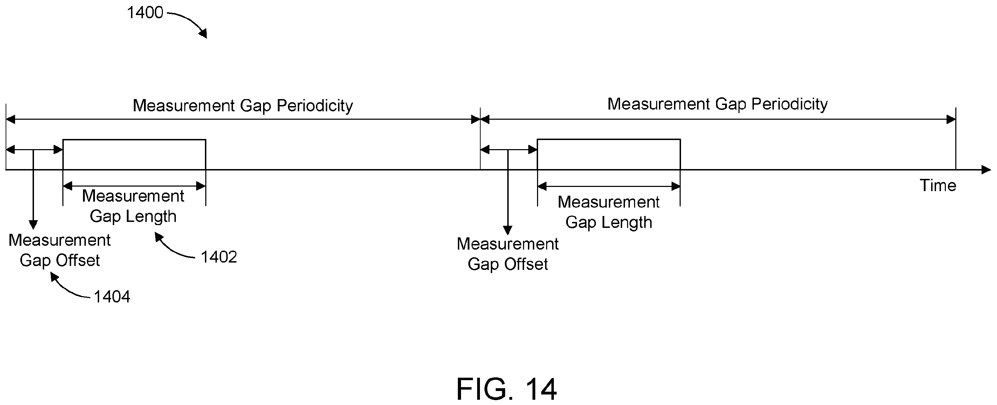

FIG. 14 is a diagram illustrating an example of measurement gap configuration, in which a measurement gap may have a periodicity 1400, a length 1402, and an offset 1404. For example, the WTRU may not receive downlink signals or channels during the measurement gap period 1402 indicated by "Measurement gap length". The WTRU may be configured to receive downlink signals or channels in the measurement gap period 1402 not indicated by "Measurement gap length." In another example, the WTRU may not receive downlink signals or channels, except PRS or PTRS for phase measurements, during the measurement gap period 1402 indicated by "Measurement gap length".

### Example of Priority of PRS for Phase Measurement

For example, the WTRU may receive priority information from the network for the PRS on which the WTRU may perform measurements (e.g., phase measurements). The WTRU may receive information indicating priority levels in an RRC message, and the WTRU may receive an indication on which priority level (e.g., highest, lowest, and/or higher/lower with respect to DL data/control channels) the WTRU may follow. Depending on the priority level, the WTRU may determine to prioritize or drop PRS signals. In a case where the WTRU receives PRS configured for phase measurements e.g., only (e.g., PRS comprising configured subcarriers), the WTRU may determine its priority level implicitly (e.g., PRS for phase measurements may be associated with the highest level of priority).

The WTRU may determine that the PRS which may be used for (e.g., both) phase measurements and timing/RSRP measurements may have higher priority than the other DL channels or DL RS including PRS which may be used (e.g., only) for phase measurements, timing, or RSRP measurements.

### Example of Periodic Phase Measurement Reporting

For WTRU-assisted positioning, the WTRU may be configured to report phase measurements periodically at configured periodicity. The WTRU may receive configuration information from the network (e.g., gNB, and/or LMF) in any of an RRC message and/or an LPP message. The WTRU may associate phase measurements with another measurement such as RSTD between PRS resources, RSRP of a PRS resource.

### Examples of Phase Measurement Parameters

For WTRU-assisted positioning, the WTRU may be configured to report a difference in phase measurements. The WTRU may be configured to associate a time stamp for a (e.g., each) measurement or report. The WTRU may be configured to associate a (e.g., each) measurement with the PRS parameters of the PRS used in the measurement, such as e.g., any of PRS resource ID(s), PRS ID(s), PRS resource set ID(s) and/or TRP ID(s). The measurement (e.g., phase measurement) the WTRU may be configured to perform and report may include one or combinations of the following examples.

In an example, the WTRU may perform and report a phase measurement of PRS (e.g., PRS configured for phase measurement) at an associated time stamp, e.g., phase measurement may be expressed in terms of degrees or radians where a value may be between 0 and 2*pi, or -pi and pi.

In another example, the WTRU may perform and report a difference of phase measurements of PRS (e.g., PRS configured for phase measurement) at a configured time difference (e.g., offset). For example, the WTRU may be configured to report difference in phase at different time occasions separated by T (e.g., T may be expressed in terms of any of seconds, symbols, slots, frames, subframes). For example, the WTRU may measure phase of PRS at time t=t0 where the phase measurement may be indicated by X (e.g., radians, degrees). At time instance t=t0+T, the WTRU may perform phase measurement where the measurement may be indicated by Y. The phase difference measurement reported by the WTRU may be X-Y. The WTRU may report the phase difference and may associate a timestamp with the measurement.

In yet another example, the WTRU may perform and report a difference of phase measurements of PRS (e.g., PRS configured for phase measurement) at configured PRS resources. For example, the WTRU may be configured to report phase difference between a first PRS resource and a second PRS resource. The WTRU may report the phase difference and may associate a timestamp with the measurement.

In yet another example, the WTRU may perform and report a difference in phase measurement of PRS received from different TRPs. For example, the WTRU may be configured to report phase difference between PRS received from TRP 1 and TRP2. The WTRU may report the phase difference and may associate a timestamp with the measurement.

In yet another example, the WTRU may perform and report a difference in phase measurements between receive antennas. For example, the WTRU may be configured to report phase difference between a first receive antenna and a second receive antenna at the WTRU. The phase difference measurement in this case may be associated with a PRS resource at a TRP. The WTRU may perform more than one phase difference measurement. For example, the WTRU may perform phase difference measurements between two receive antennas at the WTRU for a (e.g., each) PRS resource received from more than one TRPs. For example, if PRS is received from five TRPs, the WTRU may perform five phase difference measurements, e.g., one phase difference measurement per TRP. The WTRU may perform double difference phase measurements where the WTRU may report difference between phase difference measurements corresponding to more than one TRP. For example, the WTRU may receive PRS from three TRPs (e.g., TRP1, TRP2, and TRP3). The WTRU may perform phase difference measurements for PRS received from a (e.g., each) TRP (e.g., PD1, PD2 and PD3 where PDi may be the phase difference measurement corresponding to PRS received from TRPi where i may be an integer between 1 and 3). For example, the WTRU may perform double phase difference measurements between TRPs. For example, double differential phase measurements may be expressed as DD1=PD1-PD2 and DD2=PD1+PD2-2*PD3. The WTRU may be configured to report differential phase measurements or double differential phase measurements, e.g., only. In another example, the WTRU may be configured to report (e.g., both) differential phase measurements and double differential phase measurements. In the measurement report, the WTRU may be configured to report index numbers of receive antennas used for the measurements. The WTRU may be configured by the network to indicate whether the same or the same set of receive antennas may be used for measurements compared to the last occasions or measurements of PRSs received from different TRPs.

In yet another example, the reporting information may indicate integer ambiguity. For example, the WTRU may be configured to report integer ambiguity that may be present in the phase measurement. The integer ambiguity in the phase measurement may be due to the inability of the WTRU to determine how many cycles the transmitted PRS completed before reaching the WTRU. The integer ambiguity may be expressed in terms of an integer. The WTRU may be configured to report an (e.g., exact) number and/or range of integer ambiguity where the range may contain lower and higher values of the integer ambiguity. In another example, the WTRU may be configured to return more than one integer values if the WTRU cannot determine an (e.g., exact) number. The (e.g., maximum) number of values that may be reported by the WTRU may be configured by the network.

In yet another example, the reporting information may include an indication for integer ambiguity. In the measurement report for the network (e.g., LMF, and/or gNB), the WTRU may include an indication that the measurement may contain integer ambiguity. For example, given a phase measurement for a PRS resource, the WTRU may indicate that the phase measurement may have an integer ambiguity. In another example, given a phase difference measurement between two PRS resources (or two paths in the multipath channel), the WTRU may indicate that there may be an integer ambiguity in the phase difference measurement. The integer ambiguity may be indicated by a flag (e.g., 1 for existence of integer ambiguity and 0 for no integer ambiguity). For example, the WTRU may perform phase difference measurement between a first PRS resource and a second PRS resource. The WTRU may determine that there may be an integer ambiguity in the measurement and may associate the integer ambiguity indicator with the measurement, for example in response to the WTRU determining that integer ambiguity may be present in the measurement. The WTRU may determine the presence of integer ambiguity in a case where the phase difference is greater or smaller than the (e.g., preconfigured) threshold, compared to a previous instance (e.g., occasion) of phase difference measurement.

In yet another example, the WTRU may perform and report a difference in phase measurements between two antennas for a (e.g., each) path in multi-path channel. The WTRU may perform measurements on the received PRS and may detect multiple paths in the channel where a (e.g., each) path may introduce a delayed version of the transmitted PRS. The WTRU may measure difference in phase measurements between two antennas for a (e.g., each) path in the multi-path channel.

In yet another example, the WTRU may perform and report a difference in phase measurements between two PRS resources. For example, the WTRU may be configured with two PRS resources by the network (e.g., LMF, and/or gNB). For example, a (e.g., each) PRS resource may be mapped to (e.g., associated with) non-overlapping time and frequency resources. The WTRU may perform measurements on the PRS resources and may process difference in phase measurements between the two PRS resources. The WTRU may report the phase difference measurement to the network, associated with a timestamp. The WTRU may be configured with a reference PRS resource or TRP which the WTRU may use for phase difference calculation. In a case where the WTRU is configured with a reference TRP by the network, the WTRU may determine a reference PRS resource received from the TRP and may report (e.g., transmit) to the network (e.g., information indicating) the index number of the PRS resource determined as the reference.

In yet another example, the reporting information may indicate the PRS resource(s) associated with the (e.g., reported) phase measurements (e.g., based on which the phase measurements may have been performed).

### Example of a WTRU Including Duration Information in the Measurement Report

For example, the WTRU may indicate the duration (e.g., in terms of the number of any of OFDM symbols, slots, frames and/or subframes) over which the WTRU may have performed measurements associated with phase measurements. The WTRU may include duration information in the measurement report.

### Example of a WTRU Receiving Conditions for Reporting Carrier Phase Measurement

In an embodiment, a WTRU may receive configuration information indicating one or more conditions from the network to perform carrier phase measurement and reporting for one or more phase-resources and/or one or more pairs of phase-resources. For example, the condition(s) may be based on one or any combination of the following parameters.

In an example, the condition(s) may be based on any of line-of-sight (LOS) and non-line of sight (NLOS) parameters (e.g., values). For example, the WTRU may be configured with the (e.g., minimum) value of LOS/NLOS to perform phase measurement report. The WTRU may be further configured with the maximum and/or minimum number of phase-resources for measurement and reporting based on the value of any of LOS and NLOS parameters (e.g., values).

In an example, the condition(s) may be based on any of a RSRP, a reference signal strength indicator (RSSI) and a reference signal receive quality (RSRQ). For example, the condition(s) may be a signal strength condition, e.g., based on a signal strength value (e.g., any of RSRP, RSSI, RSRQ) associated with a phase resource. For example, the WTRU may be configured with any of the minimum RSRP, RSSI, and/or RSRQ to perform phase measurement reporting. The WTRU may be further configured with the maximum and/or minimum number of phase-resources for measurement and reporting based on the value of any of RSRP, RSRQ and RSSI parameters.

### Example of a WTRU Determining the Phase-Resource to Measure and to Report

In an embodiment, the WTRU may determine whether to perform phase measurement reporting for one or one pair of any of phase-resource(s), PRS resource(s), PRS resource set(s), TRP(s), and frequency layer(s), and/or which phase-resource(s), PRS resource(s), PRS resource set(s), TRP(s), and/or frequency layer(s) to perform phase measurement reporting based on one or any combination of the following examples. In embodiments described herein the expression "one or one pair of any of phase-resource(s), PRS resource(s), PRS resource set(s), TRP(s), and frequency layer(s)" may be used interchangeably with the equivalent expression "a (e.g., pair of) resource(s)".

In an example, the WTRU may determine whether to perform phase measurement reporting for a (e.g., pair of) resource(s) and/or which (e.g., pair of) resource(s) to perform phase measurement reporting based on (e.g., receiving) an indication from network. For example, the WTRU may be configured by the network with the set of phase-resource(s) and/or the set of pairs of phase-resources to report phase measurements. The WTRU may then perform phase measurements and reporting for the set of configured phase-resource(s) and/or pairs of phase-resource(s).

In another example, the WTRU may determine whether to perform phase measurement reporting for a (e.g., pair of) resource(s) and/or which (e.g., pair of) resource(s) to perform phase measurement reporting based on a signal quality such as, e.g., any of a RSRP, a RSSI and/or a RSRQ measurement. For example, the WTRU may perform phase measurement reporting of a phase-resource in a case where any of a RSRP, RSSI and/or RSRQ value of any of the phase-resource, PRS resource, PRS resource set, and/or TRP of the phase-resource satisfies a signal strength condition (e.g., is greater than a threshold). Otherwise, the WTRU may not perform phase measurement reporting of the phase-resource. The signal strength condition (e.g., threshold) may be configured by the network, and may be based on any of the positioning accuracy, latency, and/or integrity (e.g., requirement) of the positioning service. For example, the WTRU may perform phase measurement reporting of a pair of phase-resource in a case where any of the minimum, maximum, average, and any of a RSRP, RSSI and/or RSRQ value of the pair of any of phase-resources, PRS resources, PRS resource sets and/or TRPs of the phase-resource satisfies a signal strength condition (e.g., is greater than a threshold). Otherwise, the WTRU may not perform phase measurement reporting of the phase-resource. The signal strength condition (e.g., threshold) may be configured by the network, and may be based on any of the positioning accuracy, latency, and/or integrity (e.g., requirement) of the positioning service.

In yet another example, the WTRU may determine whether to perform phase measurement reporting for a (e.g., pair of) resource(s) and/or which (e.g., pair of) resource(s) to perform phase measurement reporting based on any of a LOS and NLOS measurement. For example, the WTRU may perform phase measurement reporting of a phase-resource and/or pair of phase resource in a case where any of the LOS and NLOS value of any of the phase-resource, one of the phase-resource of the pair, both phase-resources of the pair, a PRS resource, one PRS resource of the pair, both PRS resources of the pair, a PRS resource set, one PRS resource set of the pair, both PRS resource sets of the pair, a TRP, one TRP of the pair, and both TRPs of the pair satisfies a condition (e.g., is greater than a threshold or is smaller than a threshold); otherwise, the WTRU may not perform phase measurement reporting of the phase-resource and/or pair of phase-resources.

In yet another example, the WTRU may determine whether to perform phase measurement reporting for a (e.g., pair of) resource(s) and/or which a (e.g., pair of) resource(s) to perform phase measurement reporting based on the error bound and/or deviation of phase measurement. For example, the WTRU may perform the phase measurement reporting in a case where the error bound and/or deviation of phase measurement satisfies a condition (e.g., is smaller than a threshold); otherwise, the WTRU may not perform phase measurement reporting. The condition (e.g., threshold) may be configured by the network, and may be based on any of the positioning accuracy, latency, and integrity (e.g., requirement) of the positioning service.

In yet another example, the WTRU may determine whether to perform phase measurement reporting for a (e.g., pair of) resource(s) and/or which (e.g., pair of) resource(s) to perform phase measurement reporting based on whether the phase measurement is within an (e.g., indicated) range. For example, the WTRU may perform the phase measurement reporting in a case where the phase measurement is within a range that may be indicated (e.g., received) from the network; otherwise, the WTRU may not perform phase measurement reporting of the phase measurement.

### Example of a WTRU Determining the Number of Phase-Resource and/or Pairs of Phase Resource to Measure and Report Carrier Phase Measurement

In an embodiment, the WTRU may determine the number of phase-resources and/or pairs of phase-resources to perform phase measurement reporting based on any of a LOS value, a NLOS value, a RSRP value, a RSSI value and/or a RSRQ value of any of the PRS resource, PRS resource set, TRPs, and/or any of a minimum, a maximum, and an average of any of RSRP, RSRQ and/or RSSI of the pair of any of PRS resources, PRS resource sets, and/or TRPs. For example, the WTRU may be configured with the minimum and/or maximum number of phase-resources and/or pairs of phase resources to perform phase measurement reporting based on any of the frequency resources, the subcarrier spacings (SCSs), the number of TRPs associated with the reporting, RSRP/RSRQ/RSSI and/or LOS/NLOS value. For example, the WTRU may then determine the number of phase resources and/or the number of pairs of phase-resources to perform phase measurement reporting based on any of the RSRP, RSRQ, RSSI, LOS NLOS, and/or the configured value(s) accordingly.

### Example of a WTRU Performing Multiple Phase Measurements to Report

In an embodiment, the WTRU may be (pre-)configured to perform phase measurement reporting in any of at least N different frequency resources, at least N SCSs for phase measurement, and at least N different pairs of any of frequency resources and SCSs in a period (N being an integer). For example, the WTRU may determine whether to perform phase measurement reporting and/or which information to report to the network based on whether the number of phase measurement resources satisfies the (pre-)configured condition.

For example, the WTRU may be (pre-)configured to measure in at least three frequency resources for (e.g., each of) one or more TRPs in which, for example, the gap between two frequency resources may be greater than a threshold (e.g., the threshold may be indicated to the WTRU via a LPP message). For example, the WTRU may perform measurement in one or more frequency resources as indicated by the network. The WTRU may indicate to the network (e.g., LMF) phase measurement of at least three frequency resources satisfying the (e.g., indicated) condition(s). Otherwise (e.g., in a case where there are less phase resources satisfying the conditions than the requested number of phase resources), the WTRU may send information to the network indicating that the WTRU may have failed to perform such measurement (e.g., satisfying the condition(s)). In one example, the WTRU may perform multiple phase measurements in different frequency resources from one DL-PRS resource. In another example, the WTRU may perform one phase measurement in a frequency resource of a DL-PRS resource. The WTRU may use multiple DL-PRS resources to measure the (e.g., minimum) indicated (e.g., requested) number of frequency resources. For example, the WTRU may receive an indication from the network to measure one or more DL-PRS resources within a window. The WTRU may respond to this indication, for example, by selecting a window of DL-PRS resources to perform phase measurement, which may be smaller than or equal to the window indicated by the network. This approach may allow to reduce the phase shift of DL-PRS based on longer measurement time.

For example, the WTRU may be (pre-)configured to perform phase measurement in at least two SCSs from one gNB (e.g., using different frequency layers). For example, the WTRU may perform measurement in at least two resources having different SCSs before performing measurement reporting. Otherwise, the WTRU may indicate to the network (e.g., LMF) that the WTRU may have failed to perform such a measurement. This approach may allow the WTRU to report the measurement in multiple time-frequency and/or SCS to reduce integer ambiguity.

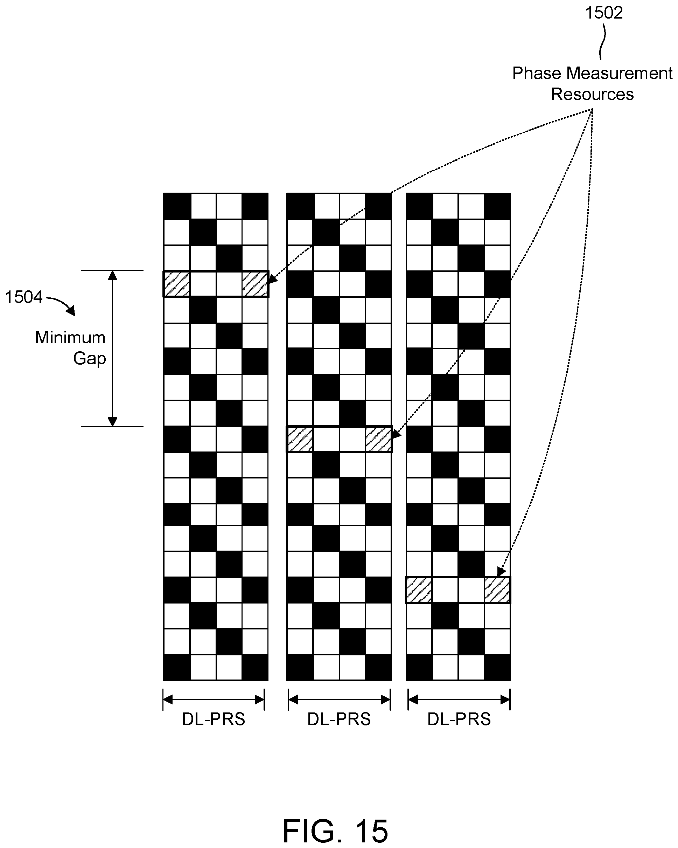

FIG. 15 is a diagram illustrating an example of determination of phase measurement resources in multiple DL-PRS resources. For example, the WTRU may be (pre-)configured to measure phase in at least three frequency resources 1502 separated by a gap 1504 between two frequency resources 1502 that may be equal to or greater than six Res. The WTRU may select three DL-PRS resources 1502 to perform phase measurement. The WTRU may perform phase measurement in resources 1502, in which a (e.g., each) phase measurement may be made in one DL-PRS and the gap 1504 between two phase measurement frequencies may be six Res.

In another example, the WTRU may be (pre-)configured to report multiple measurement parameters. For example, the WTRU may be (pre-)configured to measure any of DpoA and/or PoA, and to measure (e.g., determine) any of a LOS, a NLOS, a RSTD, an AoD, and/or a ToA. The WTRU may perform one or any combination of the following reporting procedures.

In a procedure example, the WTRU may perform DPoA/PoA reporting (e.g., only) in a case where the number of phase measurements in different SCSs and/or frequencies (e.g., in which the gap between two frequencies may be greater than an (e.g., indicated) frequency gap (e.g., threshold)) may satisfy a condition (e.g., being greater than a threshold).

In another procedure example, the WTRU may report (e.g., both) DPoA/PoA and any of LOS/NLOS, RSTD, AoD, and/or ToA in a (e.g., each) phase measurement resource.

In yet another procedure example, the WTRU may report (e.g., both) DPoA/PoA and any of LOS/NLOS, RSTD, AoD, and/or ToA in a case where the number of phase measurement resources satisfies a condition (e.g., is smaller than a threshold).

In yet another procedure example, the WTRU may not perform phase measurement reporting. The WTRU may indicate to the network a failure to measure (e.g., both) LOS/NLOS, RSTD, AoD, and/or ToA and/or DPoA or a failure to measure a certain number of indicated resources (e.g., any of SCSs, and frequencies).

Embodiments described herein may assist the network (e.g., LMF) by providing useful reporting information to improve the location accuracy of the WTRU.

### Example of WTRU Indicating Preferred Phase Measurement Reporting to the Network

In an embodiment, the WTRU may send information indicating a preferred measurement to the network (e.g., via capability reporting). In one example, the WTRU may send information indicating the preference to report (e.g., both) phase measurement (e.g., PoA/DPoA) and time measurement (e.g., ToA) to the network. In another example, the WTRU may send information indicating the preference to report phase measurement (e.g., PoA/DPoA) e.g., only. Based on, e.g., the indicated preference, the WTRU may receive information indicating a configuration of phase measurement reporting. For example, in a case where the WTRU measures (e.g., determines) phase and time measurements (e.g., PoA/DPoA and/or ToA), the WTRU may be configured to measure a smaller number of resources; otherwise, in a case where the WTRU measures (e.g., determines) phase measurements PoA/DPoA e.g., only, the WTRU may measure more resources. Embodiments described herein may allow the network to reduce integer ambiguity in phase measurements by reporting an increased amount of phase measurements.

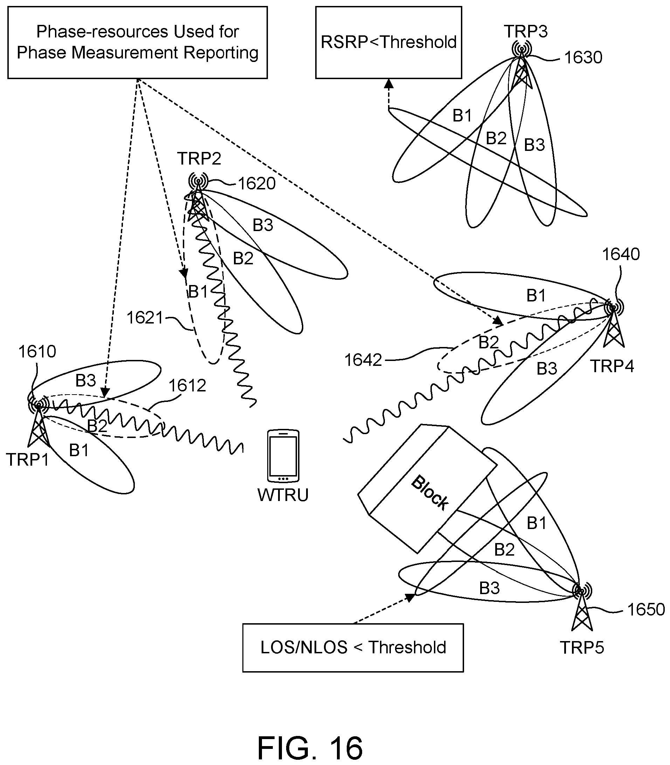

FIG. 16 is a diagram illustrating an example of phase measurement reporting method. For example, the WTRU may determine the (e.g., sub) set of phase-resources to report phase measurement to the network based on any of the RSRP and the LOS/NLOS associated with a (e.g., each) phase resource. For example, the WTRU may receive configuration information indicating a set of phase resources to be used for phase measurements. The WTRU may obtain any of a LOS value, an NLOS value and a RSRP (e.g., signal strength) value for (e.g., associated with) a (each) phase resource of the set of phase resources. The WTRU may determine one or more resources (e.g., the subset) of the set of resources based on whether the one or more resources satisfy any of a LOS condition and a RSRP (e.g., signal strength) condition. For example, the WTRU may be configured by the network to report three beams for phase measurement. The WTRU may be configured to report e.g., at most one beam per TRP. The WTRU may transmit reporting information indicating the phase measurement associated with, for example, a second beam 1612 (B2) of a first TRP 1610 (TRP1), a first beam 1621 (B1) of a second TRP 1620 (TRP2), and a second beam 1642 (B2) of a fourth TRP 1640 (TRP4). The WTRU may not include, in the reporting information, phase measurement for the phase-resource in a third TRP 1630 (TRP3) based on the RSRP (e.g., signal strength) associated with any beam in the third TRP 1630 (TRP3) not satisfying a RSRP (e.g., signal strength) condition (e.g., being smaller than a configured threshold). Similarly, the WTRU may not include, in the reporting information, phase measurement for a fifth TRP 1650 (TRP5) based on an LOS/NLOS value associated with the fifth TRP 1650 (TRP5) not satisfying a LOS condition (e.g., being smaller than a threshold). For example, the WTRU may determine that less than the requested number of phase measurements (e.g., three in this example) may satisfy any of the LOS condition and the RSRP (e.g., signal strength) condition. In such a case, for example, the WTRU may include, in the reporting information, only the phase measurements (e.g., which may be less than the requested number) that may satisfy any of the LOS condition and the RSRP (e.g., signal strength) condition. In another example, the WTRU may transmit an indication that the requested number of phase measurements satisfying any of the LOS condition and the RSRP (e.g., signal strength) condition may not be obtained and may not be reported.

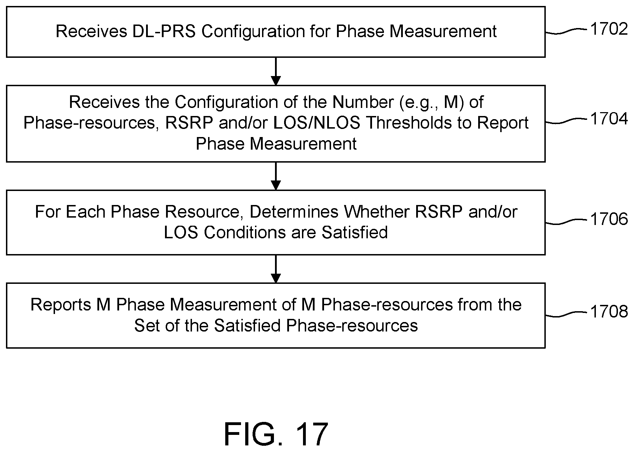

FIG. 17 is a flow diagram illustrating an example of phase measurement reporting procedure. For example, in step 1702, the WTRU may receive configuration information indicating the (e.g., DL-PRS) configuration for phase measurement reporting. The (e.g., DL-PRS) configuration may be, for example, common for (e.g., both) phase measurement and other measurement (such as e.g., RSTD). In another example, the (e.g., DL-PRS) configuration may be (e.g., specific) for phase measurement (e.g., only). For example, the WTRU may receive, at step 1704, configuration information indicating any of the number of phase-resources to report, a LOS condition (e.g., indicating the minimum LOS/NLOS), and a RSRP (e.g., signal strength) condition (e.g., indicating the minimum RSRP) for phase measurement reporting. At step 1706, the WTRU may perform phase measurement from a set of phase-resources. At step 1708, the WTRU may determine M phase resources satisfying any of the LOS/NLOS and RSRP (e.g., signal strength) conditions to report to the network (M being an integer). For example, the WTRU may transmit reporting information indicating at least M phase measurements associated with at least M phase resources satisfying any of the LOS/NLOS and RSRP (e.g., signal strength) conditions. For example, the reporting information may further indicate the at least M phase resources satisfying any of the LOS/NLOS and RSRP (e.g., signal strength) conditions, associated with the reported at least M phase measurements.

### Example of Determination of the Reference for Phase Difference Measurements

In an embodiment, the WTRU may determine a reference to compute a phase difference between two PRSs (e.g., PRS resources) based on at least one of the following examples.

In an example, the WTRU may receive information from the network (e.g., LMF, gNB) indicating a (e.g., specific) PRS resource to be used as the reference.

In another example, the WTRU may determine to use, for phase difference measurement, the same reference used for RSTD computation for DL-TDOA.

In yet another example, the WTRU may determine to use, for phase difference measurement, the same reference used for differential power reporting for DL-AoD and/or DL-TDOA.

In yet another example, the WTRU may determine the reference based on measurements satisfying a condition (e.g., the reference PRS may be the PRS resource with any of the highest RSRP and/or a RSRP above a (e.g., preconfigured) threshold, the reference PRS may be the PRS resource with any of the highest LOS/NLOS and/or a LOS/NLOS value above a (e.g., configured) threshold, in which higher LOS/NLOS value may be equivalent to having higher LOS probability).

In yet another example, phase measurements and/or phase difference measurements for PRS resources received by a positioning reference unit (PRU) may be available to the WTRU via assistance information and the WTRU may use the PRS resource(s) received by the PRU as the reference.

In yet another example, the WTRU may determine a reference to compute a phase difference between two PRSs (e.g., PRS resources) based on a phase error group and/or the phase error associated with the reference. For example, the WTRU may select the reference satisfying a phase error condition (e.g., having the lowest phase error).

In yet another example, the WTRU may determine to use the PRS resource(s) which may be calibrated (through any of antenna, phase and/or power calibration) as the reference(s). The WTRU may receive information from the network indicating that the PRS resource(s) may be calibrated (e.g., by associating a calibration indicator with PRS resource(s)).

In yet another example, the WTRU may determine to use the PRS resource as the reference which may be calibrated (e.g., via any of antenna, phase and/or power) by the WTRU. The WTRU may include an indicator with the measurement in the measurement report (e.g., reporting information), indicating that the reference PRS resource may be calibrated.

In the measurement report (e.g., reporting information), the WTRU may indicate which PRS resource may be used for the reference. The WTRU may associate a phase difference measurement and RSTD measurements in a case where the same reference is used to compute the phase difference and RSTD. For example, the WTRU may compute RSTD between a first PRS resource and a second PRS resource where the first PRS resource may be used as the reference. Using the first PRS resource as the reference, the WTRU may compute phase difference between the first PRS resource and a third PRS resource, for example. For example, the WTRU may associate the phase difference measurements and differential power measurements in a case where the same reference is used.

In example embodiments described herein, the expression "RSTD measurements" may be used interchangeably with "WTRU Tx-Rx time" and/or "gNB Rx-Tx time," where WTRU Tx-Rx time may be referred to the time difference between the time the WTRU may transmit a SRSp/SRS to the network and the time the WTRU may receive PRS from the network, and gNB Rx-Tx time may refer to the time difference between the time the gNB may receive SRSp/SRS from the WTRU and the time the gNB may transmit the PRS to the WTRU.

### Example of Phase Reporting for Multipaths

In one example, in the presence of multipath, the WTRU may determine to report phase difference measurement per path. For example, in a case where the WTRU detects three paths (e.g., first, second and third path), the WTRU may determine to set the first path as the reference and to report phase a difference between PRS received in the first and second path and in the first and third path. In another example, the WTRU may report phase difference between PRS received in the first and second path and in the second and third path.

In another example, the WTRU may determine to use a PRS resource as the reference. For example, the WTRU may receive a first PRS resource and a second PRS resource for which the WTRU may have detected three and two multipaths, respectively. The WTRU may use the phase measurement for the first PRS resource for the first path as the reference. For example, any of the following phase difference measurements may be computed: (i) a phase difference between the first path of the first PRS resource and the first path of the second PRS resource, (ii) a phase difference between the first path of the first PRS resource and the second path of the second PRS resource, (iii) a phase difference between the first path of the first PRS resource and the second path of the first PRS resource, and/or (iv) a phase difference between the first path of the first PRS resource and the third path of first PRS resource.

Similar to the previous examples, the WTRU may determine the reference for multipath reporting based on any of an indication received from the network, a reference used for RSTD, and a reference used for differential power reporting and/or measurements.

The WTRU may associate any of phase measurements and phase difference measurements with RSTD and/or RSRP measurements based on a PRS resource and reference. For example, the WTRU may compute a RSTD value between a first PRS resource and a second PRS resource where the first PRS resource may be used as the reference. Using the first PRS resource as the reference, the WTRU may compute phase difference between the first PRS resource and the second PRS resource, for example. The WTRU may associate the RSTD and phase difference measurements in the measurement report based on using the same pair of reference and PRS resource for the measurements.

### Example of Combining RSTD Reporting with Phase Measurement Reports for Multipath Reporting

In one embodiment, in case of the presence of multiple paths, the WTRU may receive an indication from the network (e.g., LMF, and/or gNB) to report phase measurements per path. Reporting information may include RSTD measurements for multiple paths based on receiving configuration information (e.g., indication) from the network. The WTRU may receive the configuration information (e.g., indication) from the network via any of an LPP message, an RRC message, a MAC-CE and/or DCI.

The WTRU may receive configuration information indicating any of a reference TRP, a reference PRS resource, a target TRP and/or a target PRS resource. The reference TRP and/or reference PRS resource may be used to determine the reference value to calculate any of a RSTD value and a phase difference. For example, the WTRU may be configured with the reference TRP and the WTRU may determine to choose the reference PRS and to report corresponding resource information (e.g., reference PRS resource ID) to the network. In another example, the WTRU may be indicated to determine the reference PRS resource from (pre)configurations (e.g., more than one PRS resource) and may report the reference PRS resource information (e.g., resource ID) to the network.

For example, the WTRU may receive information indicating a reference/target TRP ID and/or PRS resource ID. In a case where multipath channel is observed between the reference TRP/PRS resource and the WTRU, the WTRU may determine to use the first path measured through the reference PRS resource as the reference path. The reference path may be the path used by the WTRU to determine the reference time of arrival or phase value to compute RSTD or phase difference, respectively.

In one example, the WTRU may receive information indicating configurations for target TRP and/or PRS resource(s) indicated by respective IDs (e.g., TRP IDs, PRS resource IDs).

The WTRU may determine the reference path based on at least one of the following. The WTRU may determine the reference path based on a time of arrival satisfying a condition (e.g., the reference path maybe the path with the earliest time of arrival of the reference PRS). The WTRU may determine the reference path based on RSRPP (RSRP per path) satisfying a condition (e.g., the reference path may be the path with the highest RSRPP in the multipath channel). The WTRU may determine the reference path based on a configuration (e.g., indication) received from the network (e.g., the WTRU may be configured to use the second path as the reference path by the network). The WTRU may determine the reference path based on the configuration for a different positioning method. For example, if under the configuration of DL-TDOA, the WTRU is configured to use the reference path as the path with the earliest time of arrival, the WTRU may determine to use the path for computing phase difference.

For example, in a case where PRS is configured or determined to use PRS resource #N (e.g., transmitted from TRP1 which may be the reference TRP) as the reference PRS resource and in a case where three paths are observed, the WTRU may determine to use the first path for the PRS resource #N, as the reference path (e.g., based on time of arrival). With respect to the reference path corresponding to the PRS resource #N, the WTRU may determine to compute phase difference measurement.

For example, the WTRU may compute a difference in phase between the first path measurement of phase (e.g., phase measured from the signal that may be received via the first path in the multipath channel) for PRS resource #N and PRS resource #M transmitted from TRP2, where TRP2 may be the target TRP and PRS resource #M may be the target PRS. In a case where PRS resource #M transmitted from TRP2 goes through multipath paths, the WTRU may determine to compute a difference in phase between the first path measurement of phase for PRS resource #N and first path measurement of phase for PRS resource #M transmitted from TRP2.

For the remaining paths, e.g., inter-path reporting, the WTRU may be configured to report phase difference with respect to the first path. For example, in a case where three paths are observed for PRS resource #N transmitted from TRP1, the WTRU may determine to report difference in phase among the paths. For example, the WTRU may report difference in phase between the first path and second path, first path and third path, etc., for PRS resource #N. Inter-path reporting may allow the WTRU to avoid computing phase-difference measurements between paths for reference and target PRS resource(s), thereby reducing computation time.

The aforementioned inter-path reporting may be applicable to any of target PRS resources and reference PRS resources. For example, in a case where multipath paths are measured through the target PRS, the WTRU may determine to report any of absolute phase measurement and phase difference measurements based on the aforementioned criteria. In one example, for PRS resource #M transmitted from TRP2 (e.g., target TRP), in a case where the WTRU observes multiple paths for PRS resource #M, the WTRU may determine to include inter-path reporting for PRS resource #M (e.g., the WTRU may report the difference in phase between the first path and the second path, first path and third path, etc.).

In another example, the WTRU may report absolute phase for the second and third path. The WTRU may be configured or indicated by the network to measure and report differential phase among paths or absolute phase for a (e.g., each) path.

In another example, the WTRU may determine to report differential or absolute phase among paths based on time difference between a (e.g., each) path.

For example, in a case where the time difference between two paths (e.g., between the first and second paths) satisfies a first condition (e.g., is greater than a (e.g., preconfigured) threshold), the WTRU may determine to report absolute phase for each path (e.g., at least for first and second paths). In a case where the time difference satisfies a second condition (e.g., is less than or equal to a (e.g., preconfigured) threshold), the WTRU may determine to report phase difference between two paths (e.g., at least for first and second paths).

In another example, in a case where the time difference between two paths (e.g., between the first and second paths) satisfies a third condition (e.g., is smaller than a (e.g., preconfigured) threshold), the WTRU may determine to report absolute phase for a (e.g., each) path (e.g., at least for the first and second paths). In a case where the time difference is greater or equal to the (e.g., preconfigured) threshold, the WTRU may determine to report phase difference between the two paths (e.g., at least for the first and second paths).

The WTRU may determine the configurations described herein based on the configurations for a different positioning method (e.g., DL-TDOA). For example, the WTRU may determine a PRS resource ID for reference or reference path based on determining the reference PRS resource/path for DL-TDOA.

### Example of Clustered Phase Reporting

In one embodiment, for WTRU-assisted positioning (e.g., the WTRU reporting measurements to the network), the WTRU may determine to measure phase of more than one target PRS resource(s) (e.g., a group of target PRS resources) and may report phase difference(s) between the reference PRS resource and the target resources. For example, the WTRU may determine to use PRS resource #N received from TRP1 (reference TRP) as the reference PRS resource. The WTRU may determine to measure phase of PRS resource #M and #M+1 received from TRP2 (target TRP) as the target resources. The WTRU may compute two phase differences, namely between PRS resource #N and PRS resource #M, and between PRS resource #N and PRS resource #M+1.

The WTRU may determine a group of the target PRS resource(s) based on information (e.g., indication/configuration/request) received from the network. In an example, the WTRU may receive information from the network indicating to use PRS resource #M and #M+1 as target PRS resources.

In another example, the WTRU may determine a group of the target PRS resource(s) based on the number of target PRS resources the WTRU may be configured to select and the WTRU may determine to choose them, e.g., on its own. After phase measurements may be completed, the WTRU may determine to report phase difference measurements and may include target PRS resource information (e.g., target PRS resource IDs) in the reporting information.

In another example, the WTRU may determine the target PRS resource based on the target PRS resource for DL-TDOA (e.g., the same target PRS resource as in DL-TDOA). For example, the WTRU may determine additional target PRS resource(s) based on the configured number of target PRS resource(s) in a group, e.g., N. For example, in a case where the WTRU determines to use PRS resource #M as the target PRS resource, the WTRU may determine to additionally measure phase of PRS resource #M+1 to PRS#M+N-1 and may compute the respective phase difference with respect to the reference PRS resource.

In one example, the WTRU may determine to select additional target PRS resource(s) in a case where relative RSRP or RSRPP compared to the default target PRS resource satisfies a condition (e.g., is larger than a threshold). The WTRU may select up to the configured number of additional target PRS resource(s).

In the above examples, the converse may be applicable. For example, the WTRU may receive information (e.g., configuration/indication/request) from the network indicating to perform measurements on more than one reference PRS resource(s) for configured or indicated target PRS resources. In example embodiments described herein, "reference PRS resource" and "target PRS resource" or "reference TRP" and "target TRP" may be used interchangeably. The measurement reports from the WTRU may be sent via higher layer signaling (e.g., any of an RRC message, an LPP message). For example, information (e.g., configurations and/or indication) received from the network (e.g., LMF, and/or gNB) may be received in higher layer signaling (e.g., any of an RRC message, and/or an LPP message) and/or lower layer signaling (e.g., any of DCI, and/or MAC-CE). Indications from the WTRU may be sent in lower layer signaling (e.g., any of UCI, and/or MAC-CE).

### Examples of Whether or not to Report Phase Measurements in addition to Other Measurements

In one embodiment, for WTRU-assisted/based positioning methods, the WTRU may determine the target PRS resource based on a positioning method (e.g., DL-TDOA). In addition to the measurements for the positioning method (e.g., RSTD for DL-TDOA, RSRP for DL-AoD), the WTRU may determine to measure and report the phase difference measurement for the target PRS resource in a case where at least one condition is satisfied. For example, the WTRU may determine to measure and report the phase difference measurement for the target PRS resource in a case where the WTRU receives information (e.g., an indication/configuration) from the network. The WTRU may determine to measure and report the phase difference measurement for the target PRS resource in a case where any of a RSRP and a RSRPP corresponding to the target PRS resource satisfy a condition (e.g., is above a (e.g., preconfigured) threshold. The WTRU may determine to measure and report the phase difference measurement for the target PRS resource in a case where a soft or hard LOS indicator determined by the WTRU (e.g., or the network) is above a (e.g., preconfigured) threshold, associated with target and/or reference PRS resource or TRP.

### Examples of Conditions to Report Phase-only Measurements

In an embodiment, the WTRU may determine to report only phase measurements (e.g., phase difference measurements, and/or absolute phase measurements) to the network. The WTRU may receive information from the network indicating (e.g., requesting) to report only phase measurements to the network. In another example, the WTRU may determine to report only phase measurements in a case where phase ambiguity is not present in the phase difference measurements. The WTRU may determine the presence of phase ambiguity based on at least one of the following. In one example, the WTRU may determine the presence of phase ambiguity based on indication received from the network. In another example, the WTRU may determine the presence of phase ambiguity in the measurements. In another example, the WTRU may determine that phase ambiguity is not present in the phase measurements in a case where RSTD corresponding to the target and reference PRS resource satisfies a condition (e.g., is below or equal to the threshold).

In another example, the WTRU may determine to report only phase measurements to the network in a case where assistance information indicated by the network satisfies a condition (e.g., is below/above/equal to a (e.g., preconfigured) threshold). For example, if expected RSTD corresponding to a reference and/or target TRP/PRS resource is below the (e.g., preconfigured) threshold, the WTRU may determine to report only phase measurements to the network. In another example, if uncertainty of RSTD is below the threshold, the WTRU may determine to report only phase measurements to the network.

### Example of Prioritization of Measurements

The WTRU may receive information indicating configurations for a PRS processing window during which the WTRU may receive priority of PRS compared to other DL channels (e.g., PDCCH, PDSCH). The configuration of the window may include any of a duration of the window (e.g., in terms of any of slots, symbols, frames, seconds/minutes/hours), start/end time of the window, and a periodicity of the window. In a case where the priority associated with PRS is higher than the DL channels, the WTRU may determine to receive PRS, perform measurements, and process measurements in a case where PRS symbols and DL channels overlap in time and/or frequency domain.

In one embodiment, the WTRU may receive separate priorities for phase measurements, RSTD measurements, and other measurements (e.g., RSRP). For example, the WTRU may receive higher priority for RSTD measurements and lower priority for phase measurements compared to other channels. In this case, the WTRU may determine to receive PRS (e.g., target and reference PRS), may perform (e.g., only) RSTD measurements and may send the measurement report containing the measurements to the LMF.

In another example, the WTRU may receive higher priority for RSTD measurements and higher priority for phase measurements compared to other channels. In this case, the WTRU may determine to receive PRS (e.g., target and reference PRS) may perform (e.g., both) phase (e.g., phase difference or absolute phase) and RSTD measurements and may send the measurement report containing the measurements to the LMF.

In another example, the WTRU may receive lower priority for RSTD measurements and higher priority for phase measurements compared to other channels. In this case, the WTRU may determine to receive PRS (e.g., target and reference PRS), may perform (e.g., only) phase measurements and may send the measurement report containing the measurements to the LMF.

In another example, the WTRU may receive lower priority for RSTD measurements and lower priority for phase measurements, compared to other channels. In this case, the WTRU may determine to receive other channels and process other channels, e.g., instead of receiving and/or performing measurements on PRS.

### Example of Granularity of Phase Reporting

The WTRU may report phase difference measurements and/or absolute phase measurements based on a (e.g., configured) granularity. The WTRU may receive granularity configuration information from the network. For example, the WTRU may be configured to report phase in the granularity of 0.1 degrees or 1 degree based on WTRU capability reported by the WTRU to the network. In another example, the phase may be expressed in radians (e.g., between 0 and 2π), and the WTRU may receive configurations for different granularities for reporting. In another example, phase measurements (e.g., phase difference, absolute phase) may be expressed in terms of distance (e.g., meters, centimeters, millimeters) or time (e.g., seconds, slots, symbols, frames).

### Example of Uncertainty Reporting

In one embodiment, for WTRU-assisted or WTRU-based positioning (e.g., the WTRU determining its position without returning measurements to the network), the WTRU may determine to associate uncertainty metrics with measurements to indicate the presence of uncertainty in measurements (e.g., absolute phase measurements, and/or phase difference measurements). The WTRU may determine to associate the uncertainty metrics with the measurements based on at least one of the following conditions. For example, the WTRU may determine to associate the uncertainty metric with measurements in a case where the WTRU receives information (e.g., an indication/configuration/request) from the network indicating to associate uncertainty metrics with measurements. In another example, the WTRU may determine to associate the uncertainty metric with measurements in a case where the uncertainty metric satisfies a condition (e.g., is above a (e.g., preconfigured) threshold).

Examples of uncertainty metrics include any of the following. In one example, RX PEG ID may be associated with measurements. PEG may be defined for (associated with) a range of phase measurement uncertainties (e.g., expressed in terms of degrees, distance). An example of range may be upper and lower bounds, expressed in terms of degrees and distance. The WTRU may receive pre-configuration information for ranges for PEG, where different PEG IDs may correspond to different ranges. Another example of an uncertainty metric may be a range of uncertainty in measurements or statistical properties of measurements (such as e.g., standard deviation, and/or mean). Another example of an uncertainty metric may be the rate of change in phase (e.g., degrees/radians per second).

The WTRU may include in reporting information Rx phase error group (RX PEG) information (e.g., PEG ID) and may associate the PEG ID with the measurement (e.g., phase difference measurement). For example, RX PEG ID may be associated with a receiving panel at the WTRU side. An example of a receiving panel may be a panel or an antenna array with antenna elements. The WTRU may comprise more than one panel or antenna array to receive downlink reference signals. For example, an (e.g., each) antenna panel or antenna array may have different characteristics in hardware, such as frequency response of a filter or amplification, affecting quality of measurements at the WTRU. The WTRU may report which panel may be used to receive PRS from the network. The WTRU may associate RX PEG ID with the measurement and may report the association to the network, for example, in a case where the WTRU receives a request form the network to report the RX PEG ID. The WTRU may also report RX PEG ID periodically. In periodic reporting, the WTRU may report RX PEG ID (e.g., only) in case of a change compared to the last reported RX PEG ID. The WTRU may include a timestamp of the occasion when the WTRU may report RX PEG ID in periodic reports. In a case where there is no change to the RX PEG ID, the WTRU may not include the RX PEG ID in the reporting information.

In one example, the WTRU may indicate in the reporting information that RX PEG ID and RX TEG ID may be equivalent, thereby indicating that the phase error group may be contained within a timing error group, allowing the network to perform double-differential processing of phase measurements associated with the RX TEG ID.

### Examples of Conditions for Phase Difference Measurements

The WTRU may determine to report any of phase difference measurements and phase measurements per any of PRS resource and path based on an indication received from the network. The WTRU may compute phase difference between PRS resources and/or paths in response to one or combination of the following conditions being satisfied.

In an example, the WTRU may determine phase difference between PRS resources and/or paths in a case where the associated expected RSTD between the pair of PRS resources is smaller than a (e.g., preconfigured) threshold, where the expected RSTD may be provided (e.g., indicated) by the network in the assistance information.

In another example, the WTRU may determine phase difference between PRS resources and/or paths in a case where the associated expected RSTD between the pair of PRS resources is larger than a (e.g., preconfigured) threshold, where the expected RSTD may be provided (e.g., indicated) by the network in the assistance information.

In yet another example, the WTRU may determine phase difference between PRS resources and/or paths in a case where a RSRP of the corresponding PRS resource(s) is larger than a (e.g., preconfigured) threshold.

In yet another example, the WTRU may determine phase difference between PRS resources and/or paths based on whether phase/antenna calibration may have been performed for the PRS resource(s) (e.g., completion of phase/antenna calibration may be indicated in the assistance information provided by the network).

In yet another example, the WTRU may determine phase difference between PRS resources and/or paths based on whether any of phase and phase difference measurements made by PRU(s) may be available at the WTRU.

In yet another example, the WTRU may determine phase difference between PRS resources and/or paths based on whether phase impairments (such as e.g., any of phase noise/Doppler/oscillator, drift/phase, error/phase, center offset) is below or equal to a (e.g., preconfigured) threshold.

In one example, the WTRU may include phase difference measurements in the measurement report in a case where one or a combination of the above conditions is satisfied. In a case where none of the above conditions are satisfied, the WTRU may omit the phase difference measurement in the measurement report. In another example, the WTRU may include phase difference measurements in the measurement report in a case where none of the above conditions are satisfied. The WTRU may include phase measurement in the report in a case where none, one, or any combination of the above conditions are satisfied. In another example, the WTRU may not include phase measurement in the report in a case where none, one, or any combination of the above conditions is satisfied.

### Example of Determining which Phase-Resource and/or which Pairs to Perform Phase Measurement Reporting

The WTRU may determine which phase-resource(s) to perform phase measurement reporting based on any of the RSRP/RSRQ/RSSI and/or LOS/NLOS value associated with the phase-resource. For example, the WTRU may perform phase measurement reporting of N phase-resources satisfying a first signal strength condition (e.g., having the highest RSRP/RSRQ/RSSI) and/or satisfying a first LOS condition (e.g., highest LOS/NLOS values). In another example, the WTRU may perform phase measurement reporting of the first (e.g., measured) N phase-resources satisfying a second signal strength condition and/or a second LOS condition (e.g., having RSRP/RSRQ/RSSI and/or LOS/NLOS being greater than a threshold). In another example, the WTRU may (e.g., randomly and/or selectively) perform phase measurement reporting of N phase-resources satisfying a signal strength condition and/or a LOS condition (e.g., having RSRP/RSRQ/RSSI and/or LOS/NLOS value being greater than a threshold).

The WTRU may determine which pairs of phase-resources to perform phase measurement reporting based on any of minimum, maximum, and/or average RSRP and/or LOS/NLOS value of the pair of phase-resources. For example, the WTRU may perform phase measurement reporting of N pairs of phase-resources having any of the highest minimum, maximum, and average RSRP/RSRQ/RSSI and/or LOS/NLOS values. In another example, the WTRU may perform phase measurement reporting of the first N pairs of phase-resources having any of minimum, maximum, and/or average RSRP/RSRQ/RSSI and/or LOS/NLOS being greater than a threshold. In another example, the WTRU may (e.g., randomly and/or selectively) perform phase measurement reporting of N pairs of phase-resources having RSRP/RSRQ/RSSI and/or LOS/NLOS value being greater than a threshold. The threshold may be configured, which may be based on the RSRP/RSRQ/RSSI and/or LOS/NLOS values of any of the PRS resource, PRS resource set, TRP, pair of PRS resources, PRS resource sets, and/or pair of TRPs.

### Example of Determining which Path to Report Phase Measurement Reporting

In an embodiment, the WTRU may be configured to perform measurement reporting of N paths. The WTRU may determine which path to include the phase measurements in the reporting information. In an example, the WTRU may include phase measurements in the reporting information for the first path. In another example, the WTRU may include the phase measurement of the path having highest RSRP. In yet another example, the WTRU may include the phase measurements of the first path and the path having the highest RSRP/RSSI/RSRQ.

In an embodiment, the WTRU may further determine whether to include the phase measurement in one path based on the RSRP and/or LOS/NLOS value associated with the path. For example, in a case where RSRP and/or LOS/NLOS of the path is greater than a threshold; the WTRU may include the phase measurement in the reporting information. Otherwise, the WTRU may not include the phase measurement in the reporting information.

### Example of Uncertainty in Measurements

In one example, due to Doppler spread or shift, the center frequency of the transmitted PTRS for phase measurement may be shifted. For example, in a case where such conditions are expected, the WTRU may receive information indicating a range of any of resource elements, RBs, bands, carriers, subcarriers, CCs from the network (e.g., LMF, and/or gNB) to measure the transmitted PTRS. In the measurement report, the WTRU may indicate a range of any of resource elements, RBs, bands, carriers, subcarriers, and/or CCs where the WTRU may have discovered (e.g., received) the PRS. In another example, the WTRU may indicate an index for any of a resource element, an RB, a band, a carrier, a subcarrier and/or a CC where the WTRU may have discovered (e.g., received) the PRS.

### Example of Performing Phase Measurement and Reporting in a Set of Phase-Resources

**In** an embodiment, the WTRU may perform phase measurement and reporting in a set of phase-resources. For example, the WTRU may be (pre-)configured with a set of DL-PRS resources (e.g., any of RE, PRB, a range of PRBs), which may include multiple phase-resources (e.g., multiple subcarriers, REs, and/or PRBs). The WTRU may perform phase measurement and reporting in a set of phase-resources (e.g., a set of subcarriers). For example, the WTRU may perform phase measurement in a set of consecutive phase-resources (e.g., consecutive subcarriers). In an example, the WTRU may send information to the network indicating the first phase-resource and the number of phase-resources used for phase measurement and reporting. In another example, the WTRU may indicate the ID associated with a (e.g., each) phase-resource used for phase measurement and reporting. The WTRU may, for a (e.g., each) phase-resource, report the phase measurement of a (e.g., each) phase-resource in the phase measurement reporting. In another example, for a (e.g., each) subcarrier, the WTRU may report the phase difference between the phase-resource and a reference phase-resource. The WTRU may be configured to measure a (e.g., minimum) number of phase-resources in a set of configured phase resources. The WTRU may determine the set of phase-resources to measure and report satisfying the (e.g., minimum) number of phase resource condition.

### Example of Determining the Reference Phase-Resources for the Phase Measurement Reporting

In one example, the WTRU may select one reference phase-resource for all phase-resources. In another example, for a (e.g., each) phase-resource, the WTRU may select one reference phase-resource. The WTRU may determine the reference phase-resource for one or more phase-resources based on one or any combination of the following examples.

In an example, the WTRU may determine the reference phase-resource as the first phase-resource in the list of reporting phase-resources. For example, the WTRU may determine to report phase measurement for a set of (e.g., consecutive) phase-resources (e.g., the set of consecutive subcarriers in a DL-PRS resource). The WTRU may then use the first subcarrier as the reference phase-resource.

In another example, the WTRU may determine the reference phase-resource as the last phase-resource in the list of reporting phase-resources.

In yet another example, the WTRU may determine the reference phase-resource as the center phase-resource (e.g., the center subcarrier, the Direct Current (DC) subcarrier) in the list of reporting phase-resources.

In yet another example, the WTRU may determine the reference phase-resource as the adjacent phase-resource. For example, the WTRU may select one reference phase-resource to report phase measurement of a phase-resource. The WTRU may use the previous phase-resource as the reference for the next phase-resource. For example, the WTRU may use the first phase-resource as the reference for the second phase-resource and the second phase-resource as the reference for the third phase-resource, etc.

In yet another example, the WTRU may determine the reference phase-resource based on an indication received from the network. In a first example, the WTRU may receive an indication from the network, indicating the reference (e.g., reference phase) using information from PRS configuration (e.g., a time stamp, frequency layer ID, PRS resource ID, etc.). In a second example, the WTRU may receive an indication to use the same reference used for other measurements (such as e.g., any of RSTD, and/or power difference). For example, the WTRU may receive an indication from the network to use the same reference used to derive RSTD. In another example, the WTRU may receive an indication from the network to use the same reference to derive power difference.

### Example of Determining whether to Report Phase Measurement of a Phase-Resource Based on the Reference Phase-Resource.

In an embodiment, the WTRU may be configured with a reference (e.g., any of a reference phase-resource, a reference TRP, and/or antenna) to report phase measurement of a phase-resource. The WTRU may determine whether to report the phase measurement based on the measurement of the reference (e.g., any of a reference phase resource, a reference TRP, and/or antenna). For example, the WTRU may determine whether to report the phase measurement of the phase-resource based on one or any combination of the following examples of measurement of the reference.

In an example, the WTRU may determine whether to report the phase measurement of the phase-resource based on an RSRP of the reference phase resource. For example, the WTRU may be configured with a RSRP condition (e.g., a minimum RSRP) for a reference for phase measurement reporting of other phase-resource(s). The WTRU may then determine whether to report the phase measurement of a phase resource based on whether the RSRP of the reference satisfies the RSRP condition (e.g., is greater than a threshold). For example, if the RSRP of the reference is greater than a threshold, the WTRU may report the phase measurement associated with the phase-resource. Otherwise, the WTRU may not report the phase measurement. The WTRU may indicate to the network the RSRP measurement of the reference, which may allow the network to configure a different reference.

In another example, the WTRU may determine whether to report the phase measurement of the phase-resource based on an LOS/NLOS value associated with the reference phase resource. For example, the WTRU may be configured with LOS condition (e.g., a minimum LOS/NLOS value, e.g., a LOS/NLOS value of 1 may indicate that the signal may be LOS) for a reference for phase measurement reporting of other phase-resource(s). The WTRU may determine whether to report the phase measurement of a phase resource based on whether the LOS/NLOS of the reference satisfies the LOS condition (e.g., is greater than a threshold). For example, in a case where the LOS/NLOS value associated with the reference is greater than a threshold, the WTRU may report the phase measurement associated with the phase-resource. Otherwise, the WTRU may not report the phase measurement. The WTRU may send information to the network indicating the LOS/NLOS value associated with the reference, which may allow the network to configure a different reference. In one example, the LOS/NLOS indicator may be configured by the network per any of PRS resource, phase resource, and TRP. The WTRU may determine the LOS/NLOS value for the reference based on the LOS/NLOS indicator associated with any of a PRS resource, phase resource and TRP. For example, the WTRU may determine an association between the reference and any of a PRS resource, phase resource and TRP based association information received from the network. In another example, the WTRU may report and/or indicate to the network the LOS/NLOS indicator per any of PRS resource, phase resource, and/or TRP.

**In** yet another example, the WTRU may determine whether to report the phase measurement of the phase-resource based on the phase measurement of the reference phase resource. For example, the WTRU may be configured (e.g., indicated) with a range of the phase values associated with the reference for phase measurement reporting of other phase resource(s). The WTRU may determine whether to report the phase measurement of a phase-resource based on whether the phase value of the reference is within the indicated range. For example, in a case where the phase measurement of the reference is within the configured (e.g., indicated) range, the WTRU may report the phase measurement associated with the phase-resource. Otherwise, the WTRU may not report the phase measurement. The WTRU may send information to the network indicating the phase measurement value of the reference, which may allow the network to configure a different reference. In a case where the WTRU determines its phase measurement range, the WTRU may indicate the phase measurement value and the expected phase range of the reference, which may allow the network to change the reference.

In yet another example, the WTRU may determine whether to report the phase measurement of the phase-resource based on a phase offset error associated with the reference. For example, the WTRU may be configured with a phase error condition (e.g., maximum phase offset error associated with the reference) for phase measurement reporting of other phase-resource(s). The WTRU may determine whether to report phase measurement of a phase-resource based on whether the phase offset error satisfies the phase error condition (e.g., is greater than the threshold). For example, the WTRU may report the phase measurement of the phase resource in a case where the phase offset error associated with the reference satisfies the phase error condition (e.g., is greater than the threshold). Otherwise, the WTRU may not report the phase measurement. The WTRU may send to the network information indicating the phase offset error associated with the reference, which may allow the network to configure a different reference.

In yet another example, the WTRU may determine whether to report the phase measurement of the phase-resource based on an availability of other measurements (e.g., any of RSRP, RSTD, LOS/NLOS, AoD, AoA, Tx-Rx timing difference), which may belong to the same carrier phase positioning method or another positioning method, associated with the phase-resource. For example, the WTRU may be configured to perform carrier phase and TDOA positioning methods. The WTRU may be configured to report carrier phase of one or more phase-resources and RSTD. The WTRU may determine whether to report one parameter based on the availability of another parameter. For example, the WTRU may determine whether to report carrier phase based on whether the WTRU has obtained RSTD. For example, the WTRU may report carrier phase of one or more phase-resources in a case where the WTRU has obtained RSTD. Otherwise, the WTRU may not report carrier phase.

### Example of Determining whether to Add Another Measurement in a Phase Measurement Reporting

In an embodiment, the WTRU may perform one measurement reporting (e.g., carrier phase measurement). The WTRU may determine whether to add another measurement (e.g., any of RSRP, RSTD, AoA, AoD, Tx-Rx) in reporting information based on one or any combination of the following examples.

In an example, the WTRU may determine whether to add another measurement than a phase measurement in reporting information based on the availability of the measurement, which may be determined based on the number of resources used for a measurement. For example, the WTRU may opportunistically add the measurement of the parameter in a case where it is available. The WTRU may add any of RSRP, RSTD, AoA, AoD, and/or Tx-Rx if any is available.

In another example, the WTRU may determine whether to add another measurement than a phase measurement in reporting information based on whether the measurement value (e.g., RSRP, RSTD, AoA, AoD, Tx-Rx) is within a range, which may be indicated (e.g., configured) by the network. For example, the WTRU may add the RSRP in the measurement reporting of the carrier phase in a case where the RSRP is larger than a threshold. The threshold may be configured by the network.

In another example, the WTRU may determine whether to add another measurement than a phase measurement in reporting information based on receiving information from the network indicating to associate the phase measurement with another measurement. For example, the WTRU may receive information from the network indicating to associate RSTD measurement and phase difference measurement. The WTRU may determine to associate RSTD measurements with phase measurements. The WTRU may determine to use the same set of PRS resources used to derive RSTD measurements to measure phase measurements/phase difference measurement (e.g., difference in phase between the reference PRS resource and another PRS resource).

### Example of Determining whether to Add Phase Measurement in Another Measurement Reporting]

In an embodiment, the WTRU may perform one measurement reporting (e.g., RSRP, RSTD, AoA, AoD, Tx-Rx). The WTRU may determine whether to add carrier phase measurement based on one or any combination of the following examples of conditions.

In an example, the WTRU may add carrier phase measurement based on the availability of the carrier phase measurement, which may be determined based on the number of resources used for a measurement.

In another example, the WTRU may determine whether to add carrier phase measurement based on whether carrier phase measurement may be within a range. For example, the WTRU may add the carrier phase in measurement reporting information of the other measurement report in a case where the carrier phase is within a (e.g., configured, indicated range.

In another example, the WTRU may determine whether to add carrier phase measurement based on whether the (e.g., other) measurement value may be within a range. For example, the WTRU may add the carrier phase measurement in a LOS/NLOS report based on whether the LOS/NLOS value is larger than a threshold. For example, the WTRU may add carrier phase measurement in the LOS/NLOS report in a case where the LOS/NLOS value is larger than a threshold; otherwise, the WTRU may not add the carrier phase measurement in the LOS/NLOS report. For example, the WTRU may add carrier phase measurement in a RSRP measurement report if RSRP is larger than a threshold; otherwise, the WTRU may not add carrier phase measurement in the RSRP measurement report.

### EXAMPLES OF METHODS FOR ASSISTANT INFORMATION REPORTING

Examples of methods for sending assistant information reports are described herein.

### Example of PEG

Tx phase error is described herein. From a signal transmission perspective, there may be phase error (e.g., any of a shift, an offset, a drift) from a first phase at a first time when the digital signal may be generated at a baseband level to a second phase at a second time when the RF signal may be transmitted from the Tx antenna. For supporting positioning, any of a WTRU and a TRP may perform an internal calibration (e.g., compensation) of the Tx phase error (e.g., any of a shift, an offset, a drift) for the transmission of any of the DL PRS and UL SRS signals, which may e.g., include the calibration (e.g., compensation) of the relative phase error (e.g., any of a shift, an offset, a drift) between different RF chains in the same transmission/reception point (TRP) and/or WTRU. The compensation may, for example, consider the offset of the Tx antenna phase center to the physical antenna center. Any remaining Tx phase error (e.g., any of a shift, an offset, a drift) after the calibration, or the uncalibrated Tx phase shift may be referred to herein as a Tx phase error.

Rx phase error is described herein. From a signal reception perspective, there may be phase error (e.g., any of a shift, an offset, a drift) from a first phase at a first time when the RF signal may reach the Rx antenna to a second phase at a second time when the signal may be digitized and time-stamped at the baseband level. For supporting positioning, any of a WTRU and a TRP may perform an internal calibration (e.g., compensation) of the Rx phase error (e.g., any of a shift, an offset, a drift) before reporting the measurements that may be obtained from any of the DL PRS and UL SRS signals, which may e.g., include the calibration (e.g., compensation) of the relative time delay between different RF chains in the same TRP and/or WTRU. The compensation may also, for example, consider the offset of the Rx antenna phase center to the physical antenna center. Any remaining Rx phase delay after the calibration, or the uncalibrated Rx phase delay may be referred to herein as Rx phase error.

For example, a WTRU Tx phase error group (PEG) may be associated with the transmissions of one or more UL SRS resources for the positioning purpose, which may have Tx phase errors within a (e.g., certain) margin.

A TRP Tx 'phase error group' (TRP Tx PEG) is described herein. A TRP Tx PEG may be associated with the transmissions of one or more DL PRS resources, which may have Tx phase errors within a (e.g., certain) margin.

A WTRU Rx 'phase error group' (WTRU Rx PEG) is described herein. A WTRU Rx PEG may be associated with one or more DL measurements, which may have Rx phase errors within a (e.g., certain) margin.

TRP Rx 'phase error group' (TRP Rx PEG) is described herein. A TRP Rx PEG may be associated with one or more UL measurements, which may have Rx phase errors within a margin.

### Example of a WTRU Indicating the Type of Error for PEG

In an embodiment, the WTRU may report PEG information to the network. The WTRU may include the type of PEG error. For example, the PEG information may indicate whether the PEG is due to phase shift or phase drift.

In an example, the WTRU may perform periodic PEG reporting, which may be associated with other measurement reporting. The WTRU may indicate PEG information in a case where the PEG has changed compared to the previous reporting. Otherwise (e.g., in a case where the PEG remained the same compared to the previous reporting, the WTRU may not indicate the PEG information (e.g., may not include PEG reporting information in the periodic reporting). The PEG information may indicate the timestamp, in which PEG was changed. In another example, the WTRU may perform event-triggered PEG reporting. For example, the WTRU may trigger PEG reporting based on one or any combination of the following events (e.g., conditions being satisfied).

In an example, the WTRU may transmit PEG reporting information in a case where the WTRU has changed its PEG, e.g., from a first PEG to a second PEG between a first PRS transmission/reception and a second PRS transmission/reception. For example, the WTRU may change PEG to perform PRS transmission/reception.

In another example, the WTRU may transmit PEG reporting information in a case where the difference in PEG between the current and the last PEG satisfies a condition (e.g., is greater than a value (e.g., a threshold)).

In yet another example, the WTRU may transmit PEG reporting information in a case where any condition to report phase measurements is satisfied.

### Example of a WTRU Reporting PEG at the Same Time with TEG

In an embodiment, the WTRU may determine whether to report PEG information based on whether TEG may be available. For example, the WTRU may determine to report PEG and TEG within a period. The WTRU may drop PEG reporting (e.g., in a period) in a case where no TEG is reported (e.g., in the period). This embodiment may allow the network to get relevant information to execute the positioning algorithm.

### Examples of Measurements Associated with PEG

In an embodiment, the WTRU may determine to associate different types of measurements and/or PRS resources with PEG. For example, the WTRU may determine to associate PEG with PRS resource(s). The WTRU may report the association between WTRU Rx PEG and PRS resources to the network based on any of UCI, UL-MAC-CE, RRC, and LPP messages. For WTRU-based or WTRU-assisted positioning, the WTRU may send a request to the network for association between PRS resource(s) and TRP Tx PEG(s). The WTRU may receive the requested association information from the network by any of DCI, DL-MAC-CE, RRC, and LPP messages. The type of message by which the WTRU may receive the requested association information from the network (e.g., RRC, LPP message) may depend on the type of positioning method used at the network. For example, for DL-only positioning methods, where the WTRU may perform measurements on the received PRS, the WTRU may receive the association information in an LPP message. For UL-only positioning methods, the WTRU may send SRS or SRSp such that the network may perform phase measurements on received SRS or SRSp. In such a case, if requested by the network, the WTRU may report association between WTRU Tx PEG and SRS or SRSp resources in RRC or LPP message, e.g., respectively.

### Example of Uncertainty Information Associated with SRS

In an embodiment, the WTRU may receive information from the network indicating (e.g., requesting) to any of report and associate uncertainty information related to SRS transmission. For example, the WTRU may be requested by the network to indicate uncertainty (e.g., range) in initial phase offset for the SRS resource. In another example, the WTRU may be requested by the network to send statistical information related to phase of the SRS resource (e.g., mean, standard deviation) to the network.

### Example of Antenna Information from the WTRU/Network

For example, the WTRU may receive antenna information related to TRP (such as e.g., any of TRP Tx antenna separation, size of antenna, dimensions of antenna, number of elements in an antenna array, separation between antenna elements, number of panels). The network may provide (e.g., transmit) such information to the WTRU based on a request from the WTRU. The WTRU may receive such antenna information from the network via any of LPP message, RRC, broadcast (e.g., SIB, posSIB), DCI, and MAC-CE. For example, the WTRU may send WTRU antenna information to the network based on a request from the network.

### EXAMPLES OF METHODS FOR TWO-SIDED PHASE BASED POSITIONING

In an embodiment, the network (e.g., gNB, LMF) may transmit PRS(s) from one or more transmit antennas.

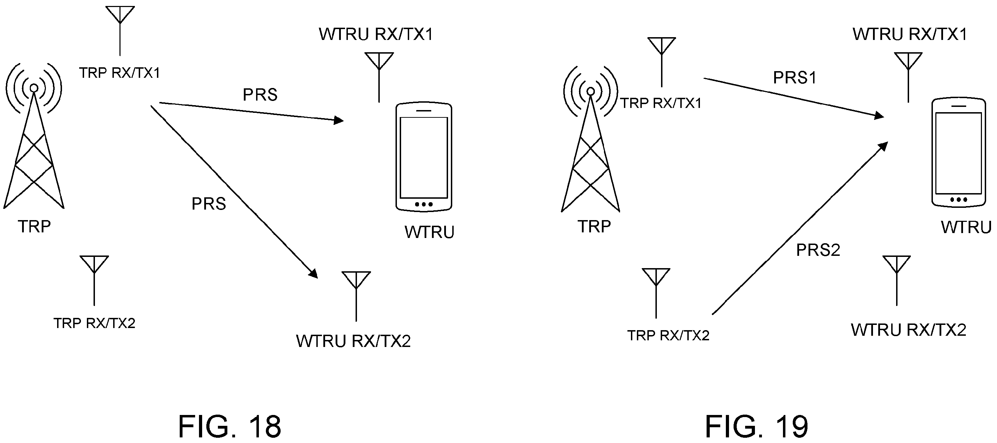

FIG. 18 is a system diagram illustrating an example of two-sided phase difference measurements, one transmission, and two reception antennas. For example, the WTRU may receive PRS with more than one Rx antenna at the WTRU.

FIG. 19 is a system diagram illustrating an example of two transmission antennas and one receive antenna. For example, the WTRU may receive PRS(s) which may be received from different antennas at the TRP. The WTRU may perform measurements on the PRS and may transmit PRS in uplink from one or more Tx antennas. The WTRU may send a measurement report to the network which may indicate phase difference measurements made on PRS received from the network.

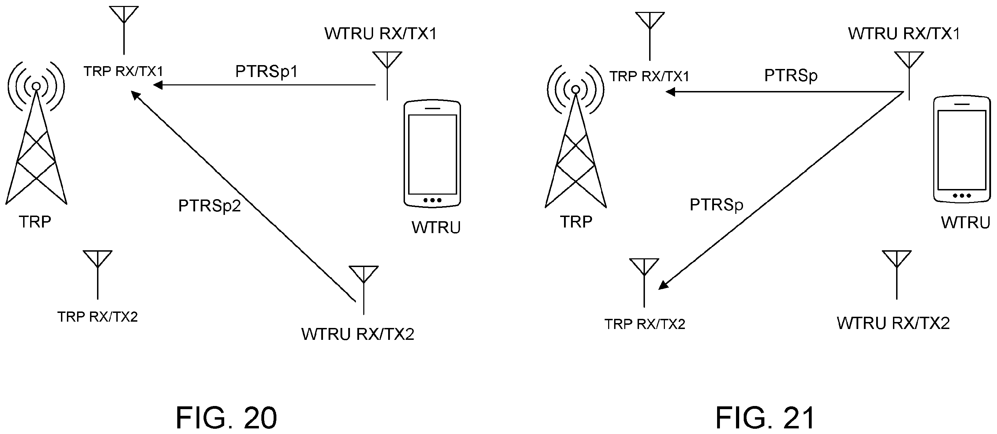

FIG. 20 is a diagram illustrating an example where the WTRU may transmit PTRSp(s) from different Tx antennas and the network may receive PTRSp(s) using the same antenna.

FIG. 21 is a diagram illustrating an example where the WTRU may transmit PTRSp from one Tx antenna and the network may receive the PTRSp using different Rx antennas.

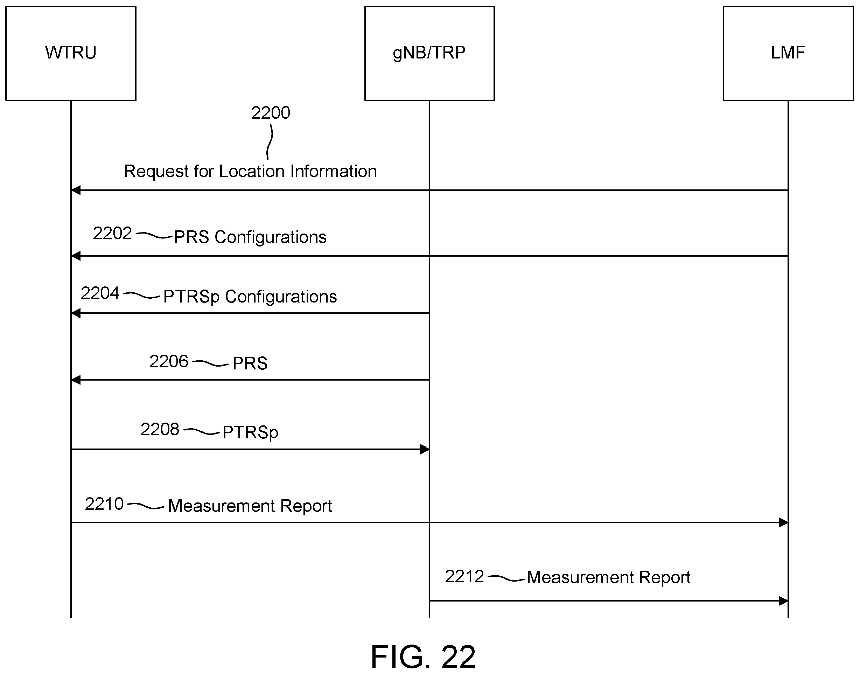

FIG. 22 is a diagram illustrating an example of signal flow. In step 2200, the WTRU may receive a request to initiate the positioning procedure. In step 2202, the WTRU may receive information indicating PRS configurations from the network (e.g., LMF). In step 2204, the WTRU may receive information indicating PTRSp configurations from the gNB. In step 2206, TRP(s) may transmit PRS to the WTRU and the WTRU may perform measurements on the PRS. In step 2208, the WTRU may transmit PTRSp to TRP(s). In step 2210, the WTRU may send the measurement report to the network (e.g., LMF) which may indicate phase difference measurements made on the received PRS(s). In step 2212, the gNB may send measurement reports which may indicate phase measurements made on the received PTRSp.

For reduction of signaling overhead, the WTRU may receive mapping information from the network where PTRSp resources may be determined based on PRS configuration. In such a case, the WTRU may not receive explicit signaling information from the network indicating a PTRSp configuration (e.g., Step 2204 in FIG. 22). The WTRU may receive information indicating, for example, any of a list of time/frequency resources, densities in time/frequency, number of PTRP(s) to transmit, and number of Tx antennas to use. For example, a (e.g., each) configuration in the list may be associated with any of a parameter and a range of parameters of PRS. For example, in a case where PRS for phase measurements occupies two subcarriers, according to the mapping rule, the WTRU may determine to transmit PTRSp which may be mapped over two subcarriers. In another example, in a case where PRS for phase measurements occupies one subcarrier, according to the mapping rule, the WTRU may determine to transmit PTRSp which may be mapped over one subcarrier. For example, the location of the subcarrier for the PTRSp be indicated in (e.g., pre) configuration information.

In another example, the WTRU may be preconfigured to use the same Tx configuration as the network. For example, the WTRU may use one Tx antenna to transmit PTRSp in a case where the TRP uses one Tx antenna to transmit PRS for phase measurements. In another example, the WTRU may use two Tx antennas to transmit PTRSp in a case where the TRP uses two Tx antennas to transmit PRS for phase measurements.

In one example, the WTRU may determine to use one or more Tx antennas based on the distance(s) from the TRP(s). For example, in a case where the distance from the TRP satisfies a condition (e.g., is less than or equal to the threshold), the WTRU may determine to use two Tx antennas. The WTRU may determine the distance from the TRP after performing WTRU-based positioning (e.g., any of WTRU-based DL-TDOA, WTRU-based DL-AoD).

In one example, the WTRU may determine PTRSp configurations based on the outcome of a DL positioning method which may not be related to phase measurements. For example, the WTRU may determine its position based on WTRU-based DL-TDOA. For example, the WTRU may determine a Tx antenna configuration based on the distance from the TRP and a PTRSp configuration based on the PRS configuration for timing/angle based methods.

The WTRU may receive information indicating to transmit PTRSp to a specific TRP. The WTRU may receive an index for the TRP. In another example, the WTRU may receive information for more than one TRP and the WTRU may receive an indication to which TRP the WTRU may transmit PTRSp.

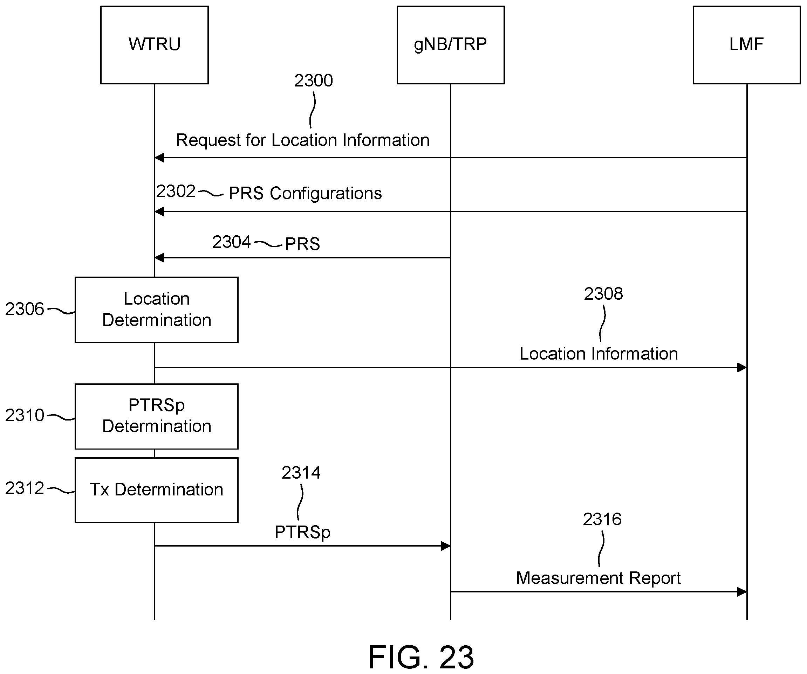

FIG. 23 is a diagram illustrating an example of signal exchange between the network and a WTRU. In step 2300, the WTRU may receive a request for location information. In step 2302, the WTRU may receive information indicating PRS configurations from the network (e.g., LMF). In step 2304, the WTRU may receive PRS(s) from TRP(s). The WTRU may perform WTRU-based positioning (e.g., DL-TDOA) and may determine its position at step 2306. The WTRU may send the location information to the network (e.g., LMF) at step 2308. Based on the PRS configuration, the WTRU may determine PTRSp configuration at step 2310. Based on the location information, the WTRU may determine a distance to the target TRP and may determine a Tx configuration at step 2312. The WTRU may transmit PTRSp to the target TRP at step 2314 and the gNB may send a measurement report, at step 2316, indicating phase difference measurements made on PTRSp, to the network (e.g., LMF).

The WTRU may use antenna information (e.g., any of TRP Tx antenna separation, size of antenna, dimensions of antenna, number of elements in an antenna array, and separation between antenna elements) for its UL transmission mode (e.g., number of Tx antennas) determination. For example, the WTRU may not use phase-based measurement in a case where Rx separation at the TRP (e.g., gNB) is not large enough, based on the WTRU location.

In another example, the WTRU may be configured with a WTRU-assisted positioning method (e.g., DL-TDOA). The WTRU may return (e.g., report) measurements to the network. For example, the WTRU may be configured with a PTRSp configuration and transmission parameters (such as, e.g., a number of antennas).

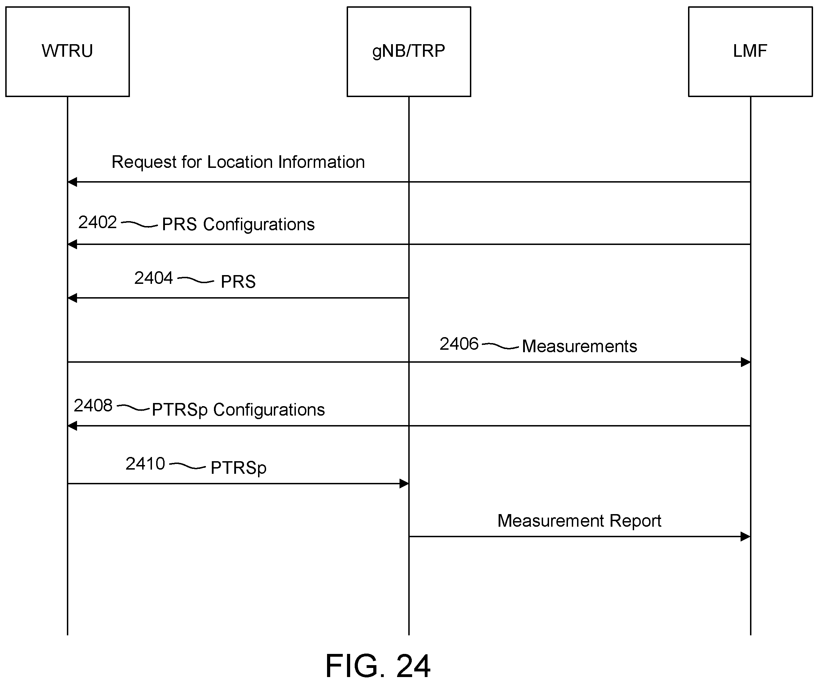

FIG. 24 is a diagram illustrating a signal flow for a WTRU-assisted two-sided phase-based positioning method. For example, the WTRU may receive information indicating PRS one or more configurations at step 2402 and may perform measurements on PRS at step 2404. The WTRU may report measurements to the network at step 2406 (e.g., LMF, gNB). Based on the location estimate from the DL-based positioning method, the WTRU may receive information indicating one or more configurations at step 2408 related to UL RS (e.g., PTRSp). For example, the WTRU may transmit configured PTRp to the network at step 2410.

In another example, based on any of a location estimate and measurements (e.g., RSRP, RSTD, AoA), the WTRU may determine to send a request to the network for configurations for PRS (e.g., time and/or frequency resources) related to phase measurements. For example, in a case where RSRP of PRS or DL-RS satisfies a first condition (e.g., is above a (e.g., preconfigured) threshold), the WTRU may determine to send a request for a phase-based positioning method or may perform phase measurements (e.g., phase difference between two PRS resources) and may report them to the network. In a case where RSRP of PRS or DL-RS satisfies a second condition (e.g., is less than or equal to a (e.g., preconfigured) threshold), the WTRU may determine to use any of a timing and an angle-based positioning method (e.g., any of DL-TDOA, DL-AoD).

In another example, based on any of phase measurements (e.g., phase difference between two PRS resources) and location estimate derived from the phase measurements, the WTRU may determine to send a request to the network for (e.g., requesting) configurations for PRS for any of DL-based timing and angle based positioning methods (e.g., any of DL-TDOA, multi-RTT, DL-AoD) or any of UL based timing and angle based positioning methods (e.g., any of UL-RTOA, UL-AoA).

### Example of a Phase Measurement and Reporting Method

In an embodiment, the WTRU may perform phase measurement and reporting. The WTRU may determine which phase-resource(s) and/or which pair(s) of phase-resources (e.g., any of RE, subcarrier, tone, etc.) to report phase measurement based on the result of other measurement (such as e.g., any of LOS/NLOS, RSRP) associated with the phase-resource. For example, the WTRU may follow one or more of the following steps for phase measurement and reporting.

In a first step, the WTRU may receive information indicating (e.g., DL-PRS) configuration phase measurement (e.g., indicating a reference signal against which phase difference may be measured) and other measurements (e.g., LOS/NLOS, RSRP, AoD, etc.) to report. The WTRU may receive information indicating one or more condition(s) to report phase measurement of a (e.g., each) phase-resource or pair of phase-resource (e.g., RSRP threshold and/or LOS/NLOS value being greater than a threshold). For example, additional assistance information may include any of reference TRP, expected phase difference, range of phase difference for WTRU-based/assisted, phase offset for WTRU-based/assisted, QCL (Doppler related), set of PRS resources for phase measurements, PRU ID for reference.

In a second step, for a (e.g., each) reported positioning measurement of any of a TRP, DL-PRS a resource, a tone, and a path, the WTRU may determine whether to additionally include the phase measurement result based on whether the reported value of other parameter(s) (e.g., LOS/NLOS, and/or RSTD) satisfies the one or more condition(s) (e.g., being greater than a threshold) and/or other conditions (such as e.g., WTRU orientation being maintained, same Rx).

In a third step, the WTRU may determine the phase-resource(s) to report phase measurements based on at least one of an indication received from the network, a RSRP. And a LOS/NLOS value.

In a fourth step, the WTRU may transmit reporting information indicating the positioning measurement report. For example, reporting information may further indicate the phase-resource(s) used for phase measurement.

In another embodiment, the WTRU may utilize on-demand DL-PRS: The WTRU may determine whether sending information indicating to request on-demand DL-PRS for carrier phase measurement and may determine which DL-PRS configuration to request based on the QoS of the positioning service (e.g., accuracy, integrity expectation, etc.) and/or the measurement result of other parameters (such as e.g., any of LOS, NLOS, RSRP, AoD, etc.). For example, the WTRU may follow one or more of the following steps for phase measurement and reporting.

In a first step, the WTRU may receive information indicating (e.g., DL-PRS) configuration for positioning measurement of (e.g., with a) first set of parameters (e.g., any of LOS/NLOS, RSRP, and/or AoD).

In a second step, the WTRU may receive information indicating one or more DL-PRS configurations (i.e., DL-PRS for configuration for carrier phase measurement) to request for carrier phase measurement and conditions to request (e.g., LOS/NLOS and/or RSRP being greater than a threshold, QoS of the positioning service satisfying a condition, etc.).

In a third step, the WTRU may perform DL-PRS measurement to determine positioning measurement of (e.g., based on) the first set of parameters.

In a fourth step, the WTRU may send information requesting the DL-PRS and indicating the preferred DL-PRS configuration (e.g., preferred RE(s)) in a case where the measurement result of the first set of parameters and/or QoS of the positioning service satisfies any of the indicated condition.

In a fifth step, the WTRU may receive information indicating the requested DL-PRS configuration.

In a sixth step, the may WTRU perform measurement and may report the measurement result of any of the first set of parameters and carrier phase measurement.

In another embodiment, the WTRU may report a phase error group (PEG). For example, the WTRU may follow one or more of the following steps for PEG reporting.

In a first step, the WTRU may receive information indicating a request from the network (e.g., gNB, LMF) to report any of Tx and Rx phase error group (e.g., for Tx, PRS within the same error group experiencing similar phase error; for Rx, the received PRS within the same error group experiencing similar phase error).

In a second step, the WTRU may send information indicating a type of error (e.g., any of a phase shift and a phase drift) and may associate PRS resources with a group ID in a case where at least one of the following conditions is satisfied. In a first example, the WTRU may associate PRS resources with a group ID in a case where the error is greater than the threshold. In a second example, the WTRU may associate PRS resources with a group ID in a case where any condition to report phase measurements is satisfied.

In a third step, in a case where a timing error group (TEG) is present, the WTRU may associate the PEG with the TEG, for example, in a case where a same set of resources experience timing and phase errors.

### Example of Two-Sided Phase Difference Measurement Method

In an embodiment, the WTRU may perform two-sided phase measurements.

In a first step, the WTRU may receive information indicating a PRS configuration (e.g., locations of TRPs) and a mapping rule for mapping between PRS, PTRSp configuration, and a number of WTRU Tx antennas from the network.

In a second step, the WTRU may be configured to perform a WTRU-based positioning method, DL-TDOA.

In a third step, the WTRU may receive information indicating one or more target TRPs from which the WTRU may receive PRS for DL-TDOA measurements.

In a fourth step, the WTRU may determine its position based on measurements performed on PRS(s) and may report its position to the network.

In a fifth step, the WTRU may determine the number of Tx antennas for PTRSp transmission based on the distance from the target TRP. In a case where the distance is less than or equal to a threshold, the WTRU may determine to use the configured number of Tx antennas (e.g., more than one). In a case where the distance is greater than the threshold, the WTRU may use one Tx antenna.

In a sixth step, the WTRU may determine a PTRSp configuration (e.g., number of subcarriers) based on the mapping rule and the number of Tx antennas.

In a seventh step, the WTRU may transmit PTRSp.

### Examples of Phase Measurement Method

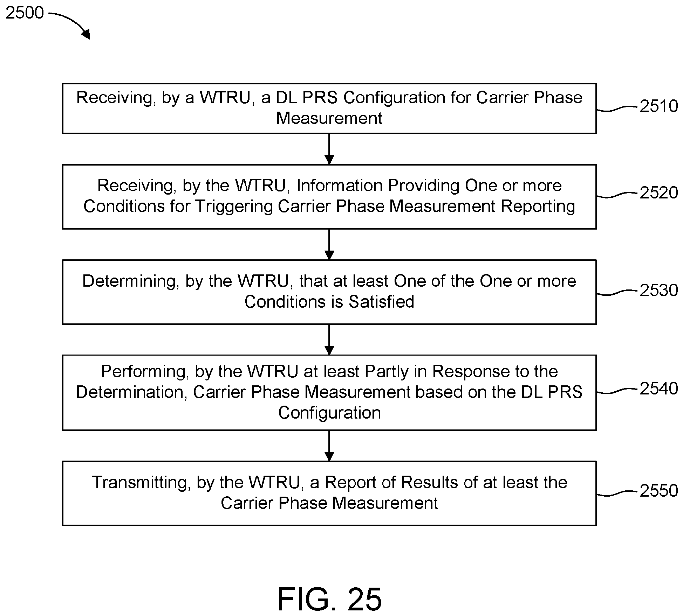

FIG. 25 is a diagram illustrating an example of method 2500 for phase measurement and reporting. For example, method 2500 may be implemented in a WTRU. In step 2510, the WTRU may receive (e.g., information indicating) a downlink (DL) positioning reference signal (PRS) configuration for carrier phase measurement. In step 2520, the WTRU may receive information providing (e.g., indicating) one or more conditions for triggering carrier phase measurement reporting. In step 2530, the WTRU may determine that at least one of the one or more conditions may be satisfied. In step 2540, the WTRU may perform at least partly in response to the determination, carrier phase measurement based on the DL PRS configuration. In step 2550, the WTRU may transmit (e.g., information indicating) a report of results of at least the carrier phase measurement.

For example, the WTRU may further determine at least one of: (i) which transmission/reception point (TRP), (ii) which DL-PRS resource(s), (iii) which tone, or (iv) which path to report carrier phase measurement based on a result of another measurement associated therewith.

For example, the WTRU may further receive (e.g., information indicating) a configuration for requesting one or more DL PRS configurations, wherein the WTRU may determine that the at least one of the one or more conditions may be satisfied based on at least one of a quality of service (QoS) of a positioning service or results of a positioning measurement. The WTRU may further transmit, in response to the determination, a request for a preferred one of the one or more DL PRS configurations, wherein the DL PRS configuration received by the WTRU may correspond to the preferred one of the one or more DL PRS configurations.

For example, the WTRU may further receive a request from a network to report a transmit/receive (Tx/Rx) phase error group. The WTRU may indicate a type of error and associated PRS resources with a group identity (ID).

For example, the WTRU may further receive assistant information for carrier phase measurement, wherein the assistant information may include at least one of: (i) a reference transmission/reception point (TRP), (ii) an expected phase difference, (iii) a range of phase difference, (iv) a phase offset, (v) a quasi-colocation (QCL), (vi) a set of PRS resources for phase measurements, or (vii) a physical uplink shared channel (PUSCH) resource unit (PRU) identity (ID) for reference. The WTRU may employ the assistant information to enhance its measurements.

For example, the WTRU may further receive (e.g., information indicating) a configuration of a phase maintenance time window; and the time window may be applied by the WTRU based on the configuration thereof, to at least one of: (i) one or more configured PRS resources, (ii) one or more PRS resource sets, (iii) one or more transmission/reception points (TRPs), or (iv) one or more frequency layers.

For example, the WTRU may further receive (e.g., information indicating) conditions to request PRS configuration for carrier phase measurement and reporting. The WTRU may further request one or more parameters for configuration for carrier phase measurement. The WTRU may further determine which message to request PRS configuration for carrier phase measurement. The WTRU may further perform multiple stage positioning or the WTRU may perform multiple positioning methods simultaneously.

For example, the WTRU may further determine a phase-resource to measure and report phase measurement. The WTRU may further determine at least one of a number of phase-resources or pairs of phase resources to measure and report carrier phase measurement. The WTRU may determine at least one of which phase-resource or which pair(s) thereof for performing phase measurement reporting, or the WTRU may determine a path for performing phase measurement reporting.

For example, the WTRU may further indicate a type of error for a phase error group (PEG) and/or the WTRU may report a PEG at the same time with a timing error group (TEG).

For example, the WTRU may further determine a number of transmit antennas based on a location of the WTRU, wherein the determining the number of transmit antennas may include (i) comparing a distance between the WTRU and a transmit receive point (TRP) to a predetermined threshold and (ii) determining the number of transmit antennas based on a result of the comparison.

For example, determining the number of transmit antennas may include determining, by the WTRU, to use two transmit antennas if the distance is less than the predetermined threshold.

For example, determining the number of transmit antennas may include determining, by the WTRU, to use one transmit antenna if the distance is greater than the predetermined threshold.

For example, the WTRU may further determine a location of a PRS for phase measurements based on the DL PRS configuration, wherein the DL-PRS configuration may correspond to at least one of a number of symbols or a comb pattern.

For example, the WTRU may further include in the report an indication that the report may contain integer ambiguity.

For example, the WTRU may be further configured with one or more requirements (e.g., conditions) for performing phase measurement reporting, and the method 2500 may further comprise determining, by the WTRU, that a number of phase measurement resources may satisfy the one or more requirements (e.g. conditions).

For example, the WTRU may further perform, in response to the determination that the number of phase measurement resources may satisfy the one or more requirements (e.g., conditions), phase measurement reporting.

For example, the WTRU may further determine, in response to the determination that the number of phase measurement resources may satisfy the one or more requirements (e.g., conditions), information to report to a network.

For example, the WTRU may further transmit to a network an indication of a preferred reporting type regarding measurement of at least one of phase of arrival, phase difference of arrival, or time of arrival. The WTRU may further receive from the network a configuration for performing the preferred reporting type.

For example, the WTRU may further determine a reference to compute a phase difference between two PRS resources. The WTRU may further indicate, in the report, one or more of the two PRS resources used for the reference.

For example, the WTRU may further determine, in presence of multipath, to report phase difference measurement per path.

For example, the WTRU may further perform phase measurement and phase measurement reporting in a set of phase resources.

For example, the WTRU may further determine reference phase resources for the phase measurement reporting.

For example, the WTRU may further determine whether to report phase measurement of a phase resource based on the reference phase resources.

For example, the WTRU may further determine whether to add one or more phase measurements in another phase measurement reporting.

For example, the report of results may include carrier phase measurement for multiple paths.

For example, the WTRU may further receive from the network (e.g., information indicating) a configuration for reporting the results, the configuration may include at least one of a (i) duration of a window for the reporting the results, (ii) a start time and an end time for reporting the results, and/or (iii) a periodicity for reporting the results.

For example, the WTRU may further receive from the network information for prioritizing the reporting of results.

For example, the prioritization information may comprise separate priority levels for reference signal time difference (RSTD) measurement results versus phase measurement results.

For example, the WTRU may further receive from the network information establishing a granularity for reporting the results, wherein the granularity may comprise a smallest unit of granularity of the measurement.

For example, the granularity may be expressed in terms of at least one of degrees, radians, and distance.

For example, the report of results may include information of a level of uncertainty of the results.

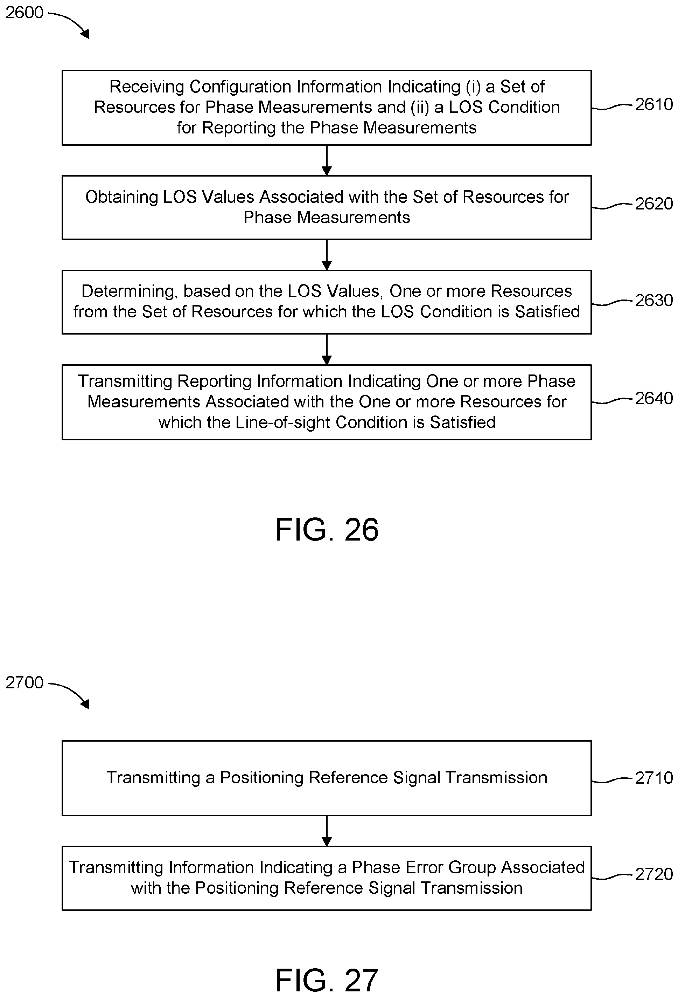

FIG. 26 is a diagram illustrating an example of method 2600 for phase measurement and reporting. For example, method 2600 may be implemented in a WTRU. In step 2610, the WTRU may receive configuration information indicating (i) a set of resources for phase measurements and (ii) a LOS condition for reporting the phase measurements. In step 2620, the WTRU may obtain one or more LOS values associated with the set of resources for phase measurements. In step 2630, the WTRU may determine based on the one or more LOS values, one or more resources from the set of resources for which the LOS condition is satisfied. In step 2640, the WTRU may transmit reporting information indicating one or more phase measurements associated with the one or more resources for which the LOS condition is satisfied.

For example, the reporting information may further indicate the one or more resources associated with the one or more phase measurements.

For example, the LOS condition may be satisfied for a first resource of the set of resources in a case where a LOS value associated with the first resource is above a first value.

For example, the configuration information may further indicate a reference signal receive power (RSRP) condition for reporting the phase measurements.

For example, the one or more resources on which to report the phase measurements may be further determined from the set of resources for which the RSRP condition may be further satisfied.

For example, the RSRP condition may be satisfied for a second resource of the set of resources in a case where a RSRP value associated with the second resource is above a second value.

For example, the phase measurements may comprise any of PoA measurements and DPoA measurements.

For example, the configuration information may further indicate a number of resources on which to report the phase measurements.

For example, the reporting information may only indicate the one or more phase measurements associated with the one or more resources for which at least the LOS condition may be satisfied.

For example, the reporting information may only indicate the one or more phase measurements associated with the one or more resources for which at least the RSRP condition may be satisfied.

For example, the WTRU may further transmit a request message indicating a request for additional resources for additional phase measurements.

For example, the request message may further indicate a requested positioning reference signal configuration.

For example, the configuration information may further indicate a first condition for requesting additional resources for additional phase measurements.

For example, the first condition may comprise any of a positioning accuracy condition, the line-of-sight condition and the RSRP condition.

For example, the WTRU may further determine a phase reference for phase difference measurements.

For example, the phase reference may be determined based on a reference used for any of reference signal time difference computation and differential power reporting.

For example, the phase reference may be further determined based on measurements satisfying any of the line-of-sight condition and the RSRP condition.

For example, the phase reference may be further determined based on any of phase error group and a phase error associated with the phase reference.

For example, the one or more resources may comprise at least two resources separated by any of a time gap and a frequency gap satisfying respectively any of a time condition and a frequency condition.

For example, the time condition may be satisfied in a case where the time gap separating the at least two resources is lower than a first time gap value and/or higher than a second time gap value.

For example, the frequency condition may be satisfied in a case where the frequency gap separating the at least two resources is lower than a first frequency gap value and/or higher than a second frequency gap value.

### Examples of PEG Reporting Method

FIG. 27 is a diagram illustrating an example of method 2700 for PEG reporting. For example, method 2700 may be implemented in a WTRU. In step 2710, the WTRU may transmit a positioning reference signal transmission. In step 2720, the WTRU may transmit information indicating a PEG associated with the positioning reference signal transmission.

For example, the information may indicate whether the PEG may be due to phase shift or to phase drift.

For example, the information may indicate a timestamp in which the PEG may have changed.

For example, the positioning reference signal transmission may be associated with a transmit phase error between a first phase of a positioning reference signal when generated at a baseband level, and a second phase of the positioning reference signal when the positioning reference signal may be transmitted from an antenna, and wherein the PEG may be associated with one or more transmissions of one or more positioning reference signals having transmit error phases within a margin.

For example, the information indicating the PEG may be periodically transmitted.

For example, the information indicating the PEG may be transmitted in a case where the phase error group is different from another phase error group associated with a previous positioning reference signal transmission.

For example, the information indicating the PEG may be transmitted in a case where a difference between the PEG and another PEG associated with a previous positioning reference signal transmission is greater than a value.

For example, the information indicating the PEG may be transmitted in a case where a condition for reporting phase measurements is satisfied.

For example, the information indicating the PEG may be transmitted (e.g., together) with reporting information indicating phase measurement reports.

For example, the information may further indicate a timing error group associated with the positioning reference signal transmission.

While not explicitly described, the present embodiments may be employed in any combination or sub-combination. For example, the present principles are not limited to the described variants, and any arrangement of variants and embodiments can be used.

Embodiments have been described herein with the example of a RSRP value associated with a phase resource to be used with a RSRP condition for determining whether to report a phase measurement associated with the phase resource. Embodiments described herein are not limited to a RSRP and are applicable to any other signal strength metric (such as e.g., RSSI, RSRQ) for determining a signal strength value associated with a phase resource, to be used with a signal strength condition for determining whether to report a phase measurement associated with the phase resource.

Any characteristic, variant or embodiment described for a method is compatible with an apparatus device comprising means for processing the disclosed method, with a device comprising a processor configured to process the disclosed method, with a computer program product comprising program code instructions and with a non-transitory computer-readable storage medium storing program instructions.

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its scope, as will be apparent to those skilled in the art. No element, act, or instruction used in the description of the present application should be construed as critical or essential to the invention unless explicitly provided as such.

The foregoing embodiments are discussed, for simplicity, with regard to the terminology and structure of infrared capable devices, i.e., infrared emitters and receivers. However, the embodiments discussed are not limited to these systems but may be applied to other systems that use other forms of electromagnetic waves or non-electromagnetic waves such as acoustic waves.

It is also to be understood that the terminology used herein is for the purpose of describing particular embodiments only, and is not intended to be limiting. As used herein, the term "video" or the term "imagery" may mean any of a snapshot, single image and/or multiple images displayed over a time basis. As another example, when referred to herein, the terms "user equipment" and its abbreviation "UE", the term "remote" and/or the terms "head mounted display" or its abbreviation "HMD" may mean or include (i) a wireless transmit and/or receive unit (WTRU); (ii) any of a number of embodiments of a WTRU; (iii) a wireless-capable and/or wired-capable (e.g., tetherable) device configured with, inter alia, some or all structures and functionality of a WTRU; (iii) a wireless-capable and/or wired-capable device configured with less than all structures and functionality of a WTRU; or (iv) the like. Details of an example WTRU, which may be representative of any WTRU recited herein, are provided herein with respect to FIGs. 1A-1D. As another example, various disclosed embodiments herein supra and infra are described as utilizing a head mounted display. Those skilled in the art will recognize that a device other than the head mounted display may be utilized and some or all of the disclosure and various disclosed embodiments can be modified accordingly without undue experimentation. Examples of such other device may include a drone or other device configured to stream information for providing the adapted reality experience.

In addition, the methods provided herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magnetooptical media, and optical media such as CD-ROM disks, and digital versatile disks (DVDs). A processor in association with software may be used to implement a radio frequency transceiver for use in a WTRU, UE, terminal, base station, RNC, MME, EPC, AMF, or any host computer.

Variations of the method, apparatus and system provided above are possible without departing from the scope of the invention. In view of the wide variety of embodiments that can be applied, it should be understood that the illustrated embodiments are examples only, and should not be taken as limiting the scope of the following claims. For instance, the embodiments provided herein include handheld devices, which may include or be utilized with any appropriate voltage source, such as a battery and the like, providing any appropriate voltage.

Moreover, in the embodiments provided above, processing platforms, computing systems, controllers, and other devices that include processors are noted. These devices may include at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory (RAM)) or non-volatile (e.g., Read-Only Memory (ROM)) mass storage system readable by the CPU. The computer readable medium may include cooperating or interconnected computer readable medium, which exist exclusively on the processing system or are distributed among multiple interconnected processing systems that may be local or remote to the processing system. It should be understood that the embodiments are not limited to the above-mentioned memories and that other platforms and memories may support the provided methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost versus efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples include one or more functions and/or operations, it will be understood by those within the art that each function and/or operation within such block diagrams, flowcharts, or examples may be implemented, individually and/or collectively, by a wide range of hardware, software, firmware, or virtually any combination thereof. In an embodiment, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein may be integrated into a data processing system via a reasonable amount of experimentation. Those having skill in the art will recognize that a typical data processing system may generally include one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity, control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components included within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermedial components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.) and/or "permissive" terms (e.g., the term "is" and/or the term "are" may be interpreted as "may" and/or "might", the terms "refer(s)" may be interpreted as "may refer" and/or "might refer", the terms "receive(s)" may be interpreted as "may receive" and/or "might receive", the terms "support(s)" may be interpreted as "may support" and/or "might support", the terms "interface(s)" may be interpreted as "may interface" and/or "might interface", the terms "transmit(s)" may be interpreted as "may interface" and/or "might interface", "may transmit" and/or "might transmit", the terms "send(s)" may be interpreted as "may send" and/or "might send", the terms "does not refer" (and/or the like) may be interpreted as "may not refer" and/or "might not refer", the terms "does not receive" (and/or the like) may be interpreted as "may not receive" and/or "might not receive", the terms "does not support" (and/or the like) may be interpreted as "may not support" and/or "might not support", the terms "does not interface" (and/or the like) may be interpreted as "may not interface" and/or "might not interface", the terms "does not transmit" (and/or the like) may be interpreted as "may not transmit" and/or "might not transmit", the terms "does not send" (and/or the like) may be interpreted as "may not send" and/or "might not send", etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may include usage of the introductory phrases "at least one" and "one or more" to introduce claim recitations. However, the use of such phrases should not be construed to imply that the introduction of a claim recitation by the indefinite articles "a" or "an" limits any particular claim including such introduced claim recitation to embodiments including only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" is intended to include any number of items, including zero. Additionally, as used herein, the term "number" is intended to include any number, including zero. And the term "multiple", as used herein, is intended to be synonymous with "a plurality".

**In** addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Moreover, the claims should not be read as limited to the provided order or elements unless stated to that effect.

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Application Specific Standard Products (ASSPs); Field Programmable Gate Arrays (FPGAs) circuits, any other type of integrated circuit (IC), and/or a state machine.

The WTRU may be used in conjunction with modules, implemented in hardware and/or software including a Software Defined Radio (SDR), and other components such as a camera, a video camera module, a videophone, a speakerphone, a vibration device, a speaker, a microphone, a television transceiver, a hands free headset, a keyboard, a Bluetooth^{®} module, a frequency modulated (FM) radio unit, a Near Field Communication (NFC) Module, a liquid crystal display (LCD) display unit, an organic light-emitting diode (OLED) display unit, a digital music player, a media player, a video game player module, an Internet browser, and/or any Wireless Local Area Network (WLAN) or Ultra Wide Band (UWB) module.

Although the various embodiments have been described in terms of communication systems, it is contemplated that the systems may be implemented in software on microprocessors/general purpose computers (not shown). In certain embodiments, one or more of the functions of the various components may be implemented in software that controls a general-purpose computer.

## Claims

1. A wireless transmit/receive unit, WTRU, (102) comprising circuitry including a processor (118), a transmitter, a receiver and a memory, configured to:
receive configuration information indicating i) a set of positioning reference signal, PRS, resources, ii) a time window to be used for phase measurement with the set of PRS resources, iii) a starting frame number of the time window, iv) a duration of the time window and v) a periodicity of the time window;
receive a first plurality of PRS in the set of PRS resources from a reference transmit and receive point, TRP;
receive a second plurality of PRS in the set of PRS resources from another TRP;
determine a phase difference measurement based on a first PRS of the first plurality of PRS and a second PRS of the second plurality of PRS, wherein the first PRS and the second PRS are received in the time window;
determine a reference signal time difference, RSTD, measurement based on the first PRS and a third PRS of the second plurality of PRS; and
transmit reporting information indicating the phase difference measurement and the RSTD measurement, whereby the phase difference measurement and the RSTD measurement are reported for the same reference TRP.

2. A method, implemented in a wireless transmit/receive unit, WTRU, wherein the method comprises:
receiving (1702) configuration information indicating i) a set of positioning reference signal, PRS, resources, ii) a time window to be used for phase measurement with the set of PRS resources, iii) a starting frame number of the time window, iv) a duration of the time window and v) a periodicity of the time window;
receiving a first plurality of PRS in the set of PRS resources from a reference transmit and receive point, TRP;
receiving a second plurality of PRS in the set of PRS resources from another TRP;
determining a phase difference measurement based on a first PRS of the first plurality of PRS and a second PRS of the second plurality of PRS, wherein the first PRS and the second PRS are received in the time window;
determining a reference signal time difference, RSTD, measurement based on the first PRS and a third PRS of the second plurality of PRS; and
transmitting (1708) reporting information indicating the phase difference measurement and the RSTD measurement, whereby the phase difference measurement and the RSTD measurement are reported for the same reference TRP.

3. The WTRU of claim 1, or the method of claim 2, wherein the phase difference measurement is indicated in degrees.

4. The WTRU of any of claims 1 and 3, or the method of any of claims 2 to 3, wherein determining the phase difference measurement comprises determining a phase difference between the first PRS received from the reference TRP and the second PRS received from the other TRP.

5. The WTRU of any of claims 1 and 3 to 4, or the method of any of claims 2 to 4, wherein the phase difference measurement is for a first path of a plurality of paths.

6. The WTRU or the method of claim 5, wherein each path of the plurality of paths introduces a delayed version of a transmitted PRS.

7. The WTRU of any of claims 1 and 3 to 6, or the method of any of claims 2 to 6, wherein the reporting information indicates the reference TRP.

8. The WTRU of any of claims 1 and 3 to 7, or the method of any of claims 2 to 7, wherein the reporting information indicates a phase difference uncertainty associated with the phase difference measurement.

9. The WTRU or the method of claim 8, wherein the phase difference uncertainty is indicated in degrees.

10. The WTRU of any of claims 1 and 3 to 9, or the method of any of claims 2 to 9, wherein the third PRS is received in the time window.

11. The WTRU of any of claims 1 and 3 to 9, or the method of any of claims 2 to 9, wherein the third PRS is received outside of the time window.

## Patentansprüche

1. Drahtlose Sende/Empfangs-Einheit, WTRU, (102), die eine Schaltungsanordnung umfasst, die einen Prozessor (118), einen Sender, einen Empfänger und einen Speicher enthält, wobei die drahtlose Sende/Empfangs-Einheit konfiguriert ist zum:
Empfangen von Konfigurationsinformationen, die Folgendes angeben: i) einen Satz von Positionsbestimmungsreferenzsignal-Betriebsmitteln, PRS-Betriebsmitteln, ii) ein Zeitfenster, das für die Phasenmessung mit dem Satz von PRS-Betriebsmitteln verwendet werden soll, iii) eine Anfangsrahmennummer des Zeitfensters, iv) eine Dauer des Zeitfensters und v) eine Periodizität des Zeitfensters;
Empfangen einer ersten Mehrzahl von PRS in dem Satz von PRS-Betriebsmitteln von einem Referenz-Sende- und -Empfangspunkt, Referenz-TRP;
Empfangen einer zweiten Mehrzahl von PRS in dem Satz von PRS-Betriebsmitteln von einem anderen TRP;
Bestimmen eines Phasendifferenzmesswerts auf der Grundlage eines ersten PRS der ersten Mehrzahl von PRS und eines zweiten PRS der zweiten Mehrzahl von PRS, wobei das erste PRS und das zweite PRS in dem Zeitfenster empfangen werden;
Bestimmen eines Referenzsignal-Zeitdifferenz-Messwerts, RSTD-Messwerts, auf der Grundlage des ersten PRS und eines dritten PRS der zweiten Mehrzahl von PRS; und Senden von Berichtsinformationen, die den Phasendifferenzmesswert und den RSTD-Messwert angeben, wobei der Phasendifferenzmesswert und der RSTD-Messwert für denselben TRP berichtet werden.

2. Verfahren, das in einer drahtlosen Sende/Empfangs-Einheit, WTRU, implementiert wird, wobei das Verfahren Folgendes umfasst:
Empfangen (1702) von Konfigurationsinformationen, die Folgendes angeben: i) einen Satz von Positionsbestimmungsreferenzsignal-Betriebsmitteln, PRS-Betriebsmitteln, ii) ein Zeitfenster, das für die Phasenmessung mit dem Satz von PRS-Betriebsmitteln verwendet werden soll, iii) eine Anfangsrahmennummer des Zeitfensters, iv) eine Dauer des Zeitfensters und v) eine Periodizität des Zeitfensters;
Empfangen einer ersten Mehrzahl von PRS in dem Satz von PRS-Betriebsmitteln von einem Referenz-Sende- und -Empfangspunkt, Referenz-TRP;
Empfangen einer zweiten Mehrzahl von PRS in dem Satz von PRS-Betriebsmitteln von einem anderen TRP;
Bestimmen eines Phasendifferenzmesswerts auf der Grundlage eines ersten PRS der ersten Mehrzahl von PRS und eines zweiten PRS der zweiten Mehrzahl von PRS, wobei das erste PRS und das zweite PRS in dem Zeitfenster empfangen werden;
Bestimmen eines Referenzsignal-Zeitdifferenz-Messwerts, RSTD-Messwerts, auf der Grundlage des ersten PRS und eines dritten PRS der zweiten Mehrzahl von PRS; und Senden (1708 ) von Berichtsinformationen, die den Phasendifferenzmesswert und den RSTD-Messwert angeben, wobei der Phasendifferenzmesswert und der RSTD-Messwert für denselben TRP berichtet werden.

3. WTRU nach Anspruch 1 oder Verfahren nach Anspruch 2, wobei der Phasendifferenzmesswert in Grad angegeben wird.

4. WTRU nach einem der Ansprüche 1 und 3 oder Verfahren nach einem der Ansprüche 2 bis 3, wobei das Bestimmen des Phasendifferenzmesswerts das Bestimmen einer Phasendifferenz zwischen dem ersten PRS, das von dem Referenz-TRP empfangen wird, und dem zweiten PRS, das von dem anderen TRP empfangen wird, umfasst.

5. WTRU nach einem der Ansprüche 1 und 3 bis 4 oder Verfahren nach einem der Ansprüche 2 bis 4, wobei der Phasendifferenzmesswert für einen ersten Weg einer Mehrzahl von Wegen ist.

6. WTRU oder Verfahren nach Anspruch 5, wobei jeder Weg der Mehrzahl von Wegen eine verzögerte Version eines gesendeten PRS einführt.

7. WTRU nach einem der Ansprüche 1 und 3 bis 6 oder Verfahren nach einem der Ansprüche 2 bis 6, wobei die Berichtsinformationen den Referenz-TRP angeben.

8. WTRU nach einem der Ansprüche 1 und 3 bis 7 oder Verfahren nach einem der Ansprüche 2 bis 7, wobei die Berichtsinformationen eine dem Phasendifferenzmesswert zugeordnete Phasendifferenzunsicherheit angeben.

9. WTRU oder Verfahren nach Anspruch 8, wobei die Phasendifferenzunsicherheit in Grad angegeben wird.

10. WTRU nach einem der Ansprüche 1 und 3 bis 9 oder Verfahren nach einem der Ansprüche 2 bis 9, wobei das dritte PRS in dem Zeitfenster empfangen wird.

11. WTRU nach einem der Ansprüche 1 und 3 bis 9 oder Verfahren nach einem der Ansprüche 2 bis 9, wobei das dritte PRS außerhalb des Zeitfensters empfangen wird.

## Revendications

1. Unité d'émission/de réception sans fil, WTRU, (102) comprenant des circuits incluant un processeur (118), un émetteur, un récepteur et une mémoire, configurés pour :
recevoir des informations de configuration indiquant i) un ensemble de ressources de signal de référence de positionnement, PRS, ii) une fenêtre temporelle à utiliser pour la mesure de phase avec l'ensemble de ressources PRS, iii) un numéro de trame de départ de la fenêtre temporelle, iv) une durée de la fenêtre temporelle et v) une périodicité de la fenêtre temporelle ;
recevoir une première pluralité de PRS de l'ensemble de ressources PRS en provenance d'un point d'émission et de réception, TRP, de référence ;
recevoir une deuxième pluralité de PRS de l'ensemble de ressources PRS en provenance d'un autre TRP ;
déterminer une mesure de différence de phase sur la base d'un premier PRS de la première pluralité de PRS et d'un deuxième PRS de la deuxième pluralité de PRS, où le premier PRS et le deuxième PRS sont reçus dans la fenêtre temporelle ;
déterminer une mesure de différence de temps de signal de référence, RSTD, sur la base du premier PRS et d'un troisième PRS de la deuxième pluralité de PRS ; et
transmettre des informations de rapport indiquant la mesure de différence de phase et la mesure RSTD, où la mesure de différence de phase et la mesure RSTD sont rapportées pour le même TRP de référence.

2. Procédé mis en œuvre dans une unité d'émission/de réception sans fil, WTRU, dans lequel le procédé comprend :
la réception (1702) d'informations de configuration indiquant i) un ensemble de ressources de signal de référence de positionnement, PRS, ii) une fenêtre temporelle à utiliser pour la mesure de phase avec l'ensemble de ressources PRS, iii) un numéro de trame de départ de la fenêtre temporelle, iv) une durée de la fenêtre temporelle et v) une périodicité de la fenêtre temporelle ;
la réception d'une première pluralité de PRS de l'ensemble de ressources PRS en provenance d'un point d'émission et de réception, TRP, de référence ;
la réception d'une deuxième pluralité de PRS de l'ensemble de ressources PRS en provenance d'un autre TRP ;
la détermination d'une mesure de différence de phase sur la base d'un premier PRS de la première pluralité de PRS et d'un deuxième PRS de la deuxième pluralité de PRS, où le premier PRS et le deuxième PRS sont reçus dans la fenêtre temporelle ;
la détermination d'une mesure de différence de temps de signal de référence, RSTD, sur la base du premier PRS et d'un troisième PRS de la deuxième pluralité de PRS ; et
la transmission (1708) d'informations de rapport indiquant la mesure de différence de phase et la mesure RSTD, où la mesure de différence de phase et la mesure RSTD sont rapportées pour le même TRP de référence.

3. WTRU selon la revendication 1, ou procédé selon la revendication 2, dans lequel la mesure de différence de phase est exprimée en degrés.

4. WTRU selon l'une quelconque des revendications 1 et 3, ou procédé selon l'une quelconque des revendications 2 à 3, dans lequel la détermination de la mesure de différence de phase comprend la détermination d'une différence de phase entre le premier PRS reçu du TRP de référence et le deuxième PRS reçu de l'autre TRP.

5. WTRU selon l'une quelconque des revendications 1 et 3 à 4, ou procédé selon l'une quelconque des revendications 2 à 4, dans lequel la mesure de différence de phase se rapporte à un premier trajet d'une pluralité de trajets.

6. WTRU ou procédé selon la revendication 5, dans lequel chaque trajet de la pluralité de trajets introduit une version retardée d'un PRS transmis.

7. WTRU selon l'une quelconque des revendications 1 et 3 à 6, ou procédé selon l'une quelconque des revendications 2 à 6, dans lequel les informations de rapport indiquent le TRP de référence.

8. WTRU selon l'une quelconque des revendications 1 et 3 à 7, ou procédé selon l'une quelconque des revendications 2 à 7, dans lequel les informations de rapport indiquent une incertitude de différence de phase associée à la mesure de différence de phase.

9. WTRU ou procédé selon la revendication 8, dans lequel l'incertitude de différence de phase est exprimée en degrés.

10. WTRU selon l'une quelconque des revendications 1 et 3 à 9, ou procédé selon l'une quelconque des revendications 2 à 9, dans lequel le troisième PRS est reçu dans la fenêtre temporelle.

11. WTRU selon l'une quelconque des revendications 1 et 3 à 9, ou procédé selon l'une quelconque des revendications 2 à 9, dans lequel le troisième PRS est reçu en dehors de la fenêtre temporelle.
